(19) Europäisches Patentamt
European Patent Office
Office européen des brevets

(11) Veröffentlichungsnummer: **0 039 306**
**B1**

(12) # EUROPÄISCHE PATENTSCHRIFT

(45) Veröffentlichungstag der Patentschrift: **11.01.84**

(51) Int. Cl.³: **C 09 B 29/01,** C 09 B 62/008 // D06P1/06, D06P1/38

(21) Anmeldenummer: **81810113.1**

(22) Anmeldetag: **23.03.81**

(54) **Neue Azofarbstoffe, Verfahren zu deren Herstellung und deren Verwendung.**

(30) Priorität: **28.03.80 CH 2492/80**

(43) Veröffentlichungstag der Anmeldung: **04.11.81 Patentblatt 81/44**

(45) Bekanntmachung des Hinweises auf die Patenterteilung: **11.01.84 Patentblatt 84/2**

(84) Benannte Vertragsstaaten: **CH DE FR GB LI**

(56) Entgegenhaltungen:
**EP - A - 0 013 505**
**FR - A - 795 734**
**GB - A - 2 021 619**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Patentabteilung Postfach, CH-4002 Basel (CH)**

(72) Erfinder: **Hurter, Rudolf, Laufenburgerstrasse 10/3, CH-4058 Basel (CH)**
Erfinder: **Mäusezahl, Dieter, Dr., Langgartenstrasse 19, CH-4105 Biel-Benken (CH)**

**EP 0 039 306 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Neue Azofarbstoffe, Verfahren zu deren Herstellung und deren Verwendung

Gegenstand der Erfindung sind Azofarbstoffe der Formel

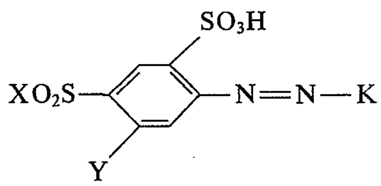

(1)

worin X ein Aryloxyrest oder ein gegebenenfalls substituierter $C_1$—$C_{12}$-Alkylrest, ein Cycloalkylrest oder ein Arylrest ist oder eine Gruppe der Formel

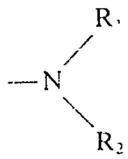

wobei $R_1$ Wasserstoff, niederes, gegebenenfalls substituiertes Alkyl, Cycloalkyl, oder Aryl und $R_2$ Wasserstoff oder niederes, gegebenenfalls substituiertes Alkyl ist, oder worin $R_1$ und $R_2$ zusammen mit dem sie verbindenden Stickstoffatom, gegebenenfalls unter Einschluß eines weiteren Heteroatoms einen nicht-aromatischen 5- oder 6-Ring bilden, Y Halogen, niedrigmolekulares Alkyl oder niedrigmolekulares Alkoxy ist, und worin K den Rest einer Kupplungskomponente der Benzol- oder Naphthalinreihe oder der heterocyclischen Reihe bedeutet.

Der Rest X in der Bedeutung eines Aryloxyrestes ist vor allem ein Phenoxy- oder Naphthoxyrest oder ein gegebenenfalls mit niedrigmolekularem Alkyl oder Alkoxy, insbesondere Methyl oder Methoxy, oder mit Halogen substituierter Phenoxy- oder Naphthoxyrest.

Der Ausdruck »niedrigmolekular« oder »nieder« bezeichnet hierin stets Reste mit 1 bis 4 C-Atomen.

X in der Bedeutung eines gegebenenfalls substituierten Alkylrestes kann ein gegebenenfalls mit Halogenatomen, besonders Chlor, Hydroxy, Sulfato, nieder-Alkoxy oder Arylgruppen, vor allem der Phenylgruppe, substituierter niederer Alkylrest, wie z. B. die Methyl-, Chlormethyl-, Äthyl-, β-Hydroxyäthyl, β-Sulfatoäthyl, β-Äthoxyäthyl oder Benzylgruppe sein. Als ein Cycloalkyl- oder ein Arylrest ist X insbesondere die Cyclohexyl- oder Phenylgruppe, oder dann eine mit Halogenatomen, wie Chlor oder Brom, Nitro, Methyl oder Methoxy substituierte Phenylgruppe.

Bevorzugt ist X in der Bedeutung eines gegebenenfalls substituierten Alkylrestes ein niederer Alkylrest, der durch Hydroxy oder Phenyl substituiert sein kann.

Bedeutet X die

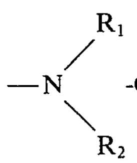

-Gruppe

so ist $R_2$ vorteilhaft Wasserstoff oder ein gegebenenfalls substituierter niederer Alkylrest und $R_1$ vorteilhaft Wasserstoff, oder ein gegebenenfalls substituierter niederer Alkyl-, Cycloalkyl- oder Arylrest, oder $R_1$ und $R_2$ bilden zusammen mit dem sie verbindenden Stickstoffatom, gegebenenfalls unter Einschluß eines weiteren Heteroatoms, einen nichtaromatischen 5- oder 6-gliedrigen Heteroring.

Bedeuten $R_1$ und $R_2$ einen gegebenenfalls substituierten niederen Alkylrest, so handelt es sich um gerad- oder verzweigtkettige Alkylgruppen, die Substituenten, besonders die Hydroxyl-, Sulfo-, Sulfato-, Cyan-, niedere Alkoxy- oder Arylgruppe, wie die Phenylgruppe oder Halogenatome, wie Chlor oder Brom, enthalten können, wie z. B. die Methyl-, Äthyl-, iso-Propyl-, tert.-Butyl-, β-Hydroxyäthyl-, β- oder γ-Hydroxypropyl-, β-Cyanäthyl, β-Methoxyäthyl-, β-Äthoxyäthyl-, Benzyl-, Phenäthyl-, Chlormethyl-, β-Chloräthyl- oder β-Bromäthylgruppe.

Bedeutet $R_1$ einen Cycloalkylrest, so kommen beispielsweise Cycloalkylgruppen mit vorzugsweise 5- oder 6-gliedrigen Ringen, besonders die Cyclohexylgruppe, in Betracht.

Bedeutet $R_1$ einen Arylrest, so gehört dieser vorzugsweise der Benzolreihe an, er kann die in Azofarbstoffen üblichen Ringsubstituenten enthalten. Als solche Substituenten, im speziellen am Phenylrest, seien beispielsweise Sulfo, Halogen, wie Fluor, Chlor oder Brom, niedere Alkylgruppen, wie Methyl, niedere Alkoxygruppen, wie Methoxy, oder Carboxy genannt.

Bilden $R_1$ und $R_2$ zusammen mit dem sie verbindenden Stickstoffatom gegebenenfalls unter Einschluß eines weiteren Heteroatoms den Rest eines nichtaromatischen 5- oder 6-gliedrigen Heterorings,

so handelt es sich hierbei besonders um die Pyrrolidino-, Piperidino- oder Morpholinogruppe.

Vorzugsweise bedeutet $R_2$ Wasserstoff oder niederes Alkyl und $R_1$ Wasserstoff, niederes Alkyl, Cyclohexyl oder Phenyl, das durch Halogen oder Carboxy substituiert sein kann, oder $R_1$ und $R_2$ bedeuten zusammen mit dem sie verbindenden Stickstoffatom einen Morpholinrest.

Als Substituent Y kommt insbesondere Fluor, Chlor, Brom, Methyl und Methoxy in Betracht; vorzugsweise ist Y Chlor.

Als Kupplungskomponente K kommt insbesondere der Rest eines Mono- oder Diaminobenzols, Mono- oder Dialkoxybenzols, Aminonaphthalins, Naphthols, Aminonaphthols, Pyrazolons, Aminopyrazols, Pyridons, Indols oder Pyrimidins in Betracht. Die Aminogruppe der Aminonaphthole kann auch acyliert oder alkyliert oder aryliert sein. Vorzugsweise ist K z. B. der Rest eines N-Mono- oder N,N-Dialkylaminobenzols, dessen Alkylgruppen gegebenenfalls substituiert sind, und der im Benzolring weitersubstituiert sein kann, z. B. durch Methyl, Methoxy, Äthoxy, Methylamino, Äthylamino, Acetylamino, Benzoylamino und Halogen.

Bevorzugt sind Azofarbstoffe der Formel (1), worin K der Rest eines N-Mono- oder N,N-Di-$C_{1-4}$-Alkylanilins ist, dessen $C_{1-4}$-Alkylgruppen durch Chlor, Cyano, Hydroxy, Phenyl, Sulfophenyl, Phenoxy, Anilino, Acetyloxy oder Sulfo substituiert sein können und der im Benzolkern durch Methyl, Benzoylamino, Acetylamino und Chlor substituiert sein kann, oder worin K der Rest eines Aminonaphthalins, 1-Äthyl-6-hydroxy-4-methyl-pyridons-(2), 2-Methylindols, 1-Phenyl-3-methyl-pyrazol-5-ons, Methoxybenzols, 1-Phenyl-3-methyl-aminopyrazols, 2,4,6-Triaminopyrimidins oder eines 3-Methyl-oder Methoxyanilins ist, X ein Phenoxyrest, der durch Chlor, Methyl oder Methoxy substituiert sein kann, ein Naphthoxyrest, ein Methyl- oder Äthylrest, der durch Hydroxy oder Phenyl substituiert sein kann, oder eine Gruppe der Formel

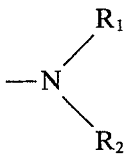

ist, worin $R_2$ Wasserstoff oder $C_{1-4}$-Alkyl und $R_1$ Wasserstoff, $C_{1-4}$-Alkyl, Cyclohexyl oder Phenyl, das durch Chlor oder Carboxy substituiert sein kann, ist, oder worin $R_1$ und $R_2$ zusammen mit dem sie verbindenden Stickstoffatom ein Morpholinrest ist, und Y Fluor, Chlor, Brom, Methyl oder Methoxy ist.

Besonders bevorzugt sind die Azofarbstoffe der Formel (1), worin K der Rest eines N,N-Diäthylanilins ist, das im Benzolkern durch Methyl oder Acetylamino substituiert ist, X $-NH_2$, ein Dimethylamino- oder Phenoxyrest und Y Chlor ist.

Aus der Reihe dieser bevorzugten Azofarbstoffe sind besonders diejenigen der Formeln

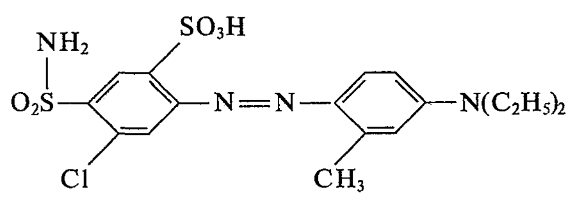

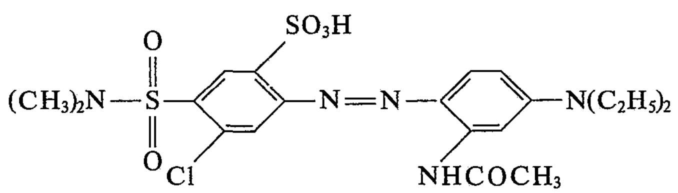

und

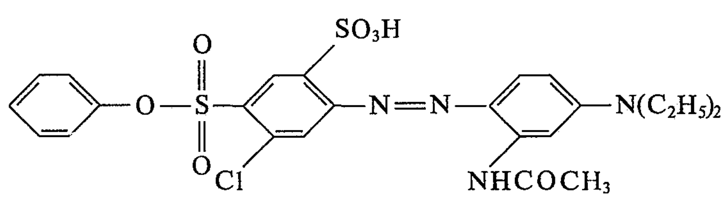

hervorzuheben.

Die Azofarbstoffe der Formel (1) können in der Kupplungskomponente einen faserreaktiven Rest enthalten; insbesondere ist K ein Rest der Benzol- oder Naphthalinreihe, der einen faserreaktiven Rest enthält.

Als faserreaktiv werden solche Acylreste bezeichnet, die eine oder mehrere reaktive Gruppen oder abspaltbare Substituenten im Molekül aufweisen, welche z. B. mit Cellulosematerialien in Gegenwart säurebindender Mittel und gegebenenfalls unter Einwirkung von Wärme mit den Hydroxylgruppen der Cellulose oder mit synthetischen oder natürlichen Polyamidfasern, wie Wolle, mit den Aminogruppen dieser Fasern unter Ausbildung kovalenter Bindungen zu reagieren vermögen. Derartige faserreaktive Gruppierungen sind aus der Literatur in großer Zahl bekannt.

Von den faserreaktiven Azofarbstoffen der Formel (1) sind besonders solche bevorzugt, worin X ein Phenoxy- oder Naphthoxyrest, der durch Halogen, $C_{1-4}$-Alkoxy oder $C_{1-4}$-Alkyl substituiert sein kann, ein $C_{1-4}$-Alkylrest, der durch Hydroxy oder Phenyl substituiert sein kann, oder eine Gruppe der Formel

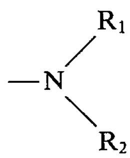

ist, worin $R_1$ Wasserstoff, $C_{1-4}$-Alkyl, Cyclohexyl oder Phenyl, das durch Halogen oder Carboxy substituiert sein kann und $R_2$ Wasserstoff oder $C_{1-4}$-Alkyl ist, oder worin $R_1$ und $R_2$ zusammen mit dem sie verbindenden Stickstoffatom ein Morpholinrest ist, Y Fluor, Chlor, Brom, Methyl oder Methoxy ist und K der Rest eines N,N-Di-$C_{1-4}$-Alkylanilins ist, dessen Alkylgruppen durch Cyano substituiert sein können und der im Benzolkern durch Methyl substituiert sein kann und worin der faserreaktive Rest über eine

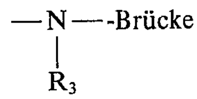

worin $R_3$ Wasserstoff oder $C_{1-4}$-Alkyl ist an den aromatischen Kern oder an ein C-Atom der N,N-Di-$C_{1-4}$-alkylgruppe gebunden ist, oder worin der faserreaktive Rest über ein Sauerstoffatom an ein C-Atom der N,N-Di-$C_{1-4}$-alkylgruppe gebunden ist, oder worin K der Rest einer Kupplungskomponente der Formel

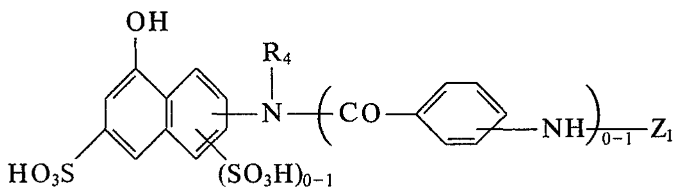

ist, worin $R_4$ Wasserstoff oder $C_{1-4}$-Alkyl und $Z_1$ ein faserreaktiver Rest ist.

Die besonders bevorzugten oben beschriebenen Azofarbstoffe enthalten als faserreaktiven Rest eine $\alpha,\beta$-Dibrompropionyl-, 2,6-Difluor-5-Chlorpyrimidyl-, 2-Chlor- oder 2-Fluor-4-$C_{1-4}$-Alkoxy- oder -$C_{1-2}$-Alkoxy-$C_{1-2}$-alkoxy-1,3,5-triazinyl-Gruppe oder eine 2-Chlor-4-phenylamino- oder N-$C_{1-4}$-Alkyl-phenylamino-1,3,5-triazinyl-Gruppe. Vorzugsweise ist X Phenoxy, $-NH_2$ oder Dimethylamino und Y Fluor, Chlor oder Methyl.

Die neuen Farbstoffe werden hergestellt, indem man eine Diazokomponente der Formel

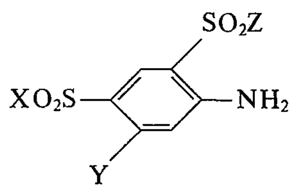 (2)

worin Z $-NH_2$ oder $-OH$ ist, diazotiert und auf eine Kupplungskomponente der Formel

$$H—K \tag{3}$$

kuppelt, und gegebenenfalls einen faserreaktiven Rest einführt. Die Kupplung wird nach an sich bekannten Methoden durchgeführt. Gegebenenfalls können nach der Kupplung noch weitere Umsetzungen folgen; z. B. kann nach der Kupplung eine gegebenenfalls im Rest K vorhandene freie Aminogruppe diazotiert werden, und durch Kuppeln der so erhaltenen Diazokomponente mit einer beliebigen Kupplungskomponente H—K' kann ein Disazofarbstoff erhalten werden. Behandelt man eine freie Aminogruppe im Rest K, vor oder nach der Kupplung, mit einem Dicarbonsäurechlorid, z. B. Phosgen, so erhält man symmetrische Disazofarbstoffe. Ferner kann eine freie Aminogruppe im Rest K nach der Kupplung mit einem Acylierungs- oder Alkylierungsmittel in eine Acylamino- oder Alkylaminogruppe

umgewandelt werden, und ebenso kann eine Hydroxygruppe im Rest K durch Alkylierung in eine Alkoxygruppe übergeführt werden.

Wenn in der Diazokomponente der Substituent X eine $NH_2$-Gruppe bedeutet, kann diese im Anschluß an die Kupplung mit einem Alkylierungsmittel umgesetzt werden.

Der Rest K ist insbesondere der Rest eines Mono- oder Diaminobenzols, Mono- oder Dialkoxybenzols, Aminonaphthalins, Naphthols, Aminonaphthols, Pyrazolons, Aminopyrazols, Pyridons, Indols oder Pyrimidins. Die Aminogruppe der Aminonaphthole kann auch acyliert oder alkyliert oder aryliert sein. Vorzugsweise geht man von Kupplungskomponenten aus, worin K der Rest eines N-Mono- oder N,N-Dialkylaminobenzols ist, dessen Alkylgruppen gegebenenfalls substituiert sind, und der im Benzolring weitersubstituiert sein kann, z. B. durch Methyl, Methoxy, Äthoxy, Methylamino, Äthylamino, Benzoylamino, Halogen oder Acetylamino, oder worin K der Rest einer Aminonaphtholsulfonsäure, auf die gegebenenfalls zweimal gekuppelt werden kann, eines Aminonaphthalins, eines Pyridons, Pyrimidins, Indols, Aminopyrazols oder eines 1-Aryl-3-methyl-pyrazol-5-ons ist. Derartige Kupplungskomponenten sind z. B. in der CH-PS 564 121 aufgeführt.

Diese Reste K können die in Azofarbstoffen üblichen Substituenten wie z. B. $C_1$—$C_4$-Alkyl, $C_1$—$C_4$-Alkoxy, $SO_3H$, OH, $NH_2$, niederes Alkylamino oder Dialkylamino, Acylamino, wie z. B. $C_1$—$C_4$-Alkanoylamino oder $C_1$—$C_4$-Alkoxycarbonylamino oder Benzoylamino, Halogen oder einen faserreaktiven Rest enthalten.

Die bevorzugten Azofarbstoffe der Formel (1) werden hergestellt, indem man eine Diazokomponente der Formel (2), worin X ein Phenoxy- oder Naphthoxyrest ist, der durch Halogen, $C_{1-4}$-Alkoxy oder $C_{1-4}$-Alkyl substituiert sein kann, insbesondere kann der Phenoxyrest durch Chlor, Methyl oder Methoxy substituiert sein und der Naphthoxyrest ist unsubstituiert, oder worin X ein $C_{1-4}$-Alkylrest ist, der durch Hydroxy oder Phenyl substituiert sein kann, insbesondere ist X dabei ein Methyl oder Äthylrest, oder worin X eine Gruppe der Formel

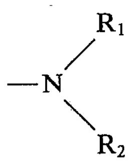

ist, worin $R_2$ Wasserstoff oder $C_{1-4}$-Alkyl und $R_1$ Wasserstoff, $C_{1-4}$-Alkyl, Cyclohexyl oder Phenyl ist, das durch Halogen, insbesondere Chlor, oder Carboxy substituiert sein kann, oder worin $R_1$ und $R_2$ zusammen mit dem sie verbindenden Stickstoffatom ein Morpholinrest ist und Y Fluor, Chlor, Brom, Methyl oder Methoxy ist, diazotiert und auf eine Kupplungskomponente der Formel (3) kuppelt, worin K der Rest eines N-Mono- oder N,N-Di-$C_{1-4}$-Alkylanilins ist, dessen $C_{1-4}$-Alkylgruppen durch Chlor, Cyano, Hydroxy, Phenyl, Sulfophenyl, Phenoxy, Anilino, Acetyloxy oder Sulfo substituiert sein können und der im Benzolkern durch Methyl, Benzoylamino, Acetylamino und Chlor substituiert sein kann, oder worin K der Rest eines Aminonaphthalins, 1-Äthyl-6-hydroxy-4-methyl-pyridons-(2), 2-Methylindols, 1-Phenyl-3-methyl-pyrazol-5-ons, Methoxybenzols, 1-Phenyl-3-methyl-aminopyrazols, 2,4,6-Triaminopyrimidins oder eines 3-Methyl- oder Methoxyanilins ist.

Vorzugsweise verwendet man Diazokomponenten der Formel (2), worin X—$NH_2$, ein Dimethylamino- oder Phenoxyrest und Y Chlor ist und kuppelt nach Diazotierung auf 3-Methyl- oder 3-Acetylamino-N,N-diäthylanilin.

Besonders wertvolle Azofarbstoffe werden erhalten, indem man 5-Chloranilin-2,4-disulfamid diazotiert und auf N,N-Diäthyl-m-toluidin kuppelt, oder indem man 5-Chloranilin-4-dimethylsulfonamid-2-sulfonsäure diazotiert und auf 3-Diäthylamino-acetanilid kuppelt, oder indem man 5-Chlor-4-phenoxysulfonylanilin-2-sulfonsäure diazotiert und auf 3-Diäthylamino-acetanilid kuppelt.

Sofern die Kupplungskomponente eine acylierbare Amino- oder Hydroxygruppe oder eine in eine solche überführbare Gruppe enthält, kann diese vor oder nach der Kupplung mit einem Acylierungsmittel, vorzugsweise einem solchen, das faserreaktive Acylgruppen abgibt, umgesetzt werden.

Geeignete Faserreaktivgruppen sind z. B. solche der aliphatischen Reihe, wie Acryloyl, Mono-, Di- oder Trichlor- bzw. Mono-, Di- oder Tribromacryloyl oder -methacryloyl, wie —CO—CH=CH—Cl, —CO—CCl=$CH_2$, —CO—CH=CHBr, —COCBr=$CH_2$, —CO—CBr=CHBr, —CO—CCl=CH—$CH_3$, ferner —CO—CCl=CH—COOH, —CO—CH=CCl—COOH, 4-Chlorpropionyl, 3-Phenylsulfonylpropionyl, 3-Methylsulfonylpropionyl, $\beta$-Sulfatoäthylaminosulfonyl, Vinylsulfonyl, $\beta$-Chloräthylsulfonyl, $\beta$-Sulfatoäthylsulfonyl, $\beta$-Methylsulfonyläthylsulfonyl, $\beta$-Phenylsulfonyläthylsulfonyl, 2-Fluor-2-chlor-3,3-difluorcyclobutan-1-carbonyl, 2,2,3,3-Tetrafluorcyclobutan-carbonyl-1 oder -sulfonyl-1, $\beta$-(2,2,3,3-Tetrafluorcyclobutyl-1)-acryloyl, $\alpha$- oder $\beta$-Alkyl- oder -Arylsulfonyl-acryloyl, wie $\alpha$- oder $\beta$-Methylsulfonylacryloyl.

Besonders für synthetisches Polyamid und für Wolle geeignete Reaktivreste sind: Chloracetyl, Bromacetyl, $\alpha,\beta$-Dichlor- oder $\alpha,\beta$-Dibrompropionyl, $\alpha$-Chlor- oder $\alpha$-Bromacryloyl, 2,4-Difluor-5-chlorpyrimid-yl-6, 2,4,6-Trifluoropyrimidyl-5, 2,4-Dichlor-5-methylsulfonylpyrimidyl-6, 2,4-Difluor-5-methyl-sulfonylpyrimidyl-6, 2,4-Difluorotriazinyl-6, sowie Fluortriazinylreste der Formel

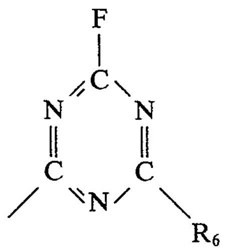

worin $R_6$ eine gegebenenfalls substituierte Aminogruppe oder eine gegebenenfalls verätherte Oxy- oder Thiogruppe bedeutet, wie z. B. die $NH_2$-Gruppe, eine mit $C_1$—$C_4$-Alkylresten mono- oder disubstituierte Aminogruppe, eine $C_1$—$C_4$-Alkoxygruppe, eine $C_1$—$C_4$-Alkylmercaptogruppe, Arylamino, insbesondere Phenylamino, oder mit Methyl, Methoxy, Chlor und vor allem Sulfo substituiertes Phenylamino, Phenoxy, Mono- oder Disulfophenyloxy etc., sowie die entsprechenden Chlortriazinylreste.

Ausgangsprodukte zur Einführung solcher Triazinreste sind z. B. 2,4-Difluor- oder 2,4-Dichlor-6-aminotriazin, 2,4-Difluor- oder 2,4-Dichlor-6-methylaminotriazin, 2,4-Difluor- oder 2,4-Dichlor-6-äthylaminotriazin, 2,4-Difluor- oder 2,4-Dichlor-6-phenylaminotriazin, 2,4-Difluor- oder 2,4-Dichlor-6-(2',3'- oder 4'-sulfophenyl)-aminotriazin, 2,4-Difluor- oder 2,4-Dichlor-6-(2',4'- oder 3',4'- oder 2',5'- oder 4',5'-disulfophenyl)-aminotriazin, 2,4-Difluor- oder 2,4-Dichlor-6-dimethylaminotriazin, 2,4-Difluor- oder 2,4-Dichlor-6-methoxytriazin, 2,4-Difluor- oder 2,4-Dichlor-6-(β-methoxyäthoxy)-triazin, 2,4-Difluor- oder 2,4-Dichlor-6-methylmercaptotriazin und 2,4-Difluor- oder 2,4-Dichlor-6-phenylmercaptotriazin.

Die Azofarbstoffe der Formel (1), die einen faserreaktiven Rest enthalten, werden hergestellt, indem man eine Diazokomponente der Formel (2), eine Kupplungskomponente der Formel (3), die eine acylierbare Amino- oder Hydroxygruppe enthält, und ein Acylierungsmittel, das einen faserreaktiven Rest enthält, in beliebiger Reihenfolge miteinander umsetzt.

Vorzugsweise werden als Kupplungskomponenten, die eine acylierbare Gruppe enthalten, solche der Benzol- oder Naphthalinreihe verwendet.

Vorzugsweise werden Diazokomponenten der Formel (2) verwendet, worin X ein Phenoxy- oder Naphthoxyrest, der durch Halogen, $C_{1-4}$-Alkoxy oder $C_{1-4}$-Alkyl substituiert sein kann, ein $C_{1-4}$-Alkylrest, der durch Hydroxy oder Phenyl substituiert sein kann, oder eine Gruppe der Formel

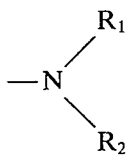

ist, worin $R_1$ Wasserstoff, $C_{1-4}$-Alkyl, Cyclohexyl oder Phenyl, das durch Halogen oder Carboxy substituiert sein kann und $R_2$ Wasserstoff oder $C_{1-4}$-Alkyl ist, oder worin $R_1$ und $R_2$ zusammen mit dem sie verbindenden Stickstoffatom ein Morpholinrest ist, Y Fluor, Chlor, Brom, Methyl oder Methoxy ist und Z die in Formel (2) angegebene Bedeutung hat.

Bevorzugt werden Kupplungskomponenten der Formel (3), worin K der Rest eines N,N-Di-$C_{1-4}$-Alkylanilins ist, dessen Alkylgruppen durch Cyano substituiert sein können und der im Benzolrest durch Methyl substituiert sein kann und und worin am aromatischen Kern oder an einem C-Atom der N,N-Di-$C_{1-4}$-alkylgruppe ein

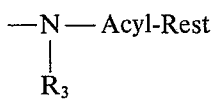

gebunden ist, worin $R_3$ Wasserstoff oder $C_{1-4}$-Alkyl und Acyl ein faserreaktiver Acylrest ist, oder worin an einem C-Atom der N,N-Di-$C_{1-4}$-alkylgruppe ein —O-Acylrest gebunden ist, worin Acyl ein faserreaktiver Rest ist, verwendet.

Bevorzugt sind ferner die Kupplungskomponenten der Formel

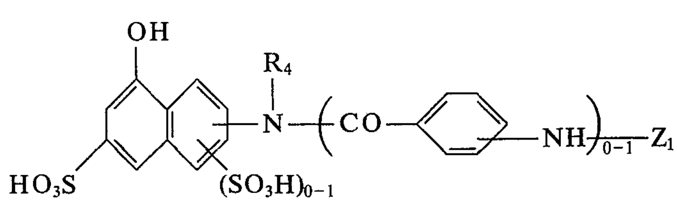

worin $R_4$ Wasserstoff oder $C_{1-4}$-Alkyl und $Z_1$ ein faserreaktiver Acylrest ist.

Der an die bevorzugten Kupplungskomponenten der Formel (3) gebundene faserreaktive Acylrest ist vorzugsweise ein $\alpha,\beta$-Dibrompropionyl-, 2,6-Difluor-5-Chlorpyrimidyl- oder ein 2-Chlor- oder 2-Fluor-4-$C_{1-4}$-Alkoxy- oder -$C_{1-2}$-Alkoxy-$C_{1-2}$-alkoxy-1,3,5-triazinyl-Rest oder ein 2-Chlor-4-phenylamino- oder N-$C_{1-4}$-Alkyl-phenylamino-1,3,5-triazinyl-Rest.

Als besonders bevorzugte Diazokomponenten der Formel (2), werden solche als Ausgangsverbindungen verwendet, worin X Phenoxy, $-NH_2$ oder Dimethylamino und Y Fluor, Chlor oder Methyl ist.

Besonders bevorzugte Reaktivreste sind vor allem die $\alpha$-Bromacryloylamino- und die $\alpha,\beta$-Dibrompropionylaminogruppe. Erstere kann entweder mit Hilfe von Bromacrylsäurechlorid eingeführt oder aus der $\alpha,\beta$-Dibrompropionylgruppe durch Abspaltung von Bromwasserstoff erhalten werden. Analoges gilt auch für die $\alpha$-Chloracrylgruppe. Ebenfalls von Interesse sind die 4,6-Difluortriazinyl-(2)- oder die 4-Fluor- oder 4-Chlor-6-alkyl- oder -6-arylaminotriazinyl-(2)-Gruppen.

Als Ausgangsstoffe der Kupplungskomponenten der Formel (3) seien folgende als Beispiele genannt:

Dimethylanilin, Diäthylanilin, 3-Methyl-dimethylanilin, 3-Methyl-di-äthylanilin,
3-Acetylamino- oder 3-Methoxycarbonylamino- oder 3-Ureido-dimethylanilin,
3-Methyl-6-methoxy-diäthylanilin, 2,5-Dimethoxydiäthylanilin, N-Äthyl-N-benzylanilin,
N-Äthyl-N-($\beta$-cyanäthyl)anilin, N-Äthyl-N-($\beta$-hydroxyäthyl)anilin,
N-Äthyl-N-($\beta$-acetoxyäthyl)anilin, N,N-Dibutylanilin,
3-($\alpha,\beta$-Dibrompropionylamino)-N,N-dimethyl- oder diäthylanilin, 3-($\alpha$-Chloracetylamino)- oder
3-($\alpha$-Bromacryloylamino)-N,N-dimethylanilin, 1-Hydroxy-7-amino-3-sulfonaphthalin,
1-Hydroxy-7-methylamino- oder -7-phenylamino-3-sulfonaphthalin,
1-Hydroxy-7-($\alpha,\beta$-dibrompropionylamino)- oder 7-($\alpha$-chloracetylamino)-3-sulfonaphthalin,
1-Hydroxy-8-amino-3,6- oder -3,5-disulfonaphthalin, 1-Hydroxy-8-benzoylamino-3,6- oder
-3,5-disulfonaphthalin, 1-Hydroxy-8-ureido-3,6- oder -3,5-disulfonaphthalin,
1-Hydroxy-8-acetylamino-3,6- oder -3,5-disulfonaphthalin,
1-Hydroxy-8-(3'-$\alpha,\beta$-dibrompropionylaminobenzoylamino)-3,6- oder -3,5-disulfonaphthalin,
1-(2',3'- oder 4'-Sulfophenyl)-3-methylpyrazolon-5, 1-(2'-Chlor-4'- oder
5'-Sulfophenyl)-3-methylpyrazolon-5, 1-(2'-Methyl-4'-sulfophenyl)-3-methylpyrazolon-5,
1-[4',8'-Disulfonaphthyl-(2)]-3-methylpyrazolon-5,
1-[5',7'-Disulfonaphthyl-(2)]-3-methylpyrazolon-5,
1-(2'-Chlor-5'-sulfophenyl)-3-methyl-5-aminopyrazol,
1-(2'-Chlor-4'-sulfophenyl)-3-methyl-5-aminopyrazol,
1-(3'- oder 4'-sulfophenyl)-3-methyl-5-amino-pyrazol,
1-Äthyl-3-cyano-4-methyl-6-hydroxy-pyridon-2,
1-Äthyl-4-methyl-6-hydroxy-pyridon-2, 2-Methylindol, 2-Phenylindol.

Die vorliegende Erfindung betrifft ebenfalls die als Diazokomponenten verwendeten Verbindungen der Formel

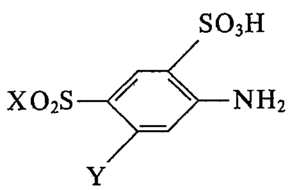

(4)

worin X und Y die unter Formel (2) angegebenen Bedeutungen haben. Sie werden hergestellt durch verseifende Diazotierung eines entsprechenden Disulfamids, wie in Beispiel 1 angegeben, und anschließender reduktiver Spaltung des Azofarbstoffes, falls die Diazokomponente isoliert werden soll, oder wie weiter unten näher ausgeführt.

Als Beispiele für Verbindungen der Formel (2) bzw. (4) seien genannt:

1-Amino-3-chlor-4-aminosulfonyl-benzol-6-sulfonsäure,
1-Amino-3-brom-4-aminosulfonyl-benzol-6-sulfonsäure,
1-Amino-3-methoxy-4-aminosulfonyl-benzol-6-sulfonsäure,
1-Amino-3-chlor-4,6-diaminosulfonyl-benzol,
1-Amino-3-brom-4,6-diaminosulfonyl-benzol,
1-Amino-3-methoxy-4,6-diaminosulfonyl-benzol,
1-Amino-3-chlor-4-N-methylaminosulfonylbenzol-6-sulfonsäure,
1-Amino-3-chlor-4-N-äthylaminosulfonylbenzol-6-sulfonsäure,
1-Amino-3-brom-4-N-methylaminosulfonylbenzol-6-sulfonsäure,
1-Amino-3-brom-4-N-äthylaminosulfonylbenzol-6-sulfonsäure,
1-Amino-3-methoxy-4-N-methylaminosulfonylbenzol-6-sulfonsäure,
1-Amino-3-methoxy-4-N-äthylaminosulfonyl-benzol-6-sulfonsäure,
1-Amino-3-chlor-4-N-methylaminosulfonyl-6-aminosulfonylbenzol,
1-Amino-3-chlor-4-N-äthylaminosulfonyl-6-aminosulfonylbenzol,

1-Amino-3-brom-4-N-methylaminosulfonyl-6-aminosulfonylbenzol,
1-Amino-3-brom-4-N-äthylaminosulfonyl-6-aminosulfonylbenzol,
1-Amino-3-methoxy-4-N-methylaminosulfonyl-6-aminosulfonylbenzol,
1-Amino-3-methoxy-4-N-äthylaminosulfonyl-6-aminosulfonylbenzol,
1-Amino-3-chlor(brom, methoxy)-4-N,N-dimethylamino(N,N-diäthylamino, N-methyl-N-äthylamino, morpholino, N-methyl-N-cyclohexylamino)sulfonylbenzol-6-sulfonsäure,
1-Amino-3-chlor (brom, methoxy)-4-N,N-dimethylamino(N,N-diäthylamino, N-methyl-N-äthylamino, morpholino, N-Methyl-N-cyclohexylamino)sulfonyl-6-aminosulfonyl-benzol,
1-Amino-3-chlor(brom, methoxy)-4-phenoxy(o-chlorphenoxy, m-sulfophenoxy)sulfonylbenzol-6-sulfonsäure,
1-Amino-3-chlor-(brom, methoxy)-4-phenoxy(o-chlorphenoxy, m-sulfophenoxy)sulfonyl-6-aminosulfonyl-benzol,
1-Amino-3-chlor(brom, methoxy)-4-methyl(äthyl,-benzyl)sulfonyl-benzol-6-sulfonsäure,
1-Amino-3-chlor(brom, methoxy)-4-methyl(äthyl, benzyl)sulfonyl-6-aminosulfonyl-benzol,
1-Amino-3-fluor(methyl)-4-N,N-dimethylaminosulfonyl-benzol-6-sulfonsäure,
1-Amino-3-fluor(methyl)-4-phenoxysulfonyl-benzol-6-sulfonsäure,
1-Amino-3-fluor(methyl)-4-p-methoxyphenoxy(p-chlorphenoxy, o-methylphenoxy)sulfonyl-benzol-6-sulfonsäure,
1-Amino-3-fluor(methyl)-4-naphthoxysulfonyl-benzol-6-sulfonsäure,
1-Amino-3-fluor(methyl)-4-methyl($\beta$-hydroxyäthyl,benzyl)sulfonyl-benzol-6-sulfonsäure.

Von besonderem Interesse sind diejenigen Verbindungen der Formel (4), worin Y Fluor, Chlor, Brom, Methyl oder Methoxy ist.

Die Verbindungen der Formel (4) werden hergestellt, indem man eine Verbindung der Formel

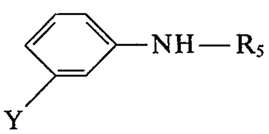

(5)

worin $R_5$ ein Acylrest, insbesondere ein Acetylrest ist, und Y die unter Formel (4) angegebene Bedeutung hat, mit Chlorsulfonsäure umsetzt, das erhaltene Sulfochlorid, zwecks Einführung des Restes X, gegebenenfalls nach Reduktion des Sulfochlorids zur Sulfinsäure, mit einer Hydroxyarylverbindung, einem $C_{1-12}$-Alkylierungsmittel, einem Cycloalkylierungs- oder Arylierungsmittel oder einer Verbindung der Formel

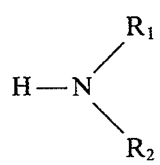

worin $R_1$ und $R_2$ die unter Formel (1) angegebenen Bedeutungen haben, umsetzt, und die erhaltene Verbindung der Formel

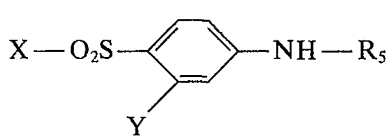

zwecks Abspaltung des Acylrestes $R_5$ verseift und anschließend mit Chlorsulfonsäure zu einer Verbindung der Formel (4) umsetzt.

Die neuen Farbstoffe eignen sich zum Färben und Bedrucken von Hydroxyl- oder Amidgruppen enthaltenden Materialien, wie Textilfasern, Textilfäden und -geweben aus Wolle, Seide, Polyurethanfasern sowie Cellulose, insbesondere aber zum Färben und Bedrucken von synthetischem Polyamid, wobei die üblichen Färbeverfahren angewendet werden.

Sie zeichnen sich aus durch Brillanz und Farbstärke, gutes Migrations-, Auszieh- und Aufbauvermögen, Beständigkeit gegenüber Formaldehyd, hohe Lichtechtheit sowie gute Löslichkeit und allgemein gute Echtheiten, wie Reibechtheit, Säure-und Alkaliechtheit, Naßechtheiten, insbesondere Wasch-, Wasser-, Heißwasser-, Schweiß- und Walkechtheit und geben egale Färbungen.

Ähnliche Farbstoffe wie die erfindungsgemäßen Farbstoffe werden in der britischen Patentanmeldung 20 21 619 beschrieben, die sich dadurch von den erfindungsgemäßen Farbstoffen unterscheiden, daß die Diazokomponente in 5-Stellung unsubstituiert ist. Demgegenüber zeigen die erfindungsgemäßen Farbstoffe ein besseres Aufziehverhalten.

In den folgenden Beispielen stehen Teile (T.) für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

## Beispiel 1

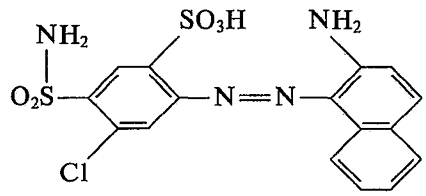

### Diazotierung

5,71 T 5-Chloranilin-2,4-disulfamid (0,02 Mol) werden in 20 Vol.-Teile Sulfolan eingetragen und unter Erwärmen auf 50—60° und Zusatz von 25 T. Wasser gelöst. Man fügt 5 Vol.-Teile konz. Salzsäure zu der Lösung hinzu und kühlt sie ab auf 2°. Bei 2—4° wird mit 10 Vol.-Teilen 4 N Natriumnitritlösung (0,04 Mol) diazotiert. Es wurde gefunden, daß die Diazotierung von 5-Chlor-anilin-2,4-disulfamid unter Verbrauch von 2 Äquivalenten Nitrit und »Verseifung« einer Sulfamidgruppe nach folgendem Schema verläuft:

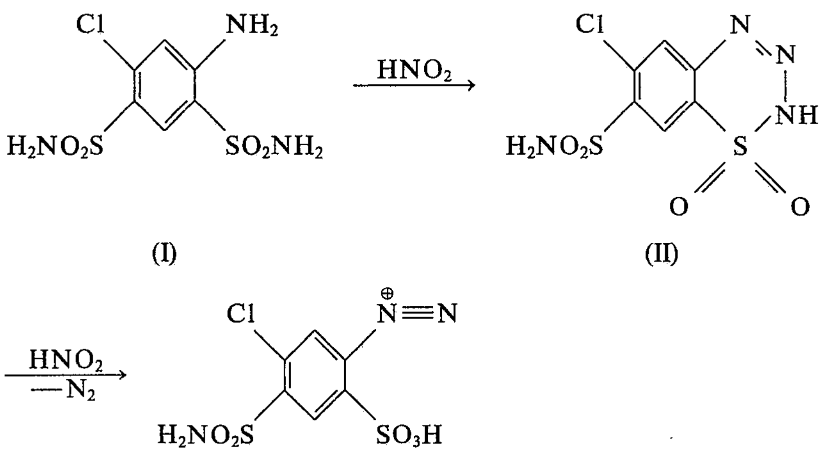


(I) (II)

(III)

Die Zwischenstufe II ist instabil und geht unter $N_2$-Entwicklung und Aufnahme von weiterem Nitrit in das Diazoniumsalz III über. Dabei entsteht aus der Sulfamidgruppe in ortho-Stellung zur Aminogruppe eine Sulfogruppe. Der Beweis für die Position der Sulfogruppe in ortho-Stellung zur Aminogruppe wurde durch NMR- und IR-Spectroskopie erbracht.

Nach einiger Zeit zerstört man einen geringen Nitritüberschuß mit Sulfaminsäure.

### Kupplung

4,46 T. 2-Aminonaphthalin-1-sulfonsäure (0,02 Mol) werden in 50 T. Wasser von Raumtemperatur mit Natronlauge bei pH 7—8 gelöst und zur oben hergestellten Suspension des Diazoniumsalzes gegossen. Nach vollendeter Kupplung filtriert man das Kupplungsgemisch und wäscht das Filtergut mit Wasser. Das Nutschgut wird in 100 T. Wasser verrührt und unter Zugabe von Natronlauge bei pH 7 und einer Temperatur von 50—60° gelöst. Der Farbstoff wird aus dieser Lösung durch Aussalzen gefällt und abfiltriert. Nach dem Waschen mit Sole und Trocknen erhält man 8,4 T. Farbstoff, der natürliche oder synthetische Polyamidmaterialien in roten Tönen färbt, vorzüglich migriert und eine sehr gute Lichtechtheit aufweist.

Die Strukturen der in den nachfolgenden Beispielen verwendeten Diazokomponenten der Formel (2) beziehungsweise deren Vorstufen wurden durch NMR- oder IR-Spektroskopie gesichert.

Beispiel 2

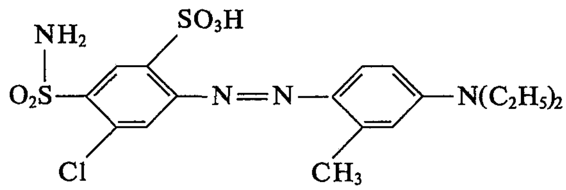

Diazotierung

5,71 T. 5-Chloranilin-2,4-disulfamid (0,02 Mol) werden wie in Beispiel 1 beschrieben diazotiert.

Kupplung

3,26 T. N,N-Diäthyl-m-toluidin (0,02 Mol) werden in 50 T. Wasser von Raumtemperatur unter Zusatz von 3 Vol.-Teilen konz. Salzsäure gelöst und innerhalb 10 Min. zur oben hergestellten Suspension des Diazoniumsalzes getropft. Man läßt das Reaktionsgemisch bei Raumtemperatur fertig kuppeln, filtriert den praktisch vollständig ausgefallenen Farbstoff ab und wäscht ihn mit Wasser. Nach dem Trocknen erhält man 8,62 T. des Azofarbstoffes der obigen Formel, der natürliche oder synthetische Polyamidmaterialien in roten Tönen von allgemein guten Echtheiten färbt.

Beispiel 3

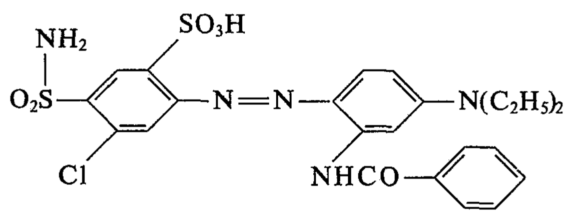

Diazotierung

5,71 T. 5-Chloranilin-2,4-disulfamid (0,02 Mol) werden wie unter Beispiel 1 diazotiert.

Kupplung

5,36 T. 3-Diäthylamino-benzanilid (0,02 Mol) werden in 60 T. Wasser mit 3 Vol.-Teiien konz. Salzsäure gelöst und zur oben hergestellten Suspension des Diazoniumsalzes gegeben. Man rührt das Reaktionsgemisch bei Raumtemperatur, bis die Kupplung beendet ist. Dann wird der Farbstoff abfiltriert, mit Wasser gewaschen und getrocknet.

Man erhält 10,36 T. eines Azofarbstoffes, der natürliche oder synthetische Polyamidmaterialien in roten Tönen färbt und sich durch ein gutes Aufbauvermögen auszeichnet.

Beispiel 4

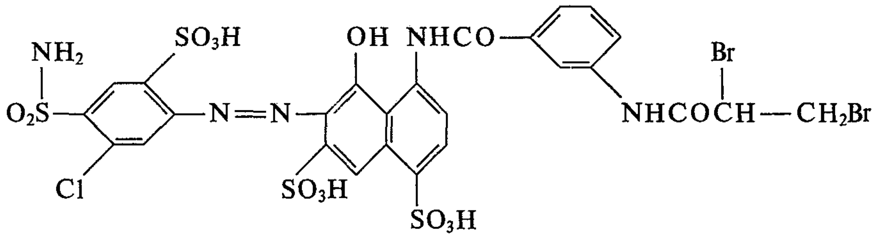

Diazotierung

5,71 T. 5-Chloranilin-2,4-disulfamid werden analog wie in Beispiel 1 diazotiert.

Kupplung

13,04 T. 1-[3'-($\alpha$,$\beta$-Dibrompropionylamino)-benzoylamino]-8-hydroxynaphthalin-4,6-disulfonsäure werden in 100 T. Wasser mit Natronlauge auf pH 8 gestellt und auf 2° abgekühlt. Unter Beibehaltung eines pH-Wertes von 8 gibt man innerhalb von 15 Min. die oben hergestellte Suspension des Diazoniumsalzes hinzu. Nach Beendigung der Kupplung wird die erhaltene Lösung eingedampft. Das so erhaltene Harz wird in Alkohol aufgerüht, abfiltriert und getrocknet. Man erhält 27,2 T. Farbstoff, der Wolle in roten Tönen von guten Licht- und Naßechtheiten färbt.

Beispiel 5

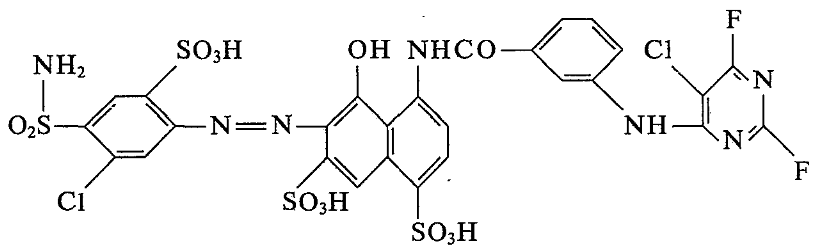

Diazotierung

5,71 T. 5-Chloranilin-2,4-disulfamid werden analog wie in Beispiel 1 diazotiert.

Kupplung

11,72 T. 1-[3'-(2",4"-Difluor-5"-chlorpyrimidin-6"-yl)-aminobenzoylamino]-8-hydroxynaphthalin-4,6-disulfonsäure werden in 200 T. Wasser bei Raumtemperatur mit Natronlauge auf pH 7 gestellt und auf 2° abgekühlt. Die oben hergestellte Suspension des Diazoniumsalzes wird innert 15 Min. zugegeben und das Kupplungsgemisch mit Natronlauge bei pH 7 gehalten. Nach Beendigung der Kupplung wird die Lösung zur Trockne eingedampft und das erhaltene Harz mit Alkohol extrahiert. Anschließend löst man den Farbstoff in etwas Wasser, fällt ihn mit Kaliumchlorid aus, filtriert ihn ab und trocknet ihn.

Man erhält 14,4 T. Farbstoff, der sich zum Färben von Baumwolle und Wolle in echten roten Tönen eignet.

Beispiel 6

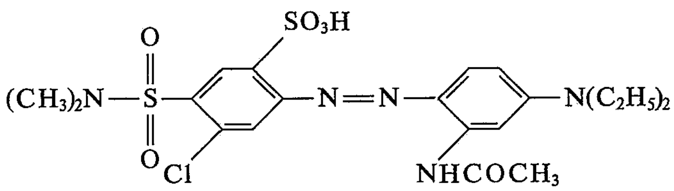

Diazotierung

3,15 T. (0,01 Mol) 5-Chloranilin-4-dimethylsulfamid-2-sulfonsäure werden in 50 T. Wasser gelöst. Nach Zugabe von 2 Vol.-Teilen konz. Salzsäure wird mit 2,5 Vol.-Teilen 4 N Natriumnitritlösung (0,01 Mol) bei 14—16° diazotiert. Nach Beendigung der Diazotierung wird ein geringer Nitritüberschuß mit Sulfaminsäure zerstört.

Kupplung

2,06 T. (0,01 Mol) 3-Diäthylamino-acetanilid werden in 50 T. Wasser unter Zusatz von 1,5 Vol.-Teilen

konz. Salzsäure bei Raumtemperatur gelöst und zur oben hergestellten Suspension des Diazoniumsalzes getropft. Man läßt die Kupplungsreaktion bei Raumtemperatur zu Ende kommen, filtriert den praktisch vollständig ausgefallenen Farbstoff ab und wäscht ihn mit Wasser. Das Nutschgut wird in 100 T. Wasser verrührt und mit Natronlauge auf pH 7 gestellt. Nach Zugabe von Kochsalz wird der wieder ausgefällte Farbstoff abfiltriert, gewaschen und getrocknet. Man erhält 5,12 T. eines roten Farbstoffes, welcher auf synthetischem Polyamid sehr reine Färbungen ergibt, die sich durch hohe Licht-, Migrations- und Formaldehydechtheiten auszeichnen.

Die Diazokomponente, 5-Chlor-anilin-4-dimethylsulfamid-2-sulfonsäure, wird wie folgt hergestellt:

169,5 T. 3-Chloracetanilid werden unter Rühren in 332 Vol.-Teilen Chlorsulfonsäure eingetragen. Die Mischung wird 7 Stunden bei 70° und weitere 15 Stunden bei 25° gerührt, und dann auf 2500 T. Eis ausgetragen. Das ausgefallene Sulfochlorid wird abfiltriert und mit 1500 T. Eiswasser gewaschen. Der Rückstand wird in 1700 Vol.-Teilen Chloroform bei 25° unter Rühren gelöst. Dann wird das Wasser abgetrennt, und die Chloroformphase wird mit 500 Vol.-Teilen destilliertem Wasser gewaschen. Die Chloroformphase wird über Natriumsulfat getrocknet, mit 10 T. Aktivkohle filtriert und bei einem Vakuum von 15 mm Hg zur Trockne eingedampft. Man erhält eine Ausbeute von 142 T.

Die wasserfeuchte Paste des Sulfochlorids aus einem Ansatz, wie oben beschrieben, wird mit 500 Vol.-Teilen Toluol bei 0° homogen verrührt, 384 Vol.-Teile Dimethylamin werden in Portionen unter gutem Rühren zugegeben. Die Suspension wird 20 Stunden lang bei 25° gerührt. Dann wird die wäßrige Phase von der Toluolsuspension abgetrennt; die Toluolsuspension wird durch Zusatz von 300 Vol.-Teilen Methylenchlorid gelöst und nacheinander mit 200 Vol.-Teilen Wasser und 600 Vol.-Teilen 0,1 N Salzsäure gewaschen. Die klare organische Lösung wird über Natriumsulfat getrocknet, und am Vakuum eingedampft. Der Rückstand ist ein opakes Harz. Dieses wird ohne weitere Reinigung in 1200 T. 2 N Natronlauge eingetragen und 30 Minuten lang auf schwachem Rückfluß erhitzt. Die Suspension wird auf 70° abgekühlt und filtriert. Der grobkristalline Rückstand wird in einem Mixer in 400 T. Wasser zerkleinert, filtriert und mit 500 T. Wasser gewaschen. Der Rückstand wird nun im Vakuum bei 70 bis 80° getrocknet; es werden 93,5 T. einer Verbindung der Formel

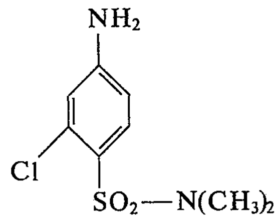

mit dem Schmelzpunkt 123—127° erhalten.

58 T. der Verbindung der oben angegebenen Formel werden in 500 Vol.-Teilen Tetrachloräthan verrührt, dabei wird die Verbindung teilweise gelöst. Dann werden 16,6 Vol.-Teile Chlorsulfonsäure unter Rühren zugetropft. Die Mischung wird im Laufe von 90 Minuten auf 135° erhitzt und 2,5 Stunden bei 135° gerührt, bis kein Chlorwasserstoffgas mehr entweicht. Dann wird die Suspension auf 100° abgekühlt und filtriert. Der Rückstand wird mit 250 Vol.-Teilen Chloroform gewaschen und im Vakuum bei 50 bis 60° getrocknet. Man erhält 77 T. der Verbindung der Formel

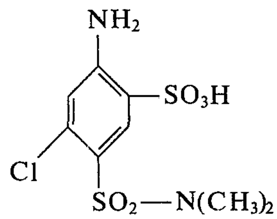

Wenn man wie in Beispiel 6 angegeben verfährt, jedoch als Diazokomponente und als Kupplungskomponente die in folgender Tabelle I aufgeführten Verbindungen einsetzt, so erhält man ebenfalls wertvolle wasserlösliche Farbstoffe, die Polyamid in grünstichig-gelben bis blaustichig-roten Tönen mit ähnlich guten Echtheiten anfärben.

Tabelle I

| Nr. | Diazokomponente | Kupplungskomponente | Nuance auf Polyamid |
|---|---|---|---|
| 1 | 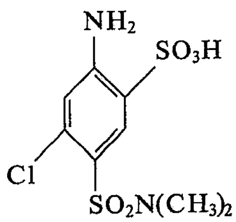 | 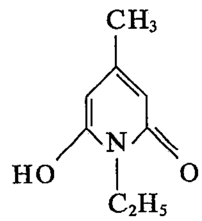 | grünstichig-gelb |
| 2 | 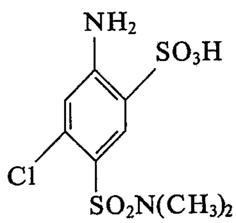 | 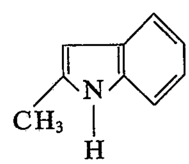 | gelb |
| 3 | 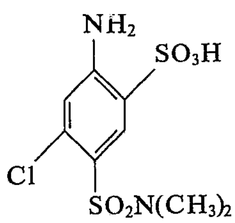 | 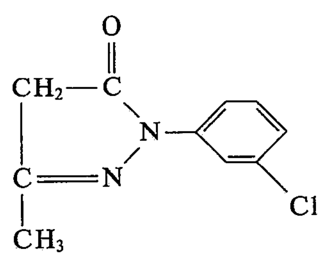 | gelb |
| 4 | 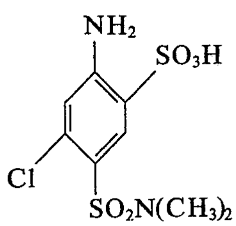 | 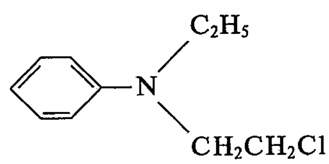 | scharlach |
| 5 | 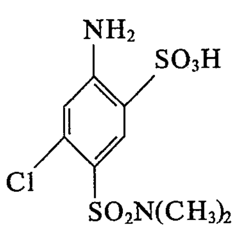 | 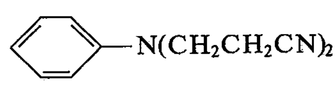 | rotstichig-gelb |
| 6 | 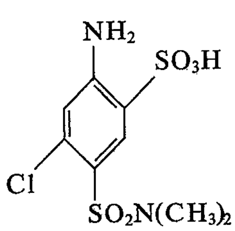 | 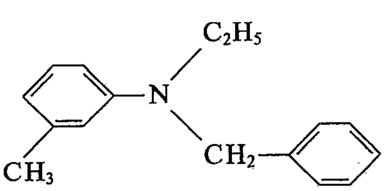 | gelbstichig-rot |
| 7 | 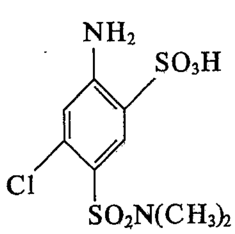 | 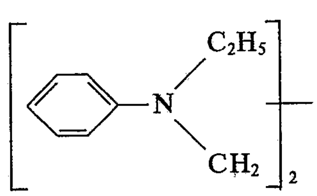 | |

(Fortsetzung)

| Nr. | Diazokomponente | Kupplungskomponente | Nuance auf Polyamid |
|---|---|---|---|
| 8 | 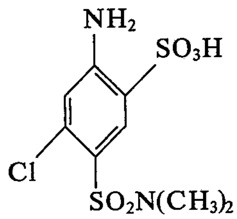 | 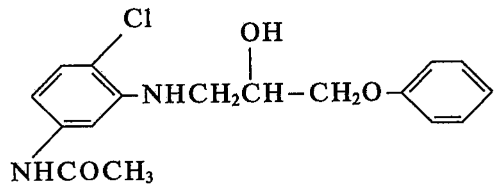 | orange |
| 9 | 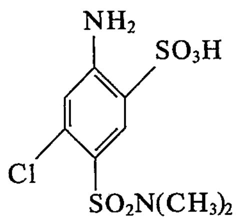 | 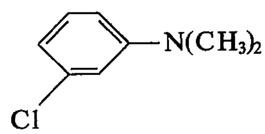 | rotstichig-orange |
| 10 | 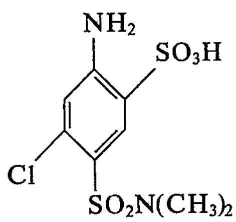 | 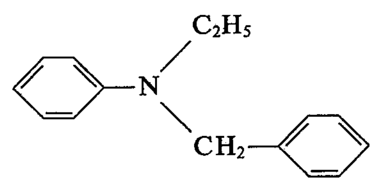 | scharlach |
| 11 | 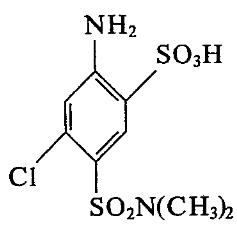 | 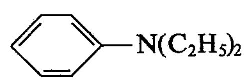 | gelbstichig-rot |
| 12 | 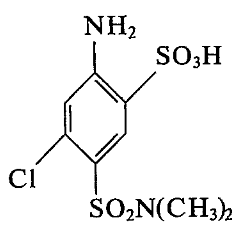 | 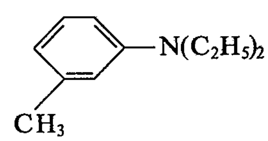 | rot |
| 13 | 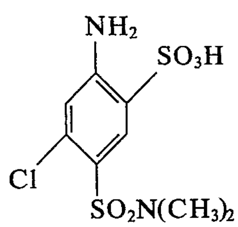 | 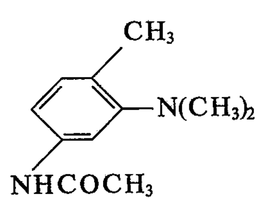 | orange |
| 14 | 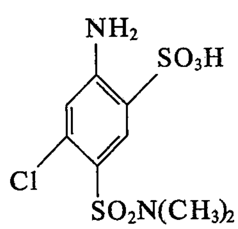 | 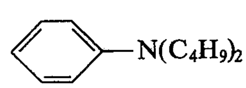 | gelbstichig-rot |

(Fortsetzung)

| Nr. | Diazokomponente | Kupplungskomponente | Nuance auf Polyamid |
|---|---|---|---|
| 15 | 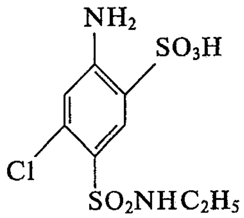 | 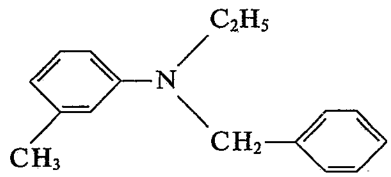 | scharlach |
| 16 | 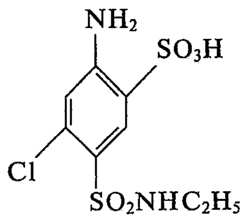 | 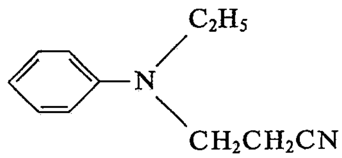 | rotstichig-gelb |
| 17 | 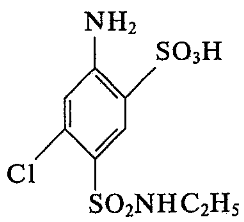 | 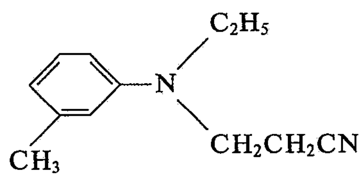 | orange |
| 18 | 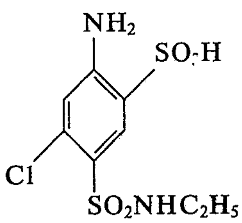 | 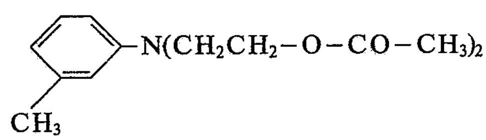 | rot |
| 19 | 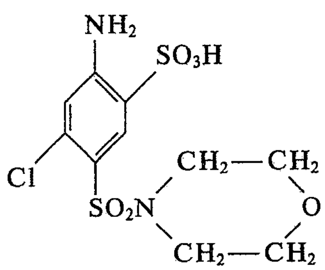 | 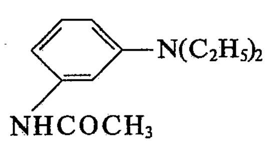 | rot |
| 20 | 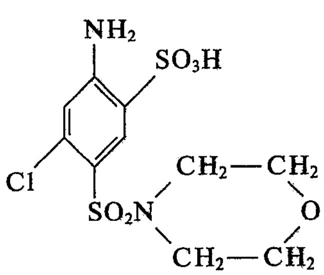 | 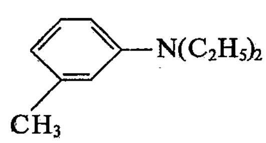 | rot |

(Fortsetzung)

| Nr. | Diazokomponente | Kupplungskomponente | Nuance auf Polyamid |
|---|---|---|---|
| 21 | 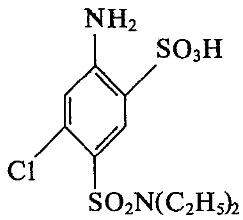 | 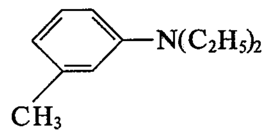 | rot |
| 22 | 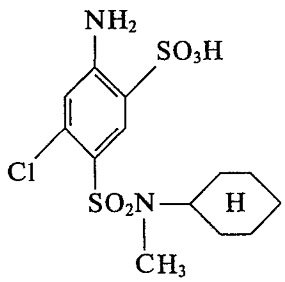 | 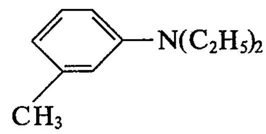 | rot |
| 23 | 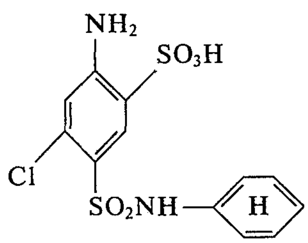 | 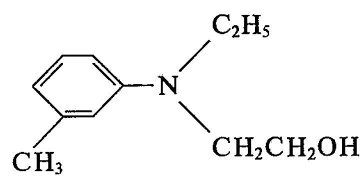 | rot |
| 24 | 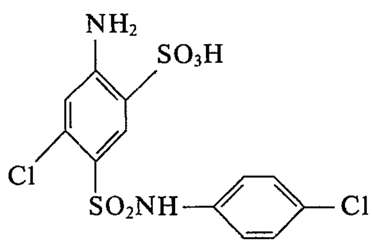 | 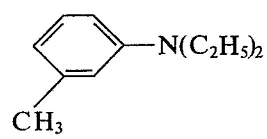 | rot |
| 25 | 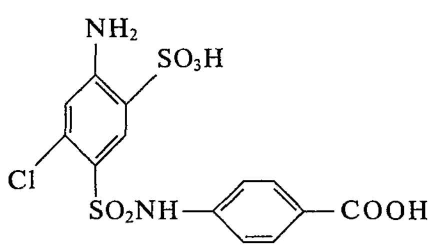 | 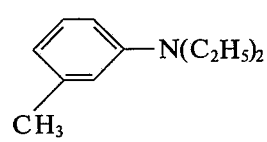 | rot |

Beispiel 7

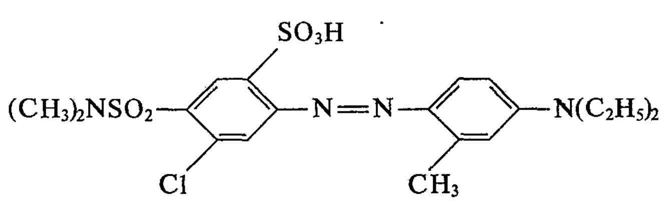

4,6 g des unter Beispiel 2 erhaltenen Farbstoffes werden in 30 ml Methan-phosphonsäure-dimethylester und 4,2 g Soda während mehrerer Stunden bei 100—120° verrührt, bis nach Ausweis des Chromatogrammes ein einheitliches Produkt entstanden ist. Anschließend wird von ungelöster Soda abfiltriert, und der überschüssige Methan-phosphonsäure-dimethylester wird unter Vakuum abdestilliert. Die eingeengte Masse wird in 100 ml Wasser aufgenommen und nach Zugabe von Kochsalz filtriert und getrocknet. Man erhält 4,54 g eines roten Farbstoffes welcher strukturell mit Tabellenbeispiel Nr. 10 identisch ist und mit dessen Färbeeigenschaften übereinstimmt.

Beispiel 8

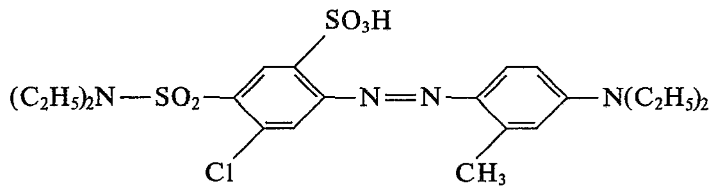

4,6 g des nach Beispiel 2 erhaltenen Farbstoffes werden in 100 ml Wasser bei pH 11 und 60°C in Lösung gebracht. Man hält den pH-Wert mit Natronlauge konstant und gibt bei 60–75°C tropfenweise so lange Diäthylsulfat zu, bis im Chromatogramm praktisch kein Edukt mehr nachzuweisen ist. Man erhält eine Mischung von mono- und dialkyliertem Sulfamid. Der Farbstoff des schwerer-löslichen Diäthylsulfamids wird bei Raumtemperatur abfiltriert und getrocknet.

Man erhält 2,45 g Farbstoff, der synthetische Polyamidmaterialien in roten Tönen mit guten Echtheiten färbt.

Beispiel 9

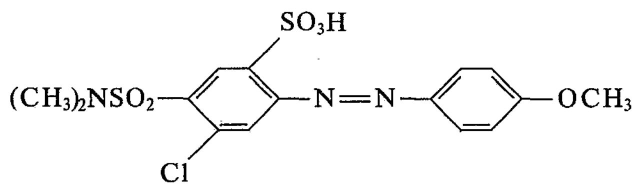

Diazotierung

5,71 g 5-Chloranilin-2,4-disulfamid werden analog Beispiel 1 diazotiert.

Kupplung

3,94 g Phenol werden in 100 ml Wasser mit 20 ml 2 N Natronlauge gelöst, und die Lösung wird auf 2° abgekühlt. Die oben hergestellte Suspension des Diazoniumsalzes wird portionenweise zugegeben, wobei man bei 2–5° mit Natronlauge den pH-Wert 10 einhält. Der Farbstoff wird bei pH 2,5 mit Kaliumchlorid ausgesalzen, filtriert und getrocknet. Man erhält 20 g eines gelben Farbstoffes.

Alkylierung

7,83 g des oben erhaltenen Farbstoffes werden zusammen mit 8,5 g Soda in 60 ml Methan-phosphonsäure-dimethylester während mehreren Stunden bei 100–120°C verrührt. Nachdem ein einheitliches Produkt entstanden ist, wird von ungelöster Soda abfiltriert, und der Überschuß an Methan-phosphonsäure-dimethylester wird im Vakuum abdestilliert. Die eingeengte Masse läßt man in 100 ml Wasser einlaufen. Nach Zugabe von Kochsalz wird das ausgefällte Produkt abfiltriert und getrocknet.

Man erhält 4,77 g Farbstoff der oben genannten Struktur.

Beispiel 10

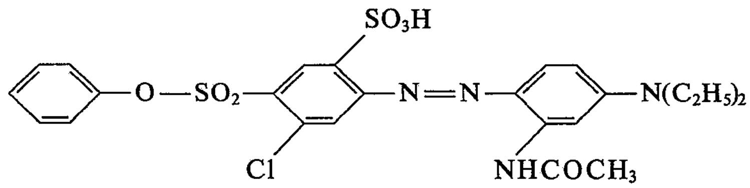

Herstellung der Diazokomponente 5-Chlor-4-phenoxysulfonylanilin-2-sulfonsäure

Man löst 53,6 g trockenes, wie unter Beispiel 6 dargestelltes 3-Chloracetylsulfanilsäurechlorid in 250 ml Aceton und läßt diese Lösung innerhalb von 1 1/2 Std. zu einer zweiten Lösung von 22,56 g Phenol in 500 ml Wasser bei Raumtemperatur eintropfen und hält den pH-Wert mit verdünnter Natronlauge bei 9. Unter Beibehaltung des pH-Wertes wird nachgerührt bis zum völligen Verdunsten des Acetons, dann das ausgefallene Produkt abfiltriert und mit Wasser gewaschen. Der Filterrückstand wird kurz in 100 ml ca. 1 normaler Natronlauge verrührt und nach dem Filtrieren und Waschen mit Wasser im Vakuum getrocknet. Man erhält 51,25 g 3-Chlor-4-phenoxysulfonyl-acetanilid. Die Verbindung schmilzt bei 129 bis 133°C.

50 g dieser Verbindung werden in 100 ml Eisessig, 150 ml Salzsäure techn. und 100 ml Wasser bis zum völligen Verseifen der Acetylgruppe bei Rückfluß behandelt. Bei Raumtemperatur wird die Kristallmasse filtriert und mit Wasser gewaschen. Nach Aufnahme des Nutschkuchens in Wasser wird mit wenig Natronlauge auf pH 9 gestellt, filtriert und bei 50—60°C getrocknet. Man erhält 30,4 g 3-Chlor-4-phenoxysulfonyl-anilin.

24,2 g dieser Verbindung löst man unter kräftigem Rühren in 170 ml Tetrachloräthan und läßt dann 5,65 ml Chlorsulfonsäure zutropfen. Man erwärmt und hält so lange bei Rückflußtemperatur, bis kein Salzsäuregas mehr entsteht. Die abgekühlte Masse wird mit 100 ml Chloroform verdünnt, filtriert und mit Chloroform gewaschen. Der Filterrückstand wird in 175 ml Wasser mit Natronlauge auf pH 7 gestellt und die trübe Lösung dreimal mit je 100 ml Chloroform extrahiert. Die wäßrige Lösung wird mit Salzsäure angesäuert und das Produkt mit Kaliumchlorid ausgesalzen. Nach Filtration und Trocknung erhält man 53,7 g 5-Chlor-4-phenoxysulfonylanilin-2-sulfonsäure.

Diazotierung und Kupplung

7,27 g der oben erhaltenen Diazokomponente löst man in 100 ml heißem Wasser und diazotiert nach Zugabe von 5 ml 10 N Salzsäure und Abkühlen aus 14—16° mit 5 ml 4 N Natriumnitrit. Ein geringer Nitritüberschuß wird nach 15 Minuten mit Sulfaminsäure zerstört. Man löst 4,68 g 3-Diäthylaminoacetanilid in 100 ml Wasser unter Zusatz von 4 ml 10 N Salzsäure und läßt die Lösung zur Suspension des Diazoniumsalzes zutropfen. Die Mischung wird 17 Std. bei 40—50° nachgerührt und anschließend mit 4 N Natriumacetat auf pH 3,5 gestellt. Das Kupplungsprodukt wird abfiltriert und mit Wasser gewaschen, dann wird die Paste in 150 ml Wasser bei 70° mit 2 N Natronlauge bei pH 8 in Lösung gebracht. Der mit Kochsalz ausgefällte Farbstoff wird filtriert, mit Sole gewaschen und im Vakuum bei 60—70° getrocknet. Man erhält 11,43 g eines Monoazofarbstoffes, der aus schwach saurem Bad auf Polyamid gefärbt, eine blaustichig-rote Färbung ergibt und über ein hervorragendes Aufbauvermögen, vorzügliche Formaldehydbeständigkeit und gute Allgemeinechtheiten verfügt.

Beispiel 11

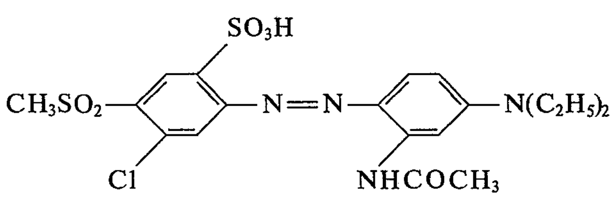

Herstellung der Diazokomponente 5-Chloranilin-4-methylsulfon-2-sulfonsäure

Nach Auflösen von 86,5 g Natriumsulfit in 1000 ml Wasser trägt man bei 0—5° 89 g trockenes, wie unter Beispiel 6 dargestelltes, 3-Chloracetylsulfanilsäurechlorid ein und hält bei gleichbleibender Temperatur während ca. 20 Std. mit 10 N Natronlauge bei pH 8. Nach dem Entfernen von wenig harzigem Material gibt man zur Lösung 50 ml 10 N Salzsäure hinzu und läßt 2 Std. bei Raumtemperatur nachrühren. Das ausgefallene Produkt wird abfiltriert, mit Eiswasser gewaschen und über $P_2O_5$ im Vakuum getrocknet. Man erhält 62,9 g 3-Chlor-acetanilid-4-sulfinsäure.

50 g dieser Verbindung werden in 630 ml Dimethylmethanphosphonat, 210 ml Wasser und 89 g Soda unter Rühren zum Sieden gebracht und 20 Std. bei Rückfluß behalten. Die Lösung wird auf ein Volumen von 470 ml eingeengt, dann auf 1000 ml Eiswasser ausgetragen. Man stellt mit 10 N Natronlauge auf pH 8 und läßt 1 1/2 Std. bei 0—5° nachrühren. Das auskristallisierte Produkt wird durch Filtration isoliert, mit Eiswasser gewaschen und im Vakuum bei 50—60° getrocknet. Man erhält 40,3 g 3-Chlor-acetanilid-4-methylsulfon.

40 g dieser Verbindung werden in 400 ml 1 N Natronlauge 1 1/4 Std. bei Siedetemperatur verseift. Das Produkt wird kalt abfiltriert, mit Wasser gewaschen und bei 50—60° im Vakuum getrocknet. Man erhält 32,4 g 3-Chloranilin-4-methylsulfon.

31,6 g dieser Verbindung verrührt man in 300 ml Tetrachloräthan und gibt 10 ml Chlorsulfonsäure zu. Man erhitzt und läßt bis zum Abklingen der Salzsäuregas-Entwicklung bei Rückflußtemperatur rühren. Die abgekühlte Suspension wird filtriert und mit Chloroform gewaschen. Der Filterrückstand wird in 200 ml Wasser mit 10 N Natronlauge auf pH 7,5 gestellt und die etwas trübe Lösung mit Aktivkohle geklärt. Das klare Filtrat wird mit 100 ml Chloroform extrahiert und anschließend zur Trockne eingeengt. Man erhält 42,6 g 5-Chloranilin-4-methylsulfon-2-sulfonsäure. Die Verbindung schmilzt bei 162 bis 170°C.

Diazotierung und Kupplung

2,86 g der oben erhaltenen Diazokomponente werden in 50 ml Wasser gelöst und nach Zusatz von 2,5 ml 10 N Salzsäure mit 2,5 ml 4 N Natriumnitrit bei 14—16° diazotiert. Man läßt etwas nachrühren und zerstört dann den geringen Nitritüberschuß mit Sulfaminsäure. 2,06 g 3-Diäthylamino-acetanilid werden nach Zugabe von 2 ml 10 N Salzsäure in 50 ml Wasser gelöst und der oben hergestellten Suspension des Diazoniumsalzes zugegeben. Nach 18 Std. bei Raumtemperatur ist die Kupplung beendet. Es wird filtriert und mit Sole gewaschen. Der Filterrückstand wird in 75 ml Wasser mit 2 N Natronlauge bei pH 7 gelöst. Nach Zugabe von Kochsalz wird der ausgefällte Farbstoff filtriert, mit Sole gewaschen und im Vakuum bei 60—70° getrocknet. Man erhält 4,85 g eines roten Farbstoffs, der auf Polyamid gefärbt durch seine reine Nuance und hohe Lichtechtheit auffällt und sich durch vorzügliche Formaldehyd- und Migrationsechtheiten auszeichnet.

Beispiel 12

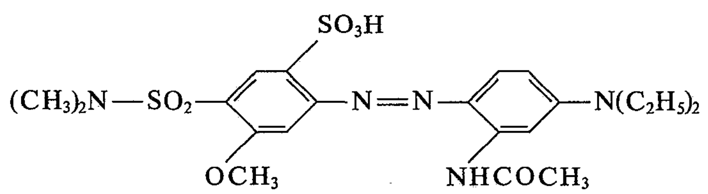

Herstellung der Diazokomponente 5-Methoxyanilin-2,4-disulfamid

Gemäß den Angaben aus dem US-Patent Nr. 2 809 194 werden 150 ml Chlorsulfonsäure tropfenweise innerhalb von 30 Minuten unter Rühren zu 24,6 g m-Anisidin unter Kühlung im Eisbad zugesetzt. Nach vollständigem Zusatz der Chlorsulfonsäure gibt man im Verlauf einer Stunde 140 g Natriumchlorid in kleinen Portionen zu. Man erhitzt das Gemisch 2 Stunden auf dem Dampfbad und dann 3 Stunden in einem Ölbad auf 150—160°, kühlt es gut in einem Eisbad und versetzt mit 500 ml Eiswasser. Das Produkt wird in Äther aufgenommen, mit Wasser gewaschen, getrocknet und das Lösungsmittel auf dem Dampfbad abgedampft. Die trockene Substanz schmilzt bei 131—133° unter Zersetzung.

23 g des Disulfochlorids werden in 30 ml Aceton gelöst und innerhalb 40 Minuten zu einer Mischung von 112 ml 25%igem Ammoniak und 50 ml Aceton getropft. Man läßt im ausgehenden Eisbad über Nacht nachrühren, filtriert und löst den Rückstand in 150 ml Wasser bei 75—80° unter Zusatz von 12 ml konzentrierter Natronlauge. Mit Aktivkohle klärfiltriert, wird die Lösung mit 7 ml Salzsäure techn. auf pH 9 gestellt, das ausgefällte Produkt filtriert, mit Wasser gewaschen und getrocknet. Die Verbindung hat einen Schmelzpunkt von 246—247°.

Diazotierung, Kupplung und Alkylierung der Sulfamidgruppe

5,62 g 5-Methoxyanilin-2,4-disulfamid werden in 15 ml Sulfolan eingetragen und unter Erwärmen und allmählichem Zusatz von 25 ml Wasser bei 70—75°C gelöst. Man fügt 5 ml 10 N Salzsäure zu der Lösung und kühlt auf 2° ab. Bei 2—4° wird mit 10 ml 4 N Natriumnitrit diazotiert. Nach einiger Zeit zerstört man einen geringen Nitritüberschuß mit Sulfaminsäure.

4,12 g 3-Diäthylamino-acetanilid werden in 25 ml Wasser unter Zusatz von 2,5 ml 10 N Salzsäure

gelöst und zur oben hergestellten Suspension des Diazoniumsalzes getropft. Man führt die Kupplung bei Raumtemperatur zu Ende, filtriert den praktisch vollständig ausgefallenen Farbstoff ab und wäscht ihn mit Wasser.

Der feuchte Filterrückstand wird in 60 ml Methanphosphonsäure-dimethylester aufgenommen und nach dem Einstreuen von 17 g Soda unter Rühren auf 140° Badtemperatur erwärmt. Bis zum Erscheinen einer im Chromatogramm einheitlichen Verbindung werden ca. 9 ml Wasser aus der siedenden Reaktionslösung abdestilliert. Anschließend wird auf 125 ml kaltes Wasser ausgetragen und die Lösung mit 1 N Salzsäure auf pH 5 gestellt. Der ausgefallene Farbstoff wird filtriert und mit Sole gewaschen. Nach Aufnahme des Nutschkuchens in 100 ml Wasser wird mit 2 N Natronlauge auf pH 7,5 gestellt und die Lösung nach einer Klärfiltration zur Trockene eingedampft.

Der rote Farbstoff eignet sich vorzüglich zum Färben von Polyamid und zeichnet sich durch sehr gute Licht-, Formaldehyd- und Migrationsechtheiten aus.

Beispiel 13

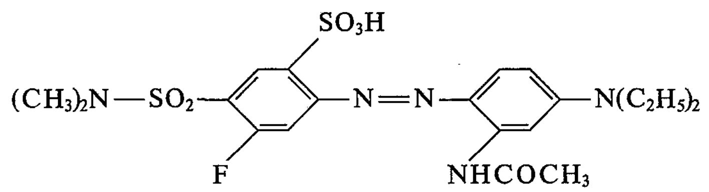

Herstellung der Diazokomponente 5-Fluoranilin-4-dimethyl-sulfamid-2-sulfonsäure

Analog zu den Angaben in den Chem.Ber. 85, Seite 577—82 werden 111 g 3-Fluoranilin vorsichtig mit 100 g Schwefelsäure (98%) versetzt und unter Durchleiten eines schwachen $N_2$-Stromes 10 Stunden im Ölbad auf 190° erhitzt. Der erstarrte Kuchen wird nach dem Erkalten in Sodalösung gelöst und die nicht sulfonierte Base durch Extraktion mit Methylenchlorid herausgelöst. Die wäßrige, mit Aktivkohle geklärte Lösung wird mit Schwefelsäure angesäuert, kalt filtriert und nach dem Waschen mit Eiswasser die 3-Fluoranilin-4-sulfonsäure in Wasser durch Zugabe von konzentrierter Natronlauge gelöst und bei pH 7 in das Na-Salz überführt. Die Lösung wird im Vakuum zur Trockne eingedampft.

72,4 g des Natriumsalzes werden mit 75 ml Essigsäureanhydrid übergossen und die Mischung nach dem Erwärmen noch eine Stunde unter Rückfluß gehalten. Nach dem Erkalten wird abgesaugt, mit Äther gewaschen und im Vakuum über Kaliumhydroxid getrocknet.

81,7 g der Acetylverbindung werden im Mörser mit 73,5 g Phosphorpentachlorid und 10 ml Phosphoroxychlorid zu einem homogenen Teig verrieben und nach etwa 20 Minuten auf 500 g Eis ausgetragen. Nach Erreichen eines homogenen Zustandes wird filtriert und mit Eiswasser neutral gewaschen. Das Produkt wird in Methylenchlorid gelöst, mit Wasser gewaschen und nach dem Trocknen über Glaubersalz mit Aktivkohle geklärt und eingedampft.

15,2 g des harzförmigen Sulfochlorids löst man in ca. 30 ml Aceton und tropft die Lösung unter Kühlung in 73 ml 41%ige Dimethylaminlösung ein. Man läßt die Lösung bei Raumtemperatur bis zum Verdunsten des Acetons nachrühren und löst dann den anfallenden Rückstand in Methylenchlorid auf. Nach dem Waschen mit Wasser wird die Lösung getrocknet und nach einer Klärfiltration mit Aktivkohle zur Trockne eingedampft.

12,9 g der harzförmigen Substanz werden in 150 ml 1 N Natronlauge kochend verseift. Das kalt filtrierte Produkt wird aus Wasser umkristallisiert und getrocknet. Das erhaltene 3-Fluoranilin-4-dimethylsulfamid hat einen Schmelzpunkt von 106—110°.

2,62 g 3-Fluoranilin-4-dimethylsulfamid werden in 24 ml Tetrachloräthan gelöst und mit 0,8 ml Chlorsulfonsäure versetzt. Man erwärmt und hält bei Siedetemperatur, bis kein Salzsäuregas mehr entwickelt wird. Die Suspension wird bei Raumtemperatur mit etwa gleichen Teilen Wasser und Methylenchlorid verdünnt und mit Natronlauge neutral gestellt. Nach dem Abtrennen der organischen Phase wird die wäßrige Lösung nochmals mit Methylenchlorid gewaschen, mit Aktivkohle klarfiltriert und zur Trockne eingedampft.

Diazotierung und Kupplung

3,28 g der oben erhaltenen Diazokomponente werden in 50 ml Wasser gelöst und nach Zusatz von 2,75 ml 10 N Salzsäure mit 9 ml 1 N Natriumnitrit bei 14—18° diazotiert. Nach einigem Nachrühren wird ein geringer Nitritüberschuß mit Sulfaminsäure zerstört.

1,85 g 3-Diäthylamino-acetanilid werden in 11 ml Wasser durch Zugabe von 1,1 ml 10 N Salzsäure gelöst und der oben hergestellten Suspension des Diazoniumsalzes zugegeben. Nach 18 Std. bei Raumtemperatur wird der ausgefallene Farbstoff filtriert und mit Wasser gewaschen. Der Filterkuchen wird in 80 ml Wasser bei Raumtemperatur verrührt und mit 2 N Natronlauge auf pH 7 gestellt. Nach Zugabe von Kochsalz wird der ausgefällte Farbstoff filtriert und nach dem Waschen mit Sole im Vakuum bei 60—70° getrocknet. Man erhält auf Polyamid eine reine rote Färbung mit vorzüglichen Echtheiten, insbesondere der Lichtechtheit.

Beispiel 14

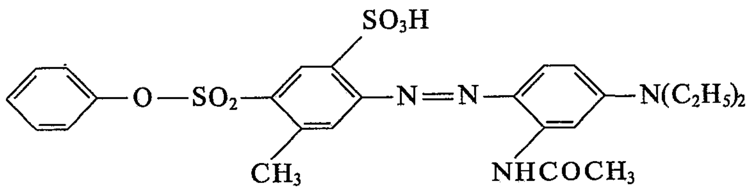

Herstellung der Diazokomponente 5-Methyl-4-phenoxy-sulfonylanilin-2-sulfonsäure

37,3 g 3-Methylacetanilid werden bei 15—20° in 83 ml Chlorsulfonsäure eingetragen und die entstehende Lösung über Nacht bei Raumtemperatur nachgerührt. Man tropft in eine Mischung von 600 g Eis und 50 g Kochsalz und filtriert den entstandenen Niederschlag ab und wäscht mit Eiswasser. Der Nutschkuchen wird in 200 ml Methylenchlorid aufgelöst und mit Wasser gewaschen. Die getrocknete und mit Aktivkohle geklärte Lösung wird zur Trockne eingedampft.

24,6 g des Harzes werden in 35 ml Aceton gelöst und innerhalb 45 Minuten zu einer Lösung, bestehend aus 9,87 g Phenol, 150 ml Wasser und 50 ml Aceton getropft. Bis zum Ende der Reaktion wird mit verdünnter Natronlauge auf pH 9 gehalten und schließlich das abgeschiedene Produkt in 150 ml Methylenchlorid aufgelöst. Nach dem Waschen mit verdünnter Sodalösung und Wasser wird die Lösung getrocknet, mit Aktivkohle behandelt und zur Trockne eingedampft.

25,5 g des Harzes werden in je 75 ml Eisessig und Salzsäure techn. gelöst und innerhalb 2½ Stunden bei Rückfluß verseift. Nach dem Verdünnen mit Wasser wird kalt filtriert und mit 100 ml Wasser gewaschen. Der Nutschkuchen wird in Wasser verrührt und mit wenig Natronlauge auf pH 9 gestellt. Es wird filtriert und nach dem Waschen mit Wasser bei 60—70° getrocknet.

16,6 g der Verbindung mit dem Smp. 102—104° werden in 126 ml Tetrachloräthan gelöst und nach Zugabe von 4,2 ml Chlorsulfonsäure zum Sieden erwärmt. Nachdem die Salzsäureabspaltung beendet ist, wird bei 100° filtriert und mit Chloroform gewaschen. Nach Aufnahme des Nutschkuchens in Wasser stellt man mit Natronlauge auf pH 7, wäscht mit Methylenchlorid und dampft die wäßrige Lösung nach einer Klärfiltration mit Aktivkohle zur Trockne ein.

Diazotierung und Kupplung

5,0 g der oben erhaltenen Diazokomponente werden in 50 ml Wasser gelöst und nach Zugabe von 3,6 ml Salzsäure 10 N bei 14—18° mit 12,8 ml 1 N Natriumnitrit diazotiert. Ein geringer Nitritüberschuß wird nach einiger Zeit mit Sulfaminsäure zerstört.

2,63 g 3-Diäthylamino-acetanilid werden in 16 ml Wasser mit 1,6 ml 10 N Salzsäure gelöst und der oben hergestellten Suspension des Diazoniumsalzes zugefügt. Die Kupplung wird mit 4 N Natriumacetat bei pH 3,5 zu Ende geführt. Der vollständig ausgefallene Farbstoff wird nach dem Filtrieren mit Wasser gewaschen und im Vakuum bei 60—70° getrocknet.

Der Farbstoff ist auf der stöchiometrischen Menge Soda coupiert gut wasserlöslich, erzeugt auf Polyamid aus schwach saurem Bad gefärbt eine reine Rotnuance und verfügt über ein hohes Aufbauvermögen sowie gute Allgemeinechtheiten.

Verfährt man weitgehend analog den Angaben in den Beispielen 1 bis 14, so erhält man die in Tabelle II aufgeführten Diazokomponenten und daraus weitere wertvolle, wasserlösliche Farbstoffe.

Tabelle II

| Nr. | Diazokomponente | Y | X | Kupplungskomponente | Nuance |
|---|---|---|---|---|---|
| 1 | 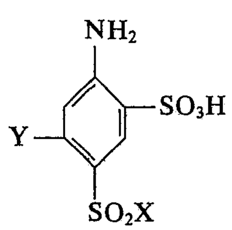 | Br | $N(CH_3)_2$ | 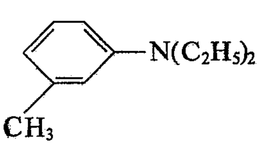 | rot |

(Fortsetzung)

| Nr. | Diazokomponente | Y | X | Kupplungskomponente | Nuance |
|---|---|---|---|---|---|
| 2 | 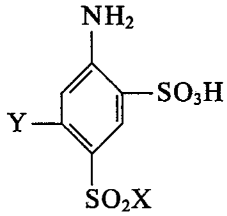 | F | $N(CH_3)_2$ | 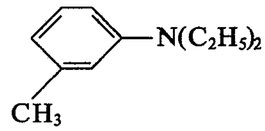 | rot |
| 3 | 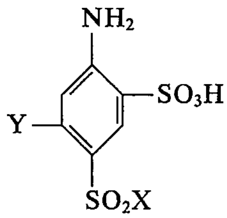 | $CH_3$ | $N(CH_3)_2$ | 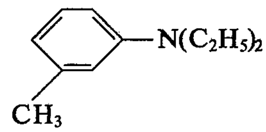 | rot |
| 4 | 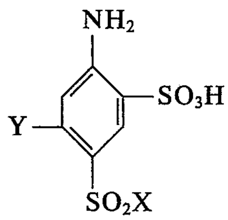 | $OCH_3$ | $N(CH_3)_2$ | 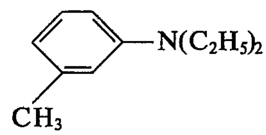 | rot |
| 5 | 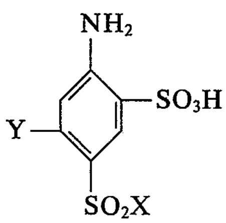 | Br | $N(CH_3)_2$ | 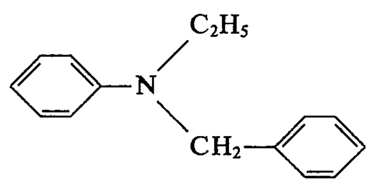 | scharlach |
| 6 | 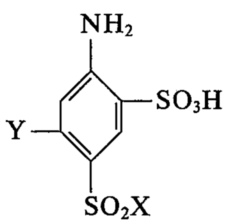 | F | $N(CH_3)_2$ | 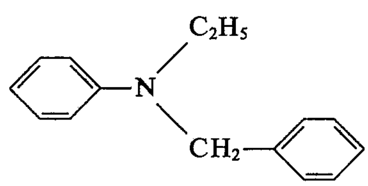 | scharlach |
| 7 | 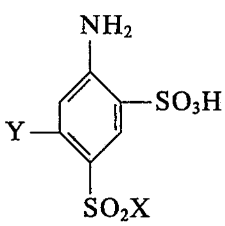 | $CH_3$ | $N(CH_3)_2$ | 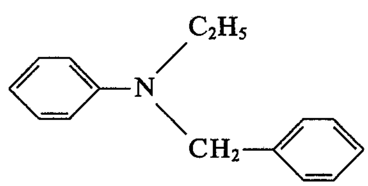 | scharlach |
| 8 | 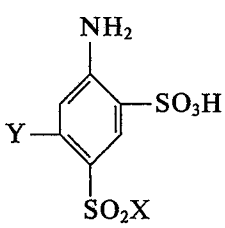 | $OCH_3$ | $N(CH_3)_2$ | 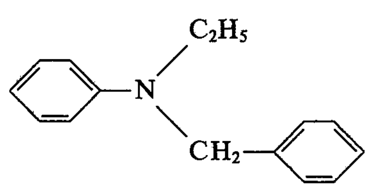 | scharlach |

(Fortsetzung)

| Nr. | Diazokomponente | Y | X | Kupplungskomponente | Nuance |
|---|---|---|---|---|---|
| 9 | 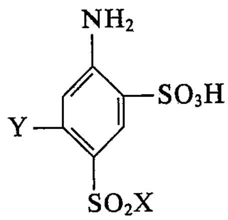 | Br | $N(CH_3)_2$ | 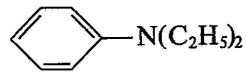 | gelb-stichigrot |
| 10 | 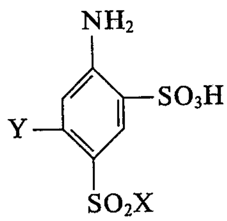 | F | $N(CH_3)_2$ | 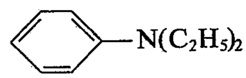 | gelb-stichigrot |
| 11 | 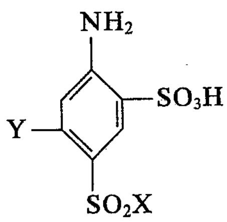 | $CH_3$ | $N(CH_3)_2$ | 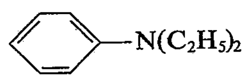 | gelb-stichigrot |
| 12 | 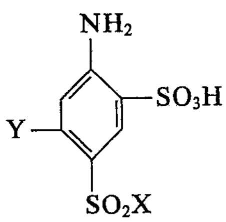 | $OCH_3$ | $N(CH_3)_2$ | 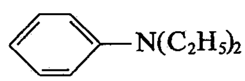 | gelb-stichigrot |
| 13 | 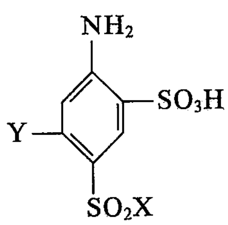 | Br | $N(CH_3)_2$ | 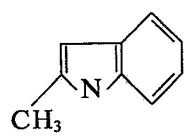 | gelb |
| 14 | 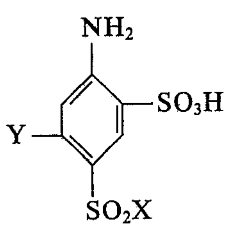 | F | $N(CH_3)_2$ | 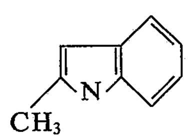 | gelb |
| 15 | 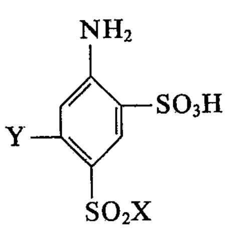 | $CH_3$ | $N(CH_3)_2$ | 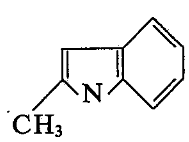 | gelb |

(Fortsetzung)

| Nr. | Diazokomponente | Y | X | Kupplungskomponente | Nuance |
|---|---|---|---|---|---|
| 16 | 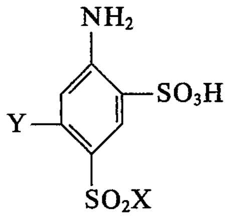 | $OCH_3$ | $N(CH_3)_2$ | 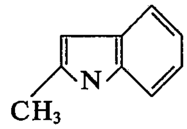 | gelb |
| 17 | 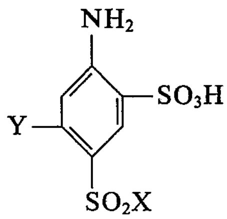 | Br | $N(CH_3)_2$ | 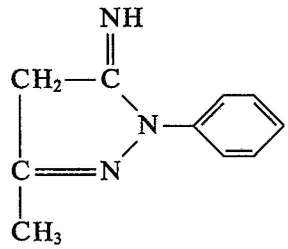 | grün-stichig-gelb |
| 18 | 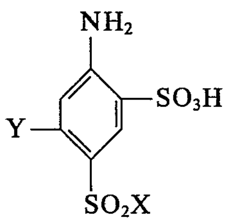 | F | $N(CH_3)_2$ | 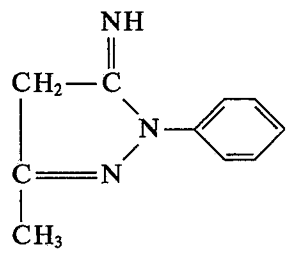 | grün-stichig-gelb |
| 19 | 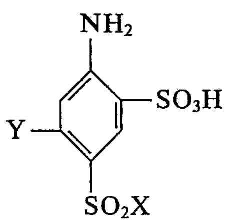 | $CH_3$ | $N(CH_3)_2$ | 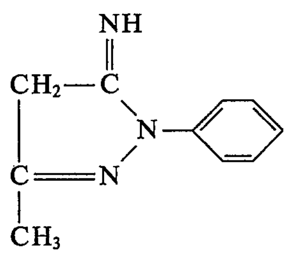 | grün-stichig-gelb |
| 20 | 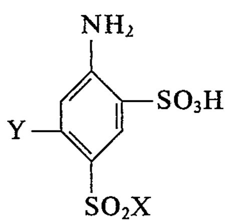 | $OCH_3$ | $N(CH_3)_2$ | 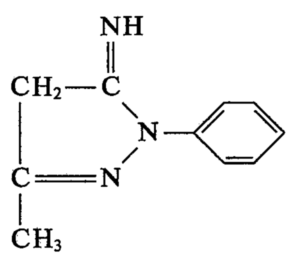 | grün-stichig-gelb |
| 21 | 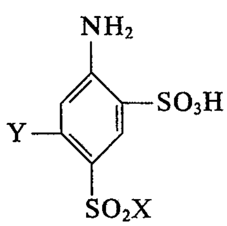 | Br | $N(CH_3)_2$ | 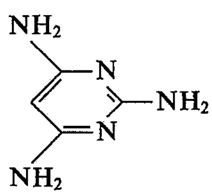 | grün-stichig-gelb |
| 22 | 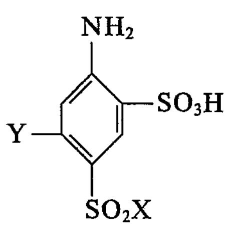 | F | $N(CH_3)_2$ | 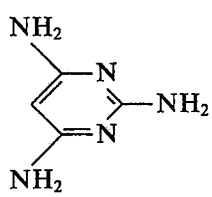 | grün-stichig-gelb |

(Fortsetzung)

| Nr. | Diazokomponente | Y | X | Kupplungskomponente | Nuance |
|---|---|---|---|---|---|
| 23 | 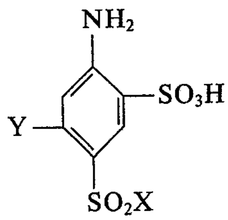 | $CH_3$ | $N(CH_3)_2$ | 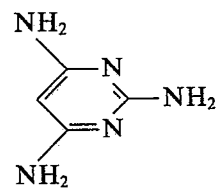 | grün-stichig-gelb |
| 24 | 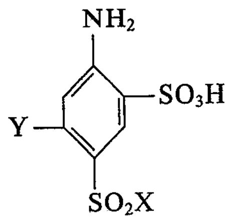 | $OCH_3$ | $N(CH_3)_2$ | 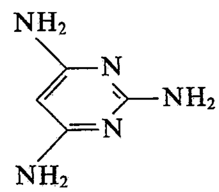 | grün-stichig-gelb |
| 25 | 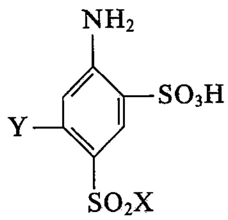 | Br | $N(CH_3)_2$ | 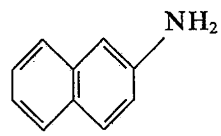 | blau-stichigrot |
| 26 | 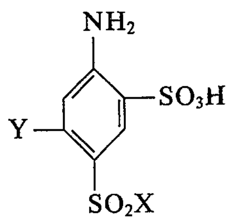 | F | $N(CH_3)_2$ | 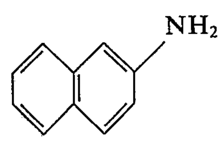 | blau-stichigrot |
| 27 | 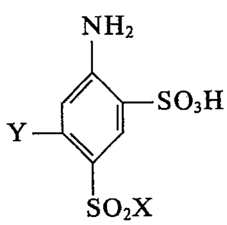 | $CH_3$ | $N(CH_3)_2$ | 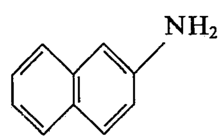 | blau-stichigrot |
| 28 | 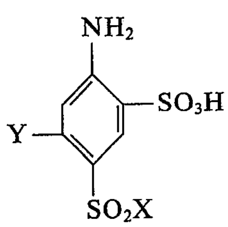 | $OCH_3$ | $N(CH_3)_2$ | 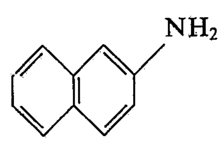 | blau-stichigrot |
| 29 | 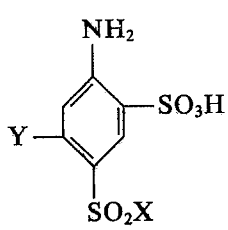 | $CH_3$ | $NH_2$ | 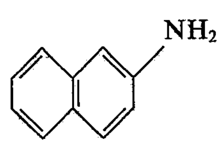 | blau-stichigrot |

(Fortsetzung)

| Nr. | Diazokomponente | Y | X | Kupplungskomponente | Nuance |
|---|---|---|---|---|---|
| 30 | 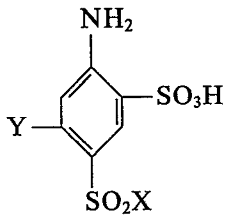 | $OCH_3$ | $NH_2$ | 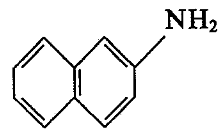 | blau-stichigrot |
| 31 | 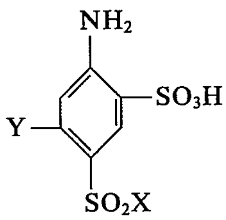 | $CH_3$ | $NH_2$ | 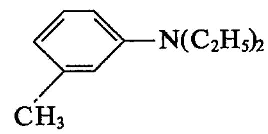 | rot |
| 32 | 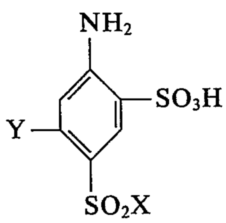 | $OCH_3$ | $NH_2$ | 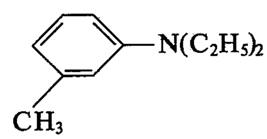 | rot |
| 33 | 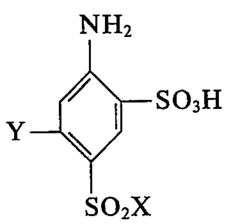 | $CH_3$ | $NH_2$ | 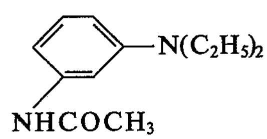 | rot |
| 34 | 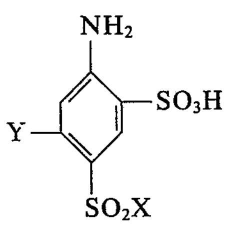 | $OCH_3$ | $NH_2$ | 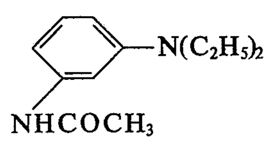 | rot |
| 35 | 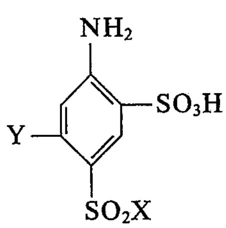 | $CH_3$ | $NH_2$ | 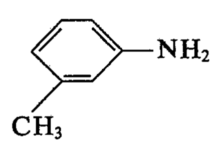 | orange |
| 36 | 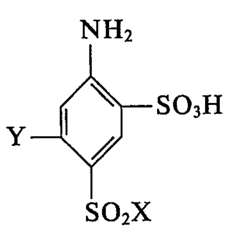 | $OCH_3$ | $NH_2$ | 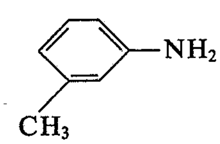 | orange |

(Fortsetzung)

| Nr. | Diazokomponente | Y | X | Kupplungskomponente | Nuance |
|---|---|---|---|---|---|
| 37 | 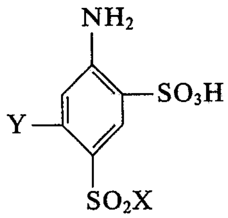 | $CH_3$ | $NH_2$ | 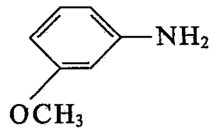 | orange |
| 38 | 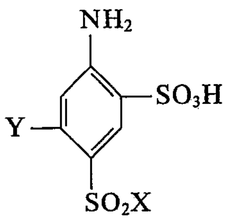 | $OCH_3$ | $NH_2$ | 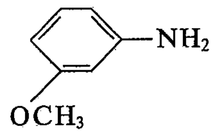 | orange |
| 39 | 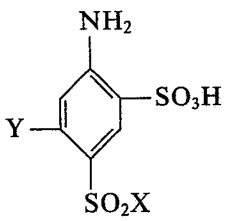 | Cl | 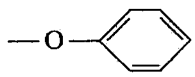 | 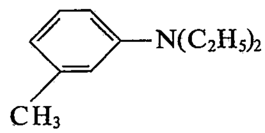 | blau-stichigrot |
| 40 | 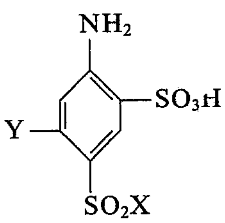 | Br | 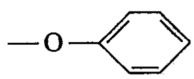 | 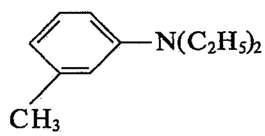 | blau-stichigrot |
| 41 | 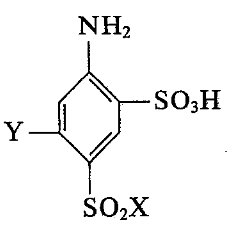 | F | 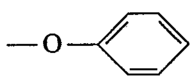 | 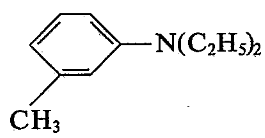 | blau-stichigrot |
| 42 | 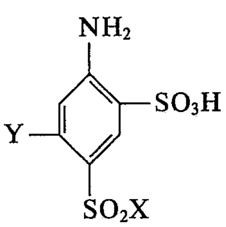 | $CH_3$ | 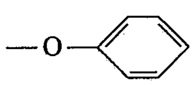 | 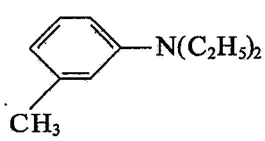 | blau-stichigrot |
| 43 | 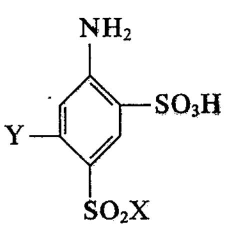 | $OCH_3$ | 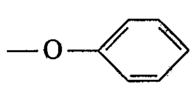 | 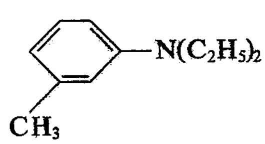 | blau-stichigrot |

(Fortsetzung)

| Nr. | Diazokomponente | Y | X | Kupplungskomponente | Nuance |
|---|---|---|---|---|---|
| 44 | 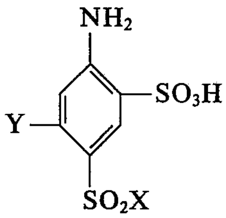 | Cl | 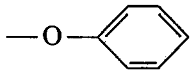 | 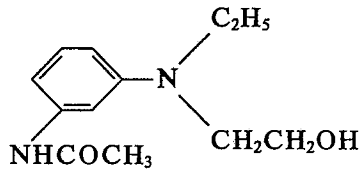 | blau-stichigrot |
| 45 | 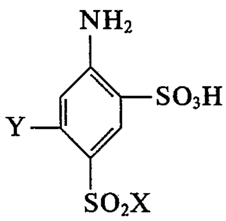 | Br | 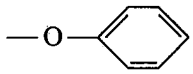 | 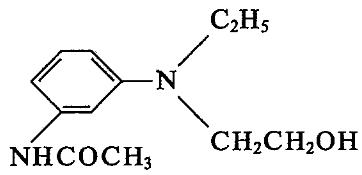 | blau-stichigrot |
| 46 | 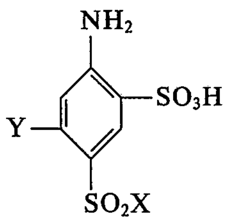 | F | 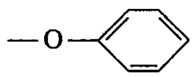 | 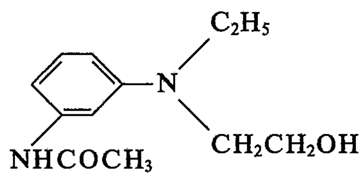 | blau-stichigrot |
| 47 | 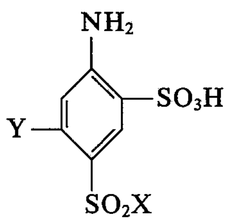 | $CH_3$ | 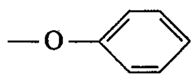 | 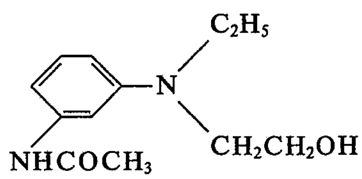 | blau-stichigrot |
| 48 | 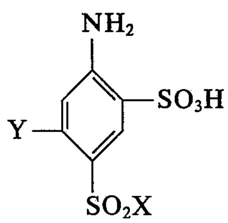 | $OCH_3$ | 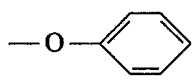 | 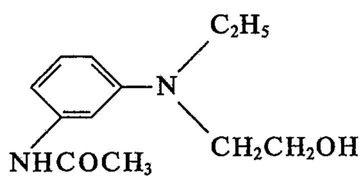 | blau-stichigrot |
| 49 | 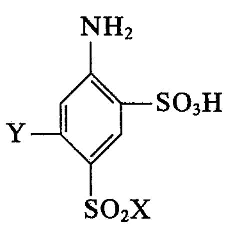 | Cl | 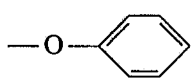 | 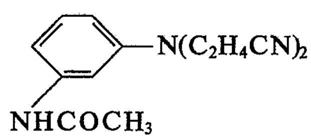 | orange |
| 50 | 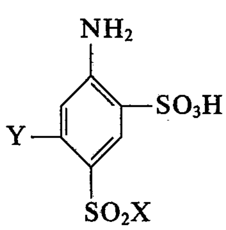 | Br | 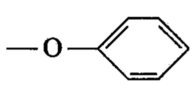 | 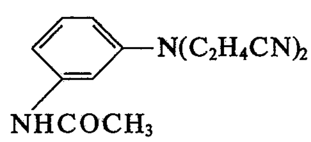 | orange |

(Fortsetzung)

| Nr. | Diazokomponente | Y | X | Kupplungskomponente | Nuance |
|---|---|---|---|---|---|
| 51 | 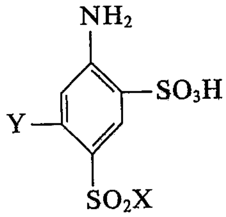 | F | 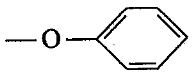 | 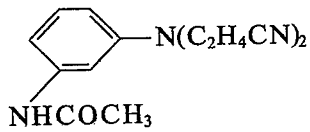 | orange |
| 52 | 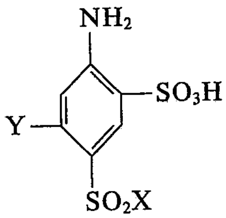 | $CH_3$ | 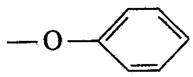 | 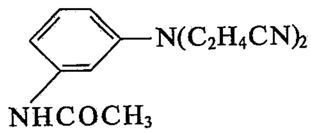 | orange |
| 53 | 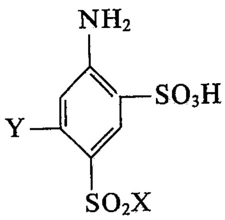 | $OCH_3$ | 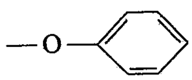 | 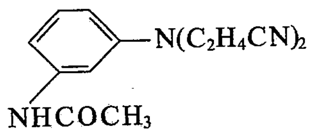 | orange |
| 54 | 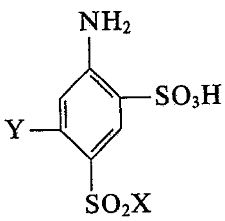 | Cl | 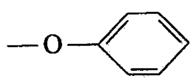 | 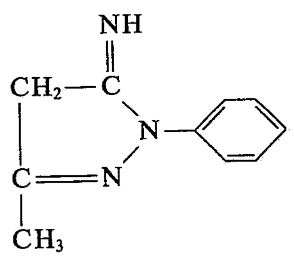 | grün-stichig-gelb |
| 55 | 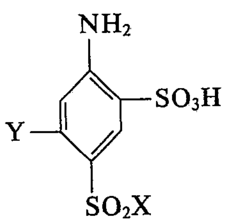 | Br | 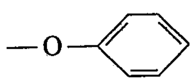 | 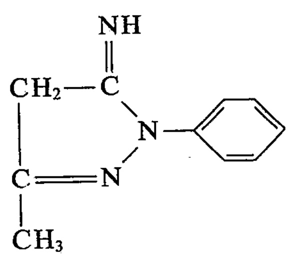 | grün-stichig-gelb |
| 56 | 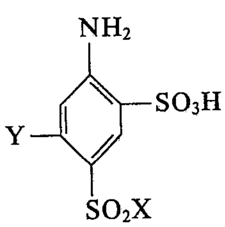 | F | 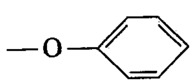 | 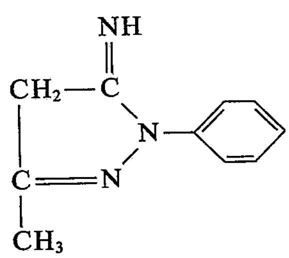 | grün-stichig-gelb |
| 57 | 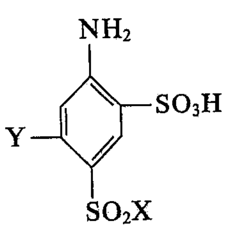 | $CH_3$ | 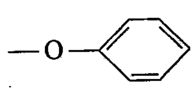 | 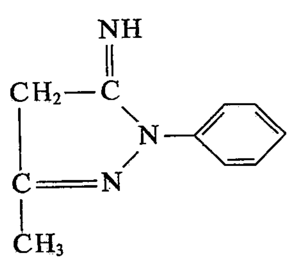 | grün-stichig-gelb |

(Fortsetzung)

| Nr. | Diazokomponente | Y | X | Kupplungskomponente | Nuance |
|---|---|---|---|---|---|
| 58 | 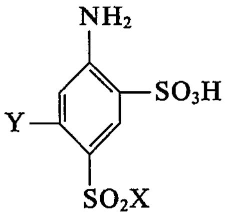 | $OCH_3$ | 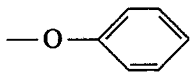 | 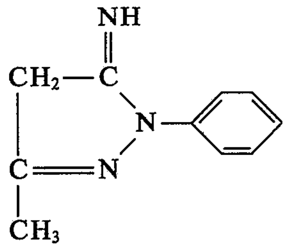 | grün-stichig-gelb |
| 59 | 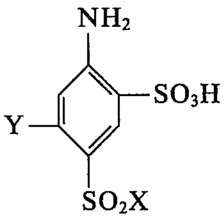 | Cl | 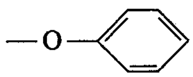 | 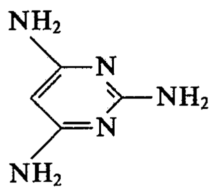 | grün-stichig-gelb |
| 60 | 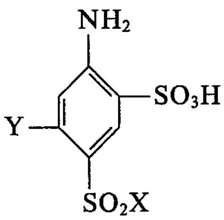 | Br | 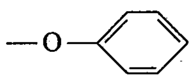 | 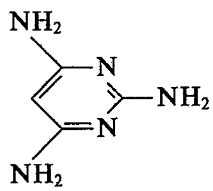 | grün-stichig-gelb |
| 61 | 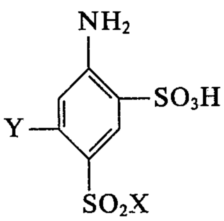 | F | 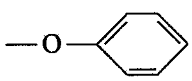 | 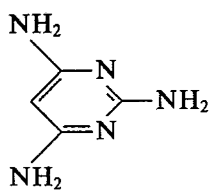 | grün-stichig-gelb |
| 62 | 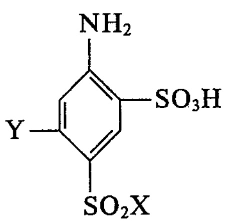 | $CH_3$ | 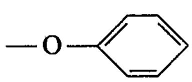 | 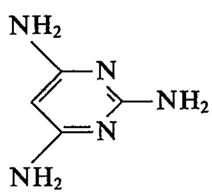 | grün-stichig-gelb |
| 63 | 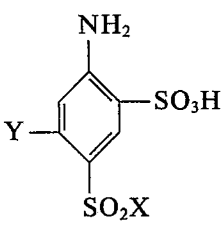 | $OCH_3$ | 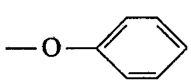 | 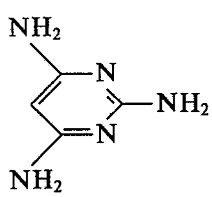 | grün-stichig-gelb |
| 64 | 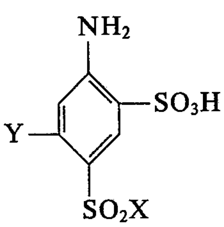 | Cl | 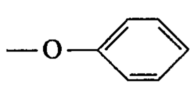 | 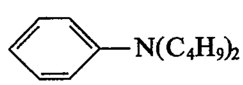 | blau-stichigrot |

(Fortsetzung)

| Nr. | Diazokomponente | Y | X | Kupplungskomponente | Nuance |
|---|---|---|---|---|---|
| 65 | 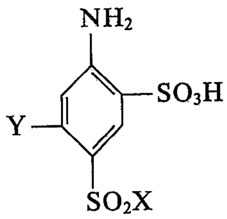 | Br | 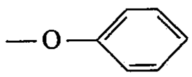 | 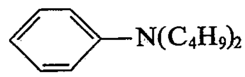 | blau-stichigrot |
| 66 | 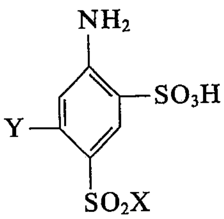 | F | 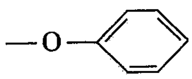 | 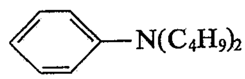 | blau-stichigrot |
| 67 | 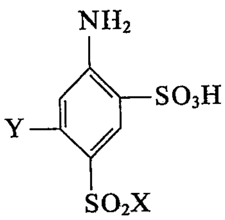 | $CH_3$ | 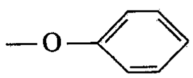 | 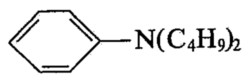 | blau-stichigrot |
| 68 | 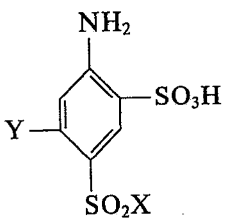 | $OCH_3$ | 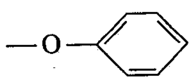 | 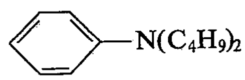 | blau-stichigrot |
| 69 | 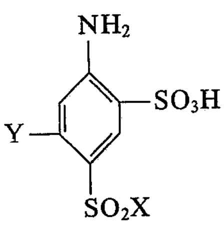 | $OCH_3$ | 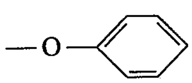 | 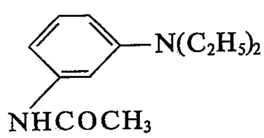 | blau-stichigrot |
| 70 | 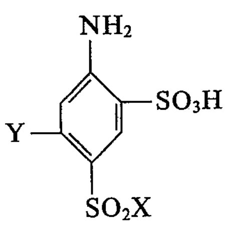 | F | 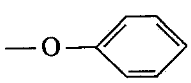 | 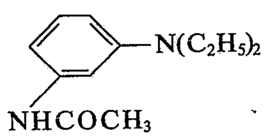 | grün-stichig-gelb |
| 71 | 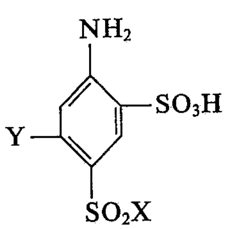 | Cl | 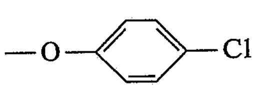 | 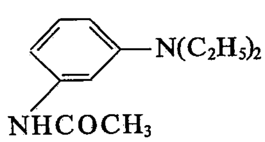 | grün-stichig-gelb |

(Fortsetzung)

| Nr. | Diazokomponente | Y | X | Kupplungskomponente | Nuance |
|---|---|---|---|---|---|
| 72 | 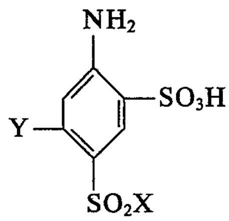 | $CH_3$ | 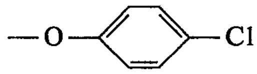 | 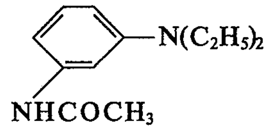 | grün-stichig-gelb |
| 73 | 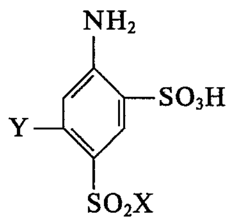 | Cl | 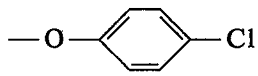 | 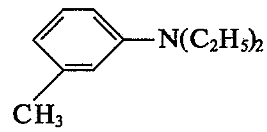 | grün-stichig-gelb |
| 74 | 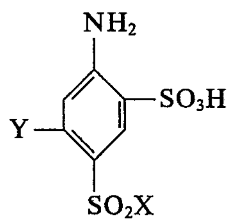 | F | 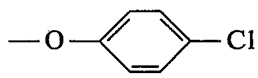 | 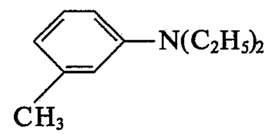 | grün-stichig-gelb |
| 75 | 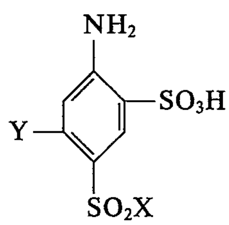 | $CH_3$ | 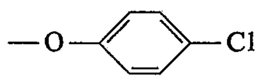 | 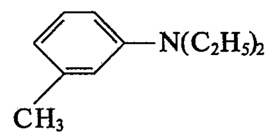 | grün-stichig-gelb |
| 76 | 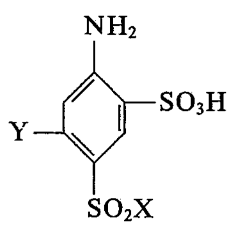 | Cl | 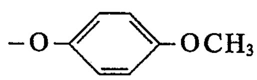 | 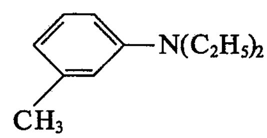 | grün-stichig-gelb |
| 77 | 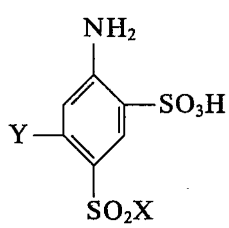 | Br | 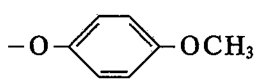 | 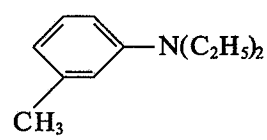 | grün-stichig-gelb |
| 78 | 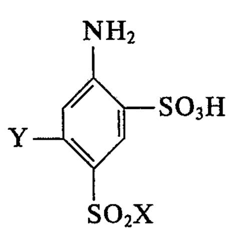 | F | 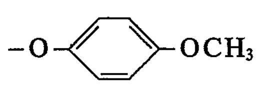 | 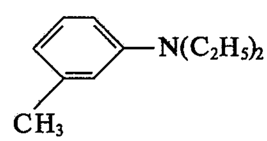 | grün-stichig-gelb |

(Fortsetzung)

| Nr. | Diazokomponente | Y | X | Kupplungskomponente | Nuance |
|---|---|---|---|---|---|
| 79 | 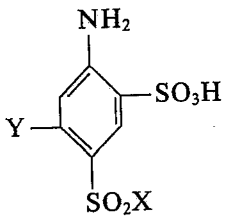 | $CH_3$ | 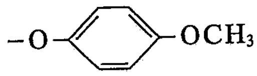 | 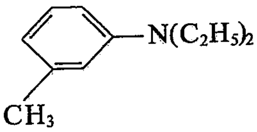 | grün-stichig-gelb |
| 80 | 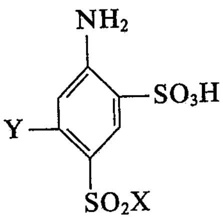 | $OCH_3$ | 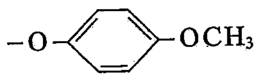 | 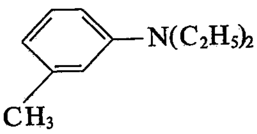 | grün-stichig-gelb |
| 81 | 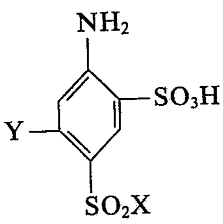 | Cl | 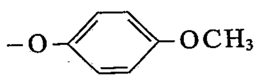 | 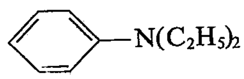 | blau-stichigrot |
| 82 | 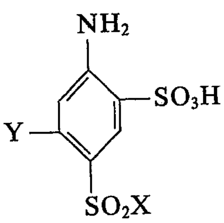 | F | 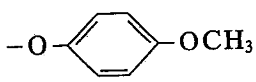 | 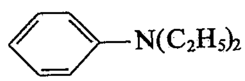 | blau-stichigrot |
| 83 | 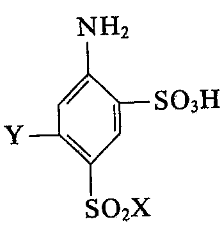 | $CH_3$ | 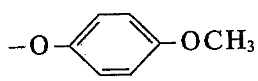 | 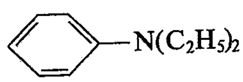 | blau-stichigrot |
| 84 | 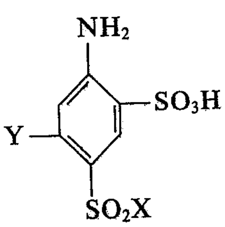 | Cl | 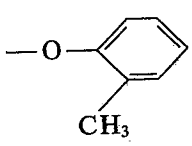 | 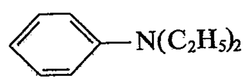 | blau-stichigrot |
| 85 | 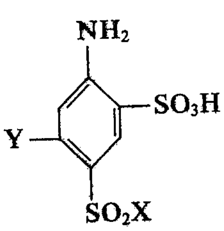 | $CH_3$ | 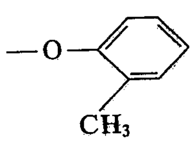 | 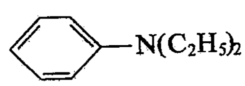 | blau-stichigrot |

(Fortsetzung)

| Nr. | Diazokomponente | Y | X | Kupplungskomponente | Nuance |
|---|---|---|---|---|---|
| 86 | 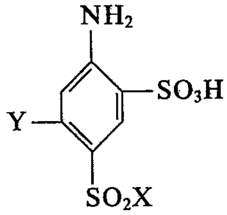 | $CH_3$ | 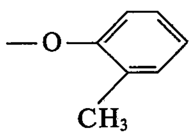 | 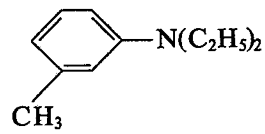 | blau-stichigrot |
| 87 | 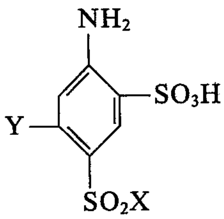 | $CH_3$ | 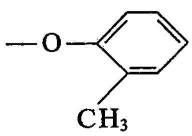 | 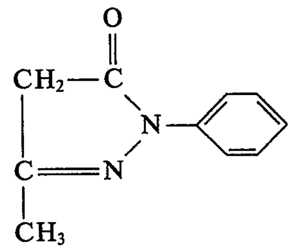 | gelb |
| 88 | 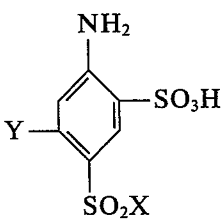 | Cl | 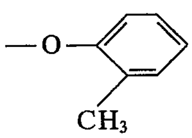 | 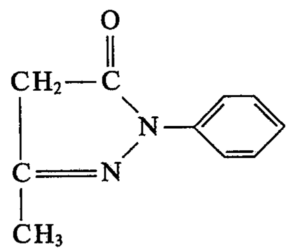 | gelb |
| 89 | 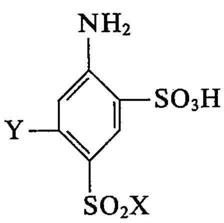 | Cl | 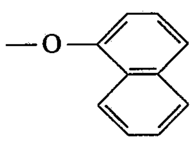 | 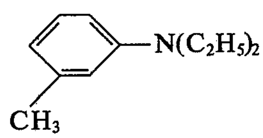 | blau-stichigrot |
| 90 | 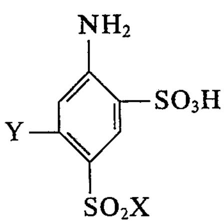 | $CH_3$ | 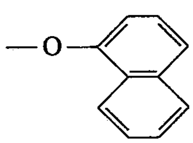 | 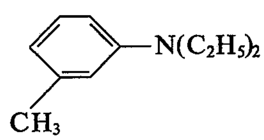 | blau-stichigrot |
| 91 | 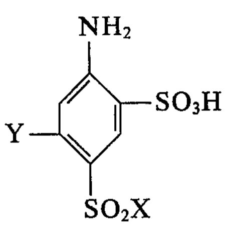 | $CH_3$ | 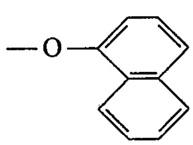 | 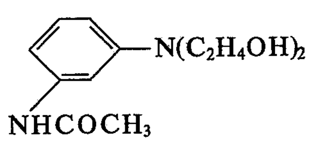 | blau-stichigrot |
| 92 | 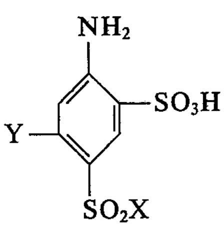 | Cl | 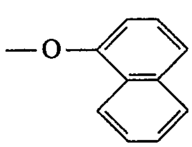 | 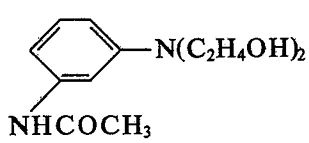 | blau-stichigrot |

(Fortsetzung)

| Nr. | Diazokomponente | Y | X | Kupplungskomponente | Nuance |
|---|---|---|---|---|---|
| 93 | 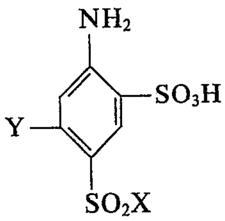 | Cl | 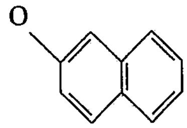 | 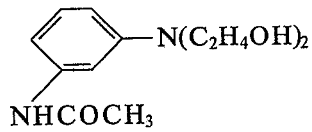 | blau-stichigrot |
| 94 | 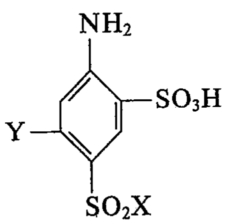 | Cl | 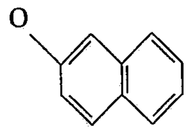 | 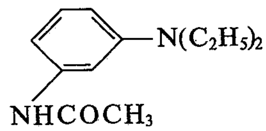 | blau-stichigrot |
| 95 | 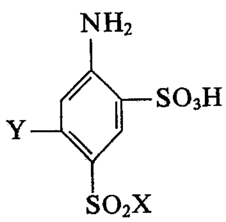 | $CH_3$ | 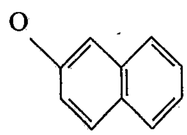 | 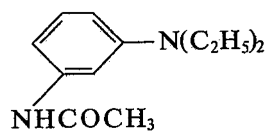 | blau-stichigrot |
| 96 | 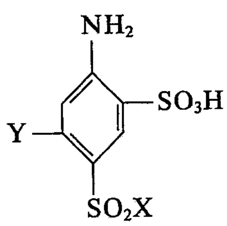 | $CH_3$ | 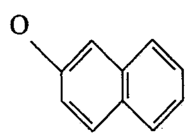 | 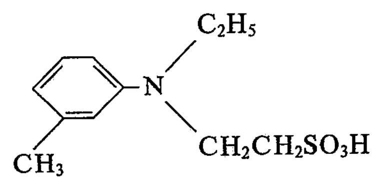 | blau-stichigrot |
| 97 | 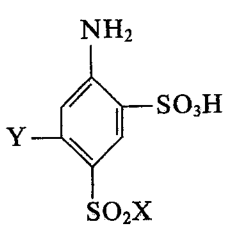 | Cl | 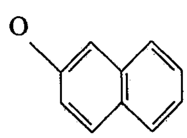 | 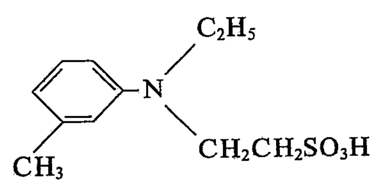 | blau-stichigrot |
| 98 | 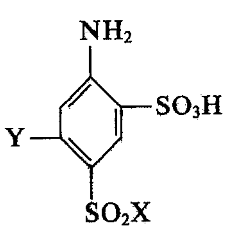 | Cl | 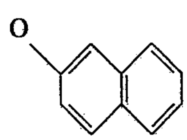 | 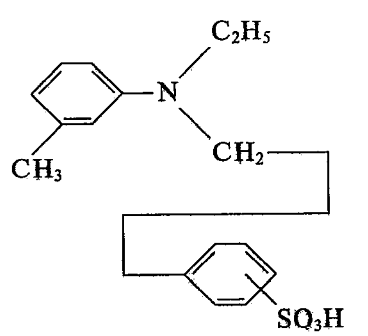 | blau-stichigrot |

(Fortsetzung)

| Nr. | Diazokomponente | Y | X | Kupplungskomponente | Nuance |
|---|---|---|---|---|---|
| 99 | 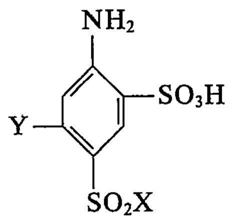 | Cl | 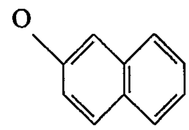 | 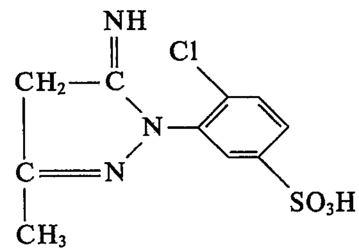 | gelb |
| 100 | 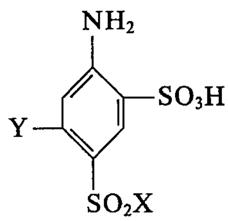 | $CH_3$ | 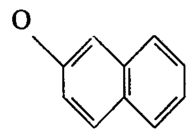 | 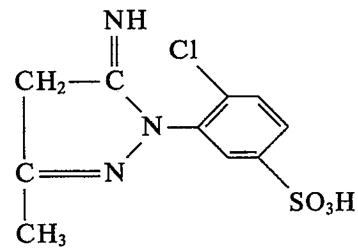 | gelb |
| 101 | 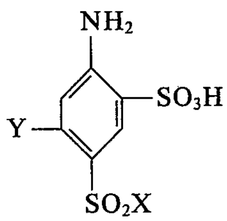 | Cl | $CH_3$ | 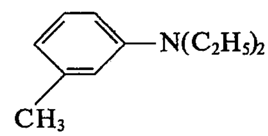 | rot |
| 102 | 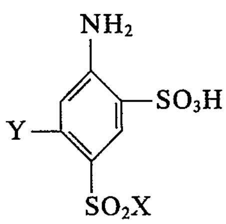 | $CH_3$ | $CH_3$ | 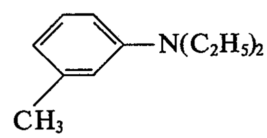 | rot |
| 103 | 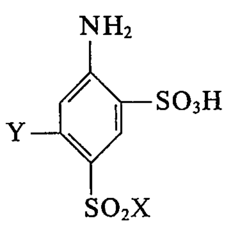 | F | $CH_3$ | 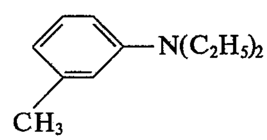 | rot |
| 104 | 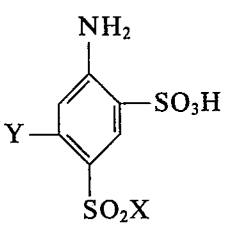 | Cl | $C_2H_5$ | 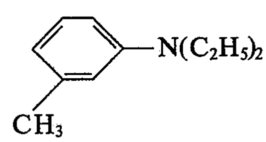 | rot |
| 105 | 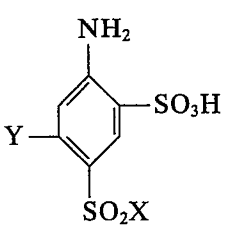 | Br | $C_2H_5$ | 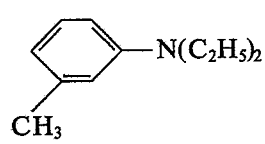 | rot |

(Fortsetzung)

| Nr. | Diazokomponente | Y | X | Kupplungskomponente | Nuance |
|---|---|---|---|---|---|
| 106 | 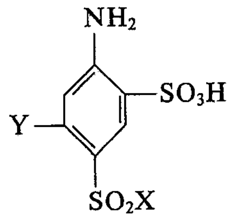 | $OCH_3$ | $C_2H_5$ | 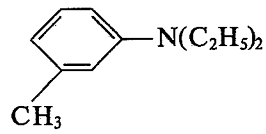 | rot |
| 107 | 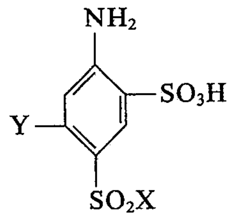 | Cl | $C_2H_5$ | 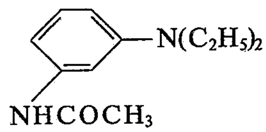 | rot |
| 108 | 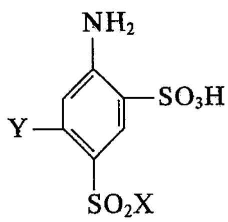 | Cl | $CH_2CH_2OH$ | 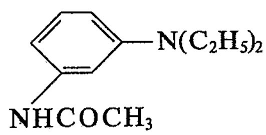 | rot |
| 109 | 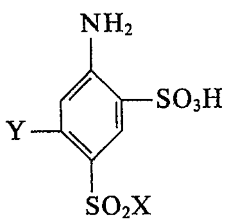 | $CH_3$ | $CH_2CH_2OH$ | 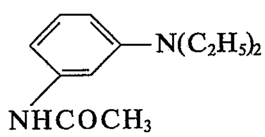 | rot |
| 110 | 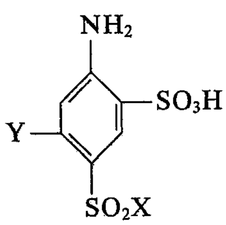 | Cl | $CH_2CH_2OH$ | 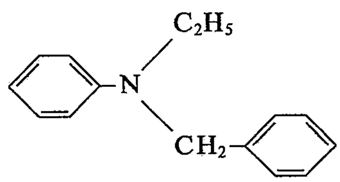 | gelb-stichigrot |
| 111 | 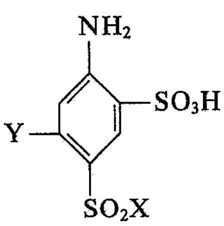 | $CH_3$ | $CH_2CH_2OH$ | 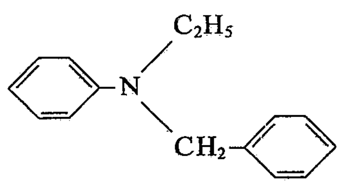 | gelb-stichigrot |
| 112 | 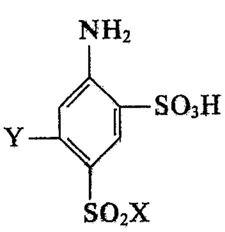 | Cl | 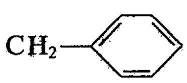 | 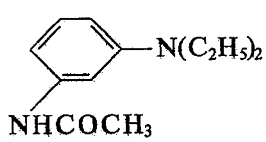 | rot |

(Fortsetzung)

| Nr. | Diazokomponente | Y | X | Kupplungskomponente | Nuance |
|---|---|---|---|---|---|
| 113 | 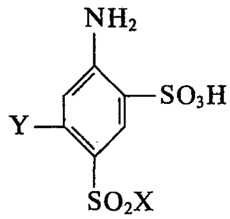 | $CH_3$ | 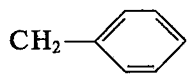 | 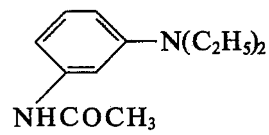 | rot |
| 114 | 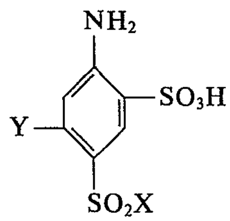 | Cl | 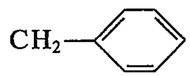 | 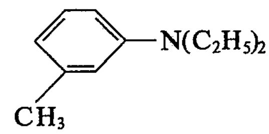 | rot |
| 115 | 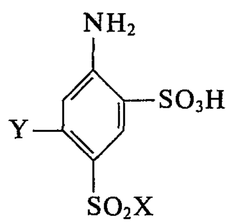 | $CH_3$ | $N(CH_3)_2$ | 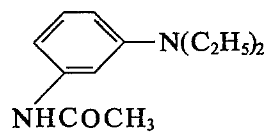 | rot |

Beispiel 15

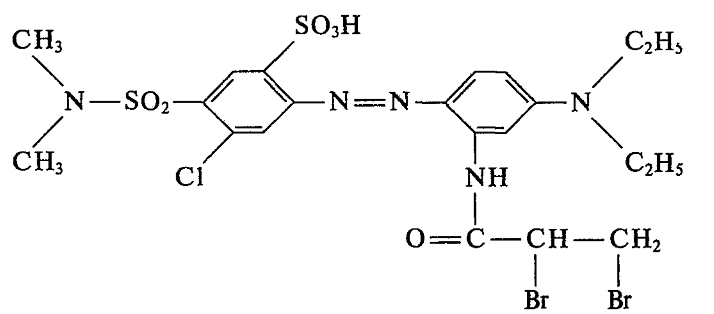

0,01 Mol 5-Chloranilin-4-dimethylsulfamid-2-Sulfosäure werden wie in Beispiel 6 diazotiert.

Kupplung

3,78 Teile 0,01 Mol 3-($\alpha$,$\beta$-Dibrompropionylamino)-N,N-diäthylanilin werden in 100 Teilen Wasser von 25° unter Zusatz von 1,5 Vol.-Teilen konzentrierter Salzsäure suspendiert. Die obengenannte Diazoniumsalz-Suspension wird innert 2 Std. portionsweise zugegeben und das Gemisch bei 25° während 12 Std. gerührt, die Kupplung ist dann vollständig und der Farbstoff praktisch vollständig ausgefallen. Der Farbstoff wird abfiltriert, mit 50 Teilen Wasser gewaschen und im Vakuum bei 60° getrocknet. Man erhält 6,3 Teile eines braunen Pulvers.

Zur Herstellung der Färbeflotte wird das Farbstoffpulver in Wasser suspendiert und durch Zusatz von 10%-iger Sodalösung in Lösung gebracht, wobei der pH-Wert der Lösung unter 7,5 gehalten wird. Auf synthetischem Polyamid wird eine rote Färbung erhalten, die sich durch hohe Licht-, Wasch- und Formaldehydechtheiten auszeichnet.

Wenn man wie im obigen Beispiel verfährt, jedoch als Diazokomponente und als Kupplungskomponente die in der folgenden Tabelle aufgeführten Verbindungen einsetzt, so erhält man ebenfalls wertvolle reaktive Farbstoffe die Wolle bzw. synthetisches Polyamid in orangen bis blaustichig-roten Tönen mit ähnlich guten Echtheiten färben.

**Tabelle III**

| Nr. | Diazokomponente | Kupplungskomponente | Farbton auf Wolle | Farbton auf Polyamid |
|---|---|---|---|---|
| 1 | 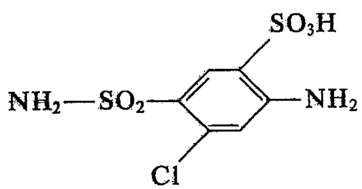 | 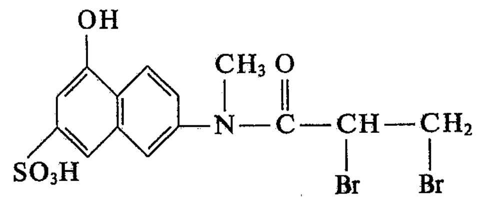 | rotstichigblau | |
| 2 | 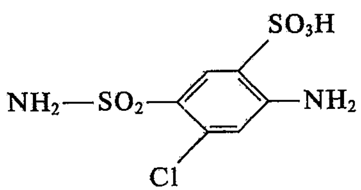 | 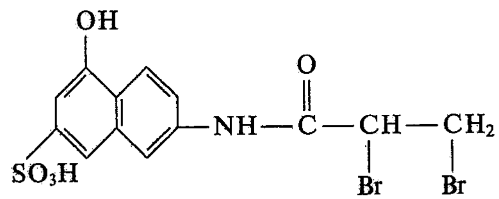 | scharlach | |
| 3 | 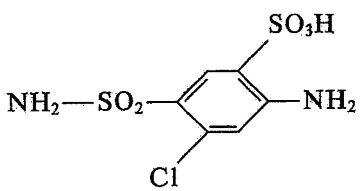 | 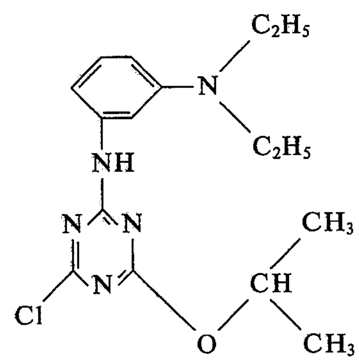 | | blaustichigrot |

(Fortsetzung)

| Nr. | Diazokomponente | Kupplungskomponente | Farbton auf Wolle | Farbton auf Polyamid |
|---|---|---|---|---|
| 4 | 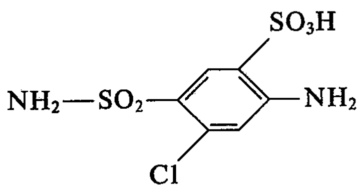 | 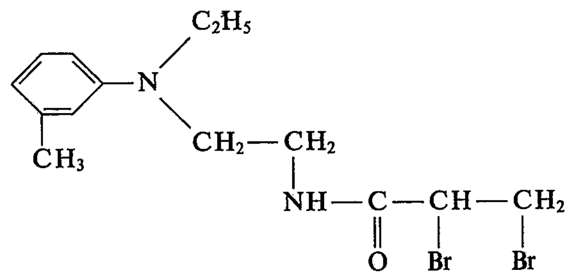 | | rot |
| 5 | 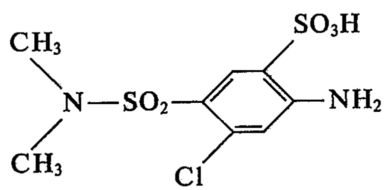 | 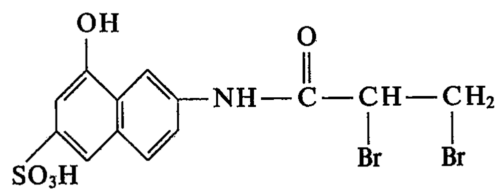 | scharlach | |
| 6 | 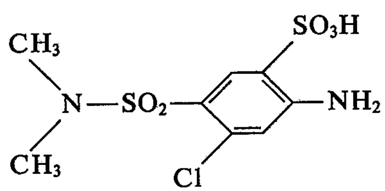 | 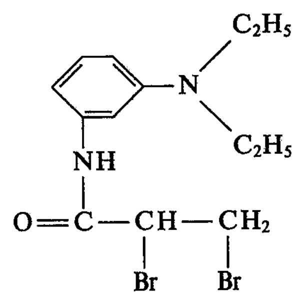 | | rot |

(Fortsetzung)

| Nr. | Diazokomponente | Kupplungskomponente | Farbton auf Wolle | Farbton auf Polyamid |
|---|---|---|---|---|
| 7 | 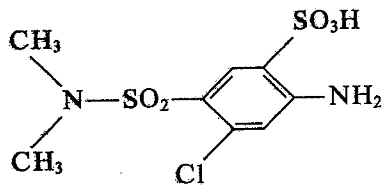 | 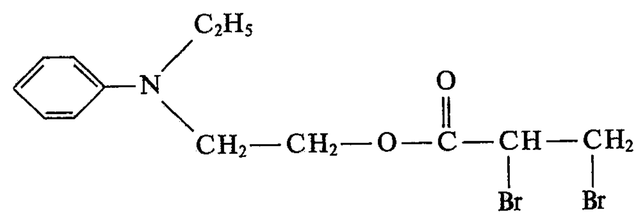 | | gelbstichigrot |
| 8 | 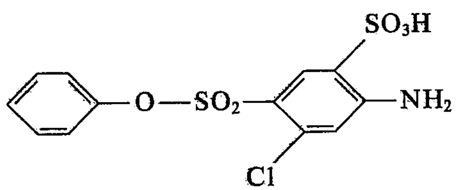 | 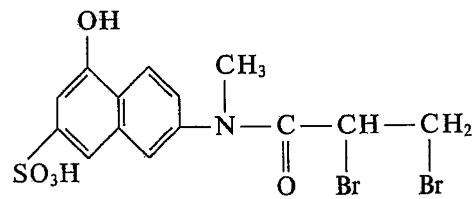 | scharlach | |
| 9 | 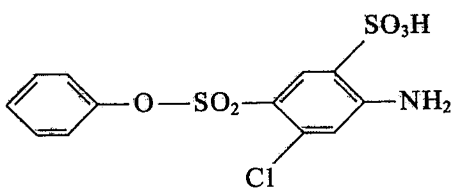 | 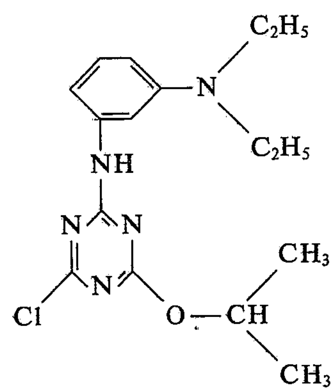 | | blaustichigrot |

(Fortsetzung)

| Nr. | Diazokomponente | Kupplungskomponente | Farbton auf Wolle | Farbton auf Polyamid |
|---|---|---|---|---|
| 10 | 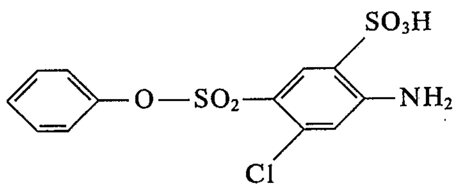 | 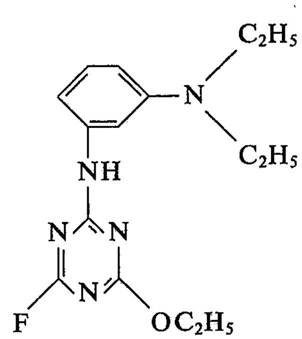 | | blaustichigrot |
| 11 | 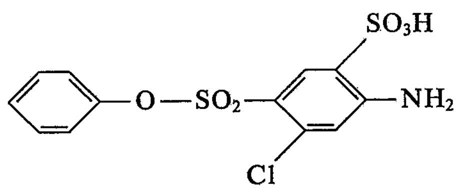 | 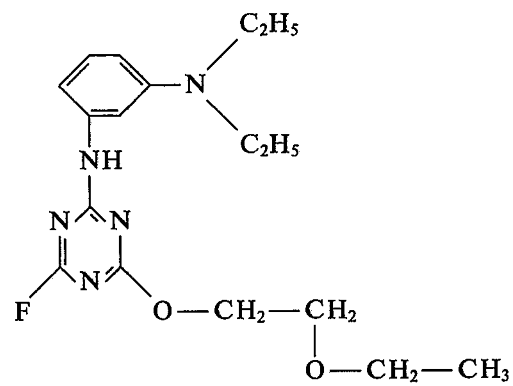 | | blaustichigrot |
| 12 | 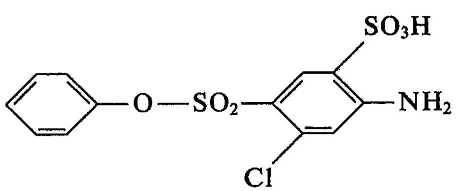 | 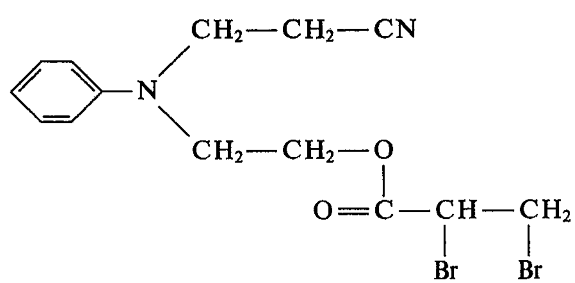 | | scharlach |

(Fortsetzung)

| Nr. | Diazokomponente | Kupplungskomponente | Farbton auf Wolle | Farbton auf Polyamid |
|---|---|---|---|---|
| 13 | 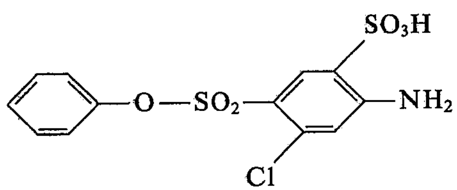 | 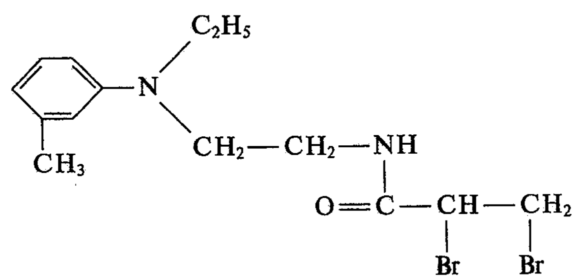 | | blaustichigrot |
| 14 | 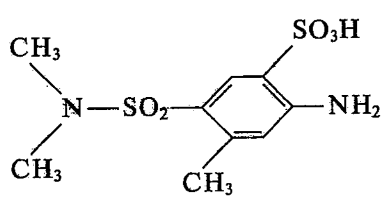 | 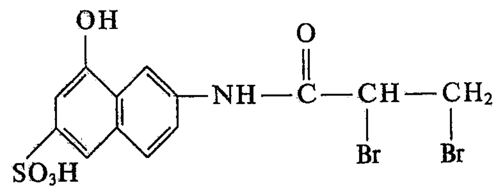 | gelbstichigrot | |
| 15 | 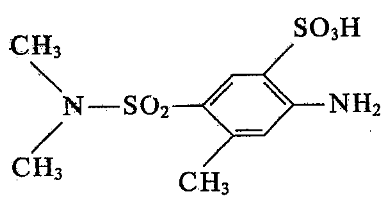 | 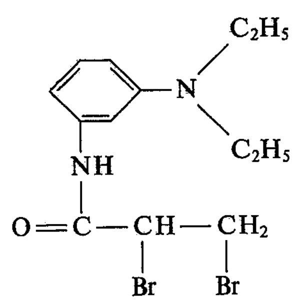 | | gelbstichigrot |

(Fortsetzung)

| Nr. | Diazokomponente | Kupplungskomponente | Farbton auf Wolle | Farbton auf Polyamid |
|---|---|---|---|---|
| 16 | 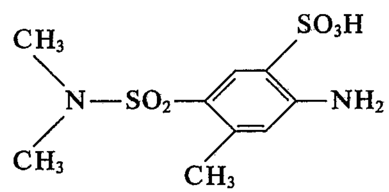 | 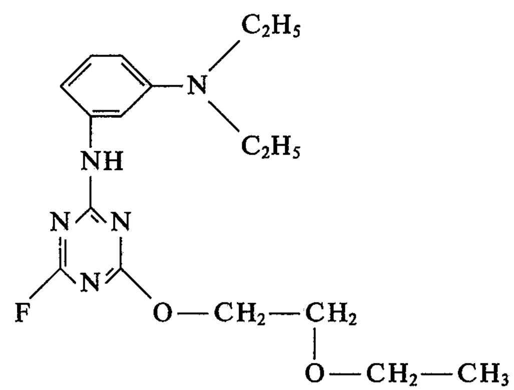 | | rot |
| 17 | 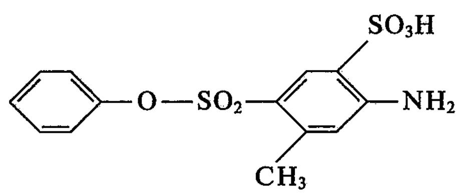 | 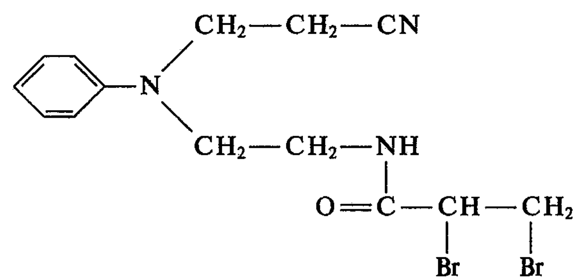 | | scharlach |
| 18 | 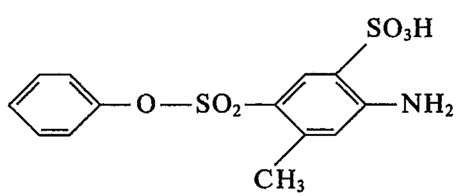 | 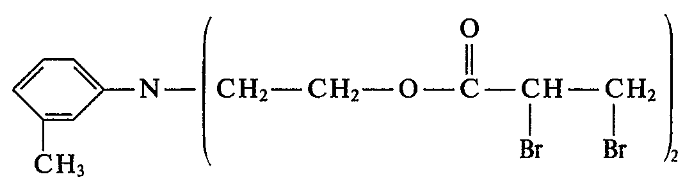 | | gelbstichigrot |

(Fortsetzung)

| Nr. | Diazokomponente | Kupplungskomponente | Farbton auf Wolle | Polyamid |
|---|---|---|---|---|
| 19 | 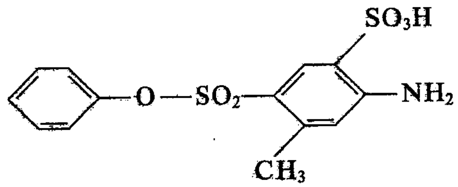 | 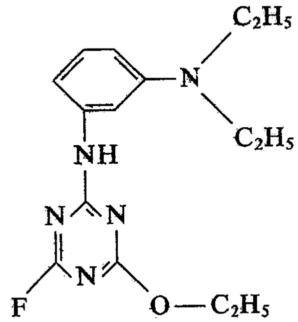 | | rot |
| 20 | 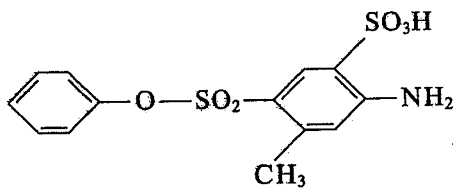 | 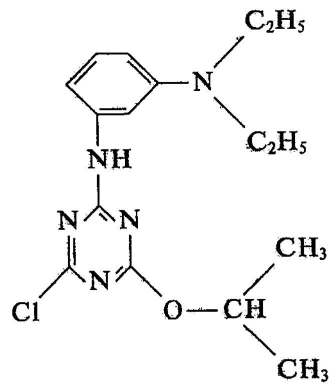 | | rot |
| 21 | 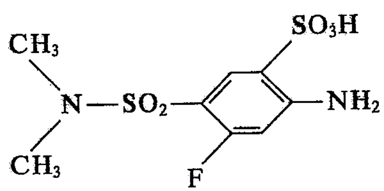 | 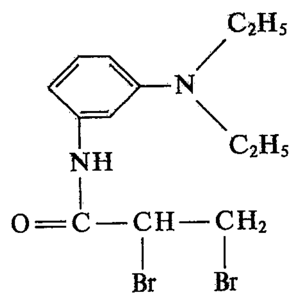 | | rot |

(Fortsetzung)

| Nr. | Diazokomponente | Kupplungskomponente | Farbton auf Wolle | Farbton auf Polyamid |
|---|---|---|---|---|
| 22 | 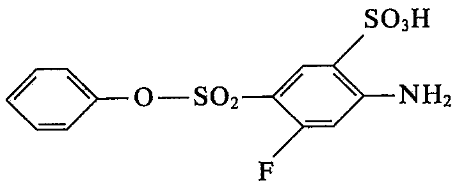 | 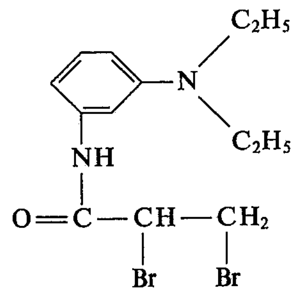 | | blaustichigrot |
| 23 | 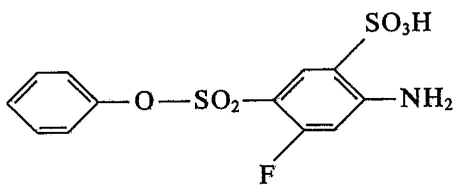 | 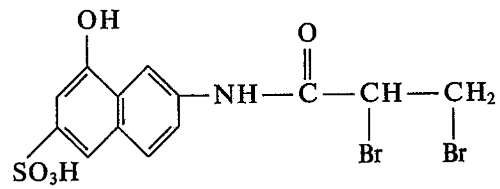 | rot | |
| 24 | 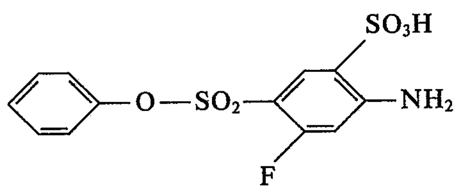 | 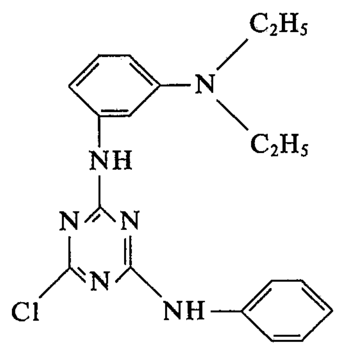 | | blaustichigrot |

(Fortsetzung)

| Nr. | Diazokomponente | Kupplungskomponente | Farbton auf Wolle | Farbton auf Polyamid |
|---|---|---|---|---|
| 25 | 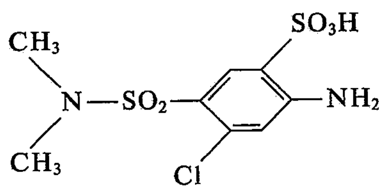 | 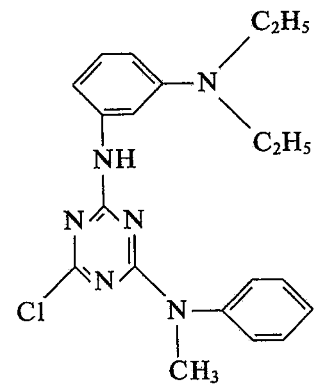 | | rot |
| 26 | 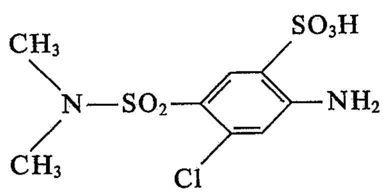 | 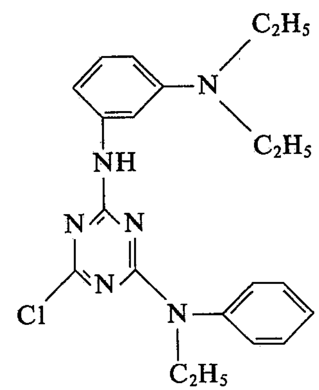 | | rot |

## Färbevorschrift I

Man färbt 10 Teile Helancatrikot in 500 Teilen einer wässerigen Flotte, die 2 g/l Ammonacetat enthält und mit Essigsäure auf pH 5 gestellt wird. Der Anteil des Farbstoffes gemäß Beispiel 1 beträgt 2% bezogen auf das Fasergewicht. Die Färbedauer bei einer Temperatur von 98° beträgt 30 bis 90 Minuten. Das gefärbte Helancastück wird anschließend herausgenommen und wie üblich gewaschen und getrocknet.

Man erhält ein rot gefärbtes Helancastück, das eine reine Nuance und gute Gesamtechtheiten aufweist.

## Färbevorschrift II

Man färbt 10 Teile Helancatrikot in 500 Teilen einer wässerigen Flotte, die 1 g/l Mononatriumphosphat enthält und mit Dinatriumphosphat auf pH 6 gestellt wird. Der Anteil des Farbstoffes gemäß Beispiel 3 beträgt 2%, bezogen auf das Fasergewicht. Die Färbedauer bei einer Temperatur von 98° beträgt 30 bis 90 Minuten. Das gefärbte Helancastück wird anschließend herausgenommen und wie üblich gewaschen und getrocknet.

Man erhält ein rot gefärbtes Helancastück, das eine reine Nuance und gute Gesamtechtheiten aufweist.

## Färbevorschrift III

Man färbt 10 Teile eines Wollstückes in 500 Teilen einer wässerigen Flotte, enthaltend, bezogen auf das Fasergewicht, 4 Gewichtsprozent Ammonsulfat, 1,5 Gewichtsprozent 80%ige Essigsäure, 1 Gewichtsprozent eines substituierten Alkylaminopolyglykoläthers und 3 Gewichtsprozent des Farbstoffes gemäß Beispiel 4, bei einer Temperatur von 98° während 30 bis 90 Minuten. Anschließend kühlt man auf 80° ab, neutralisiert durch Zugabe von 2,5 Gewichtsprozent 25%igem wäßrigem Ammoniak und stellt während 15 Minuten bei dieser Temperatur fertig. Das gefärbte Wollstück wird anschließend herausgenommen und wie üblich gewaschen und getrocknet.

Man erhält ein rot gefärbtes Wollstück, das eine reine Nuance und gute Gesamtechtheiten aufweist.

## Färbevorschrift IV

3 Teile des gemäß Beispiel 5 erhaltenen Farbstoffes werden unter Zusatz von 1 Teil m-nitrobenzolsulfonsaurem Natrium in 100 Teilen Wasser gelöst. Mit der erhaltenen Lösung wird ein Baumwollgewebe imprägniert, so daß es um 75% seines Gewichtes zunimmt, und dann getrocknet.

Danach imprägniert man das Gewebe mit einer 20° warmen Lösung, die pro Liter 10 ml einer wäßrigen 30%igen Natriumhydroxydlösung und 250 Teile Natriumchlorid enthält, quetscht auf 75% Gewichtszunahme ab, dämpft die Färbung während 30 Sekunden bei 100 bis 103°, spült, seift während einer Viertelstunde in einer 0,1% kochenden Lösung eines ionenfreien Waschmittels, spült und trocknet. Man erhält ein rot gefärbtes Baumwollgewebe.

**Patentansprüche:**

1. Azofarbstoffe der Formel

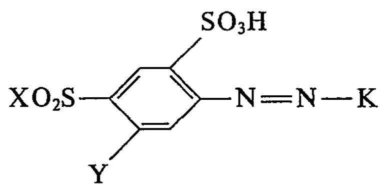

(1)

worin X ein Aryloxyrest oder ein gegebenenfalls substituierter $C_1$—$C_{12}$-Alkylrest, ein Cycloalkylrest oder ein Arylrest ist oder eine Gruppe der Formel

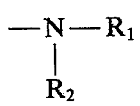

wobei $R_1$ Wasserstoff, gegebenenfalls substituiertes $C_{1-4}$-Alkyl, Cycloalkyl oder Aryl und $R_2$ Wasser-

stoff oder gegebenenfalls substituiertes $C_{1-4}$-Alkyl ist oder worin $R_1$ und $R_2$ zusammen mit dem sie verbindenden Stickstoffatom, gegebenenfalls unter Einschluß eines weiteren Heteroatoms einen nichtaromatischen 5- oder 6-Ring bilden, Y Halogen $C_{1-4}$-Alkyl oder $C_{1-4}$-Alkoxy ist, und worin K der Rest einer Kupplungskomponente der Benzol- oder Naphthalinreihe oder der heterocyclischen Reihe ist.

2. Azofarbstoff gemäß Anspruch 1, worin K der Rest eines Mono- oder Diaminobenzols-, Mono- oder Dialkoxybenzols, Aminonaphthalins, Naphthols, Aminonaphthols, Pyrazolons, Aminopyrazols, Pyridons, Indols oder Pyrimidins ist und X und Y die in Anspruch 1 angegebenen Bedeutungen haben.

3. Azofarbstoffe gemäß Anspruch 2, worin X ein Phenoxy- oder Naphthoxyrest, der durch Halogen, $C_{1-4}$-Alkoxy oder $C_{1-4}$-Alkyl substituiert sein kann, ein $C_{1-4}$-Alkylrest, der durch Hydroxy oder Phenyl substituiert sein kann, oder eine Gruppe der Formel

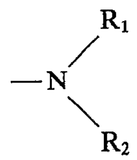

ist, worin $R_2$ Wasserstoff oder $C_{1-4}$-Alkyl und $R_1$ Wasserstoff, $C_{1-4}$-Alkyl, Cyclohexyl oder Phenyl, das durch Halogen oder Carboxy substituiert sein kann, ist, oder worin $R_1$ und $R_2$ zusammen mit dem sie verbindenden Stickstoffatom ein Morpholinrest ist und Y und K die in Anspruch 2 angegebenen Bedeutungen haben.

4. Azofarbstoffe gemäß Anspruch 3, worin Y Fluor, Chlor, Brom, Methyl oder Methoxy ist, und X und K die in Anspruch 3 angegebenen Bedeutungen haben.

5. Azofarbstoffe gemäß Anspruch 4, worin K der Rest eines N-Mono- oder N,N-Di-$C_{1-4}$-Alkylanilin ist, dessen $C_{1-4}$-Alkylgruppen durch Chlor, Cyano, Hydroxy, Phenyl, Sulfophenyl, Phenoxy, Anilino, Acetyloxy oder Sulfo substituiert sein können und der im Benzolkern durch Methyl, Benzoylamino, Acetylamino und Chlor substituiert sein kann, oder worin K der Rest eines Aminonaphthalins, 1-Äthyl-6-hydroxy-4-methyl-pyridons-(2), 2-Methylindols, 1-Phenyl-3-methyl-pyrazol-5-ons, Methoxybenzols, 1-Phenyl-3-methyl-aminopyrazols, 2,4,6-Triaminopyrimidins oder eines 3-Methyl- oder 3-Methoxyanilins ist, X ein Phenoxyrest, der durch Chlor, Methyl oder Methoxy substituiert sein kann, ein Naphtoxyrest, ein Methyl- oder Äthylrest, der durch Hydroxy oder Phenyl substituiert sein kann, oder eine Gruppe der Formel

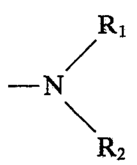

ist, worin $R_2$ Wasserstoff oder $C_{1-4}$-Alkyl und $R_1$ Wasserstoff, $C_{1-4}$-Alkyl, Cyclohexyl oder Phenyl, das durch Chlor oder Carboxy substituiert sein kann, ist, oder worin $R_1$ und $R_2$ zusammen mit dem sie verbindenden Stickstoffatom ein Morpholinrest ist, und Y die in Anspruch 4 angegebene Bedeutung hat.

6. Azofarbstoffe gemäß Anspruch 5, worin K der Rest eines N,N-Diäthylanilins ist, das im Benzolkern durch Methyl oder Acetylamino substituiert ist, X $-NH_2$, ein Dimethylamino- oder Phenoxyrest und Y Chlor ist.

7. Der Azofarbstoff gemäß Anspruch 6 der Formel

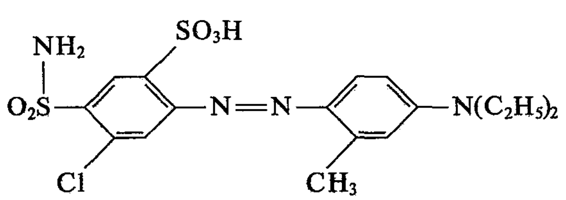

8. Der Azofarbstoff gemäß Anspruch 6 der Formel

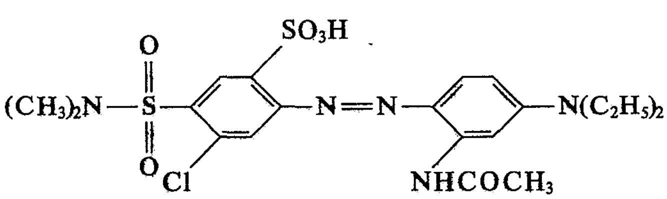

9. Der Azofarbstoff gemäß Anspruch 6 der Formel

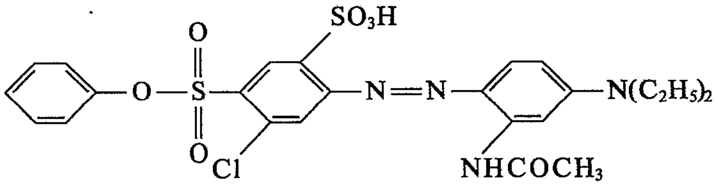

10. Azofarbstoffe gemäß Anspruch 1, worin K der Rest einer Kupplungskomponente der Bezol- oder Naphthalinreihe ist, der einen faserreaktiven Rest enthält und X und Y die in Anspruch 1 angegebene Bedeutungen haben.

11. Azofarbstoffe gemäß Anspruch 10, worin X ein Phenoxy- oder Naphthoxyrest, der durch Halogen, $C_{1-4}$-Alkoxy oder $C_{1-4}$-Alkyl substituiert sein kann, ein $C_{1-4}$-Alkylrest, der durch Hydroxy oder Phenyl substituiert sein kann, oder eine Gruppe der Formel

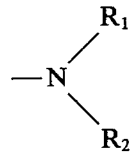

ist, worin $R_1$ Wasserstoff, $C_{1-4}$-Alkyl, Cyclohexyl oder Phenyl, das durch Halogen oder Carboxy substituiert sein kann und $R_2$ Wasserstoff oder $C_{1-4}$-Alkyl ist, oder worin $R_1$ und $R_2$ zusammen mit dem sie verbindenden Stickstoffatom ein Morpholinrest ist, Y Fluor, Chlor, Brom, Methyl oder Methoxy ist und K die in Anspruch 10 angegebene Bedeutung hat.

12. Azofarbstoffe gemäß Anspruch 11, worin K der Rest eines N,N-Di-$C_{1-4}$-Alkylanilins ist, dessen Alkylgruppen durch Cyano substituiert sein können und der im Benzolkern durch Methyl substituiert sein kann und worin der faserreaktive Rest über eine

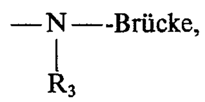

worin $R_3$ Wasserstoff oder $C_{1-4}$-Alkyl ist, an den aromatischen Kern oder an ein C-Atom der N,N-Di-$C_{1-4}$-Alkylgruppe gebunden ist, oder worin der faserreaktive Rest über ein Sauerstoffatom an ein C-Atom der N,N-Di-$C_{1-4}$-Alkylgruppe gebunden ist und X und Y die in Anspruch 11 angegebenen Bedeutungen haben.

13. Azofarbstoffe gemäß Anspruch 11, worin K der Rest einer Kupplungskomponente der Formel

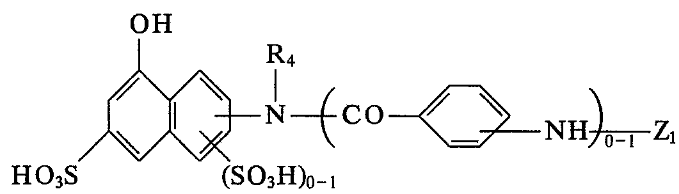

ist, worin $R_4$ Wasserstoff oder $C_{1-4}$-Alkyl und $Z_1$ ein faserreaktiver Rest ist und X und Y die in Anspruch 11 angegebenen Bedeutungen haben.

14. Azofarbstoffe gemäß Anspruch 12 oder 13, worin die Kupplungskomponente K die in Anspruch 12 oder 13 angegebene Bedeutung hat und als faserreaktiven Rest einen $\alpha,\beta$-Dibrompropionyl-, 2,6-Difluor-5-chlorpyrimidyl- oder 2-Chlor- oder 2-Fluor-4-$C_{1-4}$-Alkoxy- oder -$C_{1-2}$-Alkoxy-$C_{1-2}$-alkoxy-1,3,5-triazinylrest oder einen 2-Chlor-4-phenyl-amino- oder N-$C_{1-4}$-Alkyl-phenylamino-1,3,5-triazinyl-Rest enthält, und X und Y die in Anspruch 12 oder 13 angegebenen Bedeutungen haben.

15. Azofarbstoff gemäß Anspruch 14, worin X Phenoxy, $-NH_2$ oder Dimethylamino und Y Fluor, Chlor oder Methyl ist.

16. Verbindungen der Formel

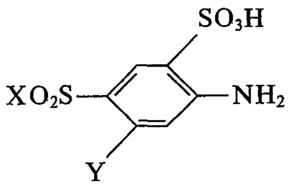

(4)

worin X ein Aryloxyrest oder ein gegebenenfalls substituierter $C_1$—$C_{12}$-Alkylrest, ein Cycloalkylrest oder ein Arylrest ist oder eine Gruppe der Formel

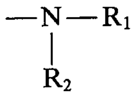

wobei $R_1$ Wasserstoff, gegebenenfalls substituiertes $C_{1-4}$-Alkyl, Cycloalkyl oder Aryl und $R_2$ Wasserstoff oder gegebenenfalls substituiertes $C_{1-4}$-Alkyl ist oder worin $R_1$ und $R_2$ zusammen mit dem sie verbindenden Stickstoffatom, gegebenenfalls unter Einschluß eines weiteren Heteroatoms einen nichtaromatischen 5- oder 6-Ring bilden und Y Halogen, $C_{1-4}$-Alkyl oder $C_{1-4}$-Alkoxy ist.

17. Verbindungen gemäß Anspruch 16, worin Y Fluor, Chlor, Brom, Methyl oder Methoxy ist.

18. Verfahren zur Herstellung von Azofarbstoffen der Formel

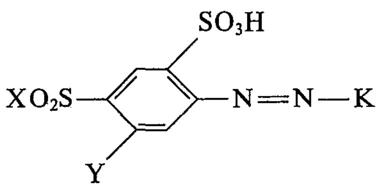

(1)

worin X ein Aryloxyrest oder ein gegebenenfalls substituierter $C_1$—$C_{12}$-Alkylrest, ein Cycloalkylrest oder ein Arylrest ist oder eine Gruppe der Formel

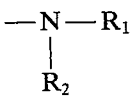

wobei $R_1$ Wasserstoff, gegebenenfalls substituiertes $C_{1-4}$-Alkyl, Cycloalkyl oder Aryl und $R_2$ Wasserstoff oder gegebenenfalls substituiertes $C_{1-4}$-Alkyl ist oder worin $R_1$ und $R_2$ zusammen mit dem sie verbindenden Stickstoffatom, gegebenenfalls unter Einschluß eines weiteren Heteroatoms einen nichtaromatischen 5- oder 6-Ring bilden, Y Halogen, $C_{1-4}$-Alkyl oder $C_{1-4}$-Alkoxy ist, worin K den Rest einer Kupplungskomponente der Benzol- oder Naphthalinreihe oder der heterocyclischen Reihe bedeutet, dadurch gekennzeichnet, daß man eine Diazokomponente der Formel

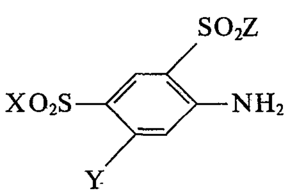

(2)

worin Z $-NH_2$ oder —OH ist, diazotiert und auf eine Kupplungskomponente der Formel

$$H—K \qquad (3)$$

kuppelt, und gegebenenfalls einen faserreaktiven Rest einführt.

19. Verfahren gemäß Anspruch 18, dadurch gekennzeichnet, daß man eine Diazokomponente der Formel (2), worin X, Y und Z die in Anspruch 18 angegebenen Bedeutungen haben, diazotiert und auf eine Kupplungskomponente der Formel (3), worin K der Rest eines Mono- oder Diaminobenzols, Mono- oder Dialkoxybenzols, Aminonaphthalins, Naphthols, Aminonaphthols, Pyrazolons, Aminopyrazols, Pyridons, Indols oder Pyrimidins ist, kuppelt.

20. Verfahren gemäß Anspruch 19, dadurch gekennzeichnet, daß man eine Diazokomponente der Formel (2), worin X ein Phenoxy- oder Naphthoxyrest, der durch Halogen, $C_{1-4}$-Alkoxy oder $C_{1-4}$-Alkyl substituiert sein kann, ein $C_{1-4}$-Alkylrest, der durch Hydroxy oder Phenyl substituiert sein kann, oder eine Grupe der Formel

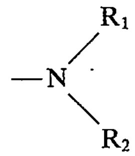

ist, worin $R_2$ Wasserstoff oder $C_{1-4}$-Alkyl und $R_1$ Wasserstoff, $C_{1-4}$-Alkyl, Cyclohexyl oder Phenyl, das durch Halogen oder Carboxy substituiert sein kann, ist, oder worin $R_1$ und $R_2$ zusammen mit dem sie verbindenden Stickstoffatom ein Morpholinrest ist und Y und Z die in Anspruch 19 angegebenen Bedeutungen haben, diazotiert und auf eine Kupplungskomponente der Formel (3), worin K die in Anspruch 19 angegebene Bedeutung hat, kuppelt.

21. Verfahren gemäß Anspruch 20, dadurch gekennzeichnet, daß man eine Diazokomponente der Formel (2), worin Y Fluor, Chlor, Brom, Methyl oder Methoxy ist und X und Z die in Anspruch 20 angegebenen Bedeutungen haben, diazotiert und auf eine Kupplungskomponente der Formel (3), worin K die in Anspruch 20 angegebene Bedeutung hat, kuppelt.

22. Verfahren gemäß Anspruch 21, dadurch gekennzeichnet, daß man eine Diazokomponente der Formel (2), worin X ein Phenoxyrest, der durch Chlor, Methyl oder Methoxy substituiert sein kann, ein Naphthoxyrest, ein Methyl- oder Äthylrest, der durch Hydroxy oder Phenyl substituiert sein kann, oder eine Gruppe der Formel

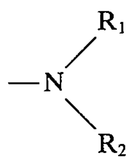

ist, worin $R_2$ Wasserstoff oder $C_{1-4}$-Alkyl und $R_1$ Wasserstoff, $C_{1-4}$-Alkyl, Cyclohexyl oder Phenyl, das durch Chlor oder Carboxy substituiert sein kann, ist, oder worin $R_1$ und $R_2$ zusammen mit dem sie verbindenden Stickstoffatom ein Morpholinrest ist, und Y und Z die in Anspruch 21 angegebenen Bedeutungen haben, diazotiert und auf eine Kupplungskomponente der Formel (3), worin K der Rest eines N-Mono- oder N,N-Di-$C_{1-4}$-Alkylanilins ist, dessen $C_{1-4}$-Alkylgruppen durch Chlor, Cyano, Hydroxy, Phenyl, Sulfophenyl, Phenoxy, Anilino, Acetyloxy oder Sulfo substituiert sein können und der im Benzolkern durch Methyl, Benzoylamino, Acetylamino und Chlor substituiert sein kann, oder worin K der Rest eines Aminonaphthalins, 1-Äthyl-6-hydroxy-4-methyl-pyridons-(2), 2-Methylindols, 1-Phenyl-3-methyl-pyrazol-5-ons, Methoxybenzols, 1-Phenyl-3-methyl-aminopyrazols, 2,4,6-Triaminopyrimidins oder eines 3-Methyl- oder 3-Methoxyanilins ist, kuppelt.

23. Verfahren gemäß Anspruch 22, dadurch gekennzeichnet, daß man eine Diazokomponente der Formel (2), worin X $-NH_2$, ein Dimethylamino- oder Phenoxyrest und Y Chlor ist und Z die in Anspruch 22 angegebene Bedeutung hat, diazotiert und auf ein 3-Methyl- oder 3-Acetylamino-N,N-diäthylanilin kuppelt.

24. Verfahren gemäß Anspruch 23, dadurch gekennzeichnet, daß man 5-Chloranilin-2,4-disulfamid diazotiert und auf N,N-Diäthyl-m-toluidin kuppelt.

25. Verfahren gemäß Anspruch 23, dadurch gekennzeichnet, daß man 5-Chloranilin-4-dimethylsulfamid-2-sulfonsäure diazotiert und auf 3-Diäthylamino-acetanilid kuppelt.

26. Verfahren gemäß Anspruch 23, dadurch gekennzeichnet, daß man 5-Chlor-4-phenoxysulfonylanilin-2-sulfonsäure diazotiert und auf 3-Diäthylamino-acetanilid kuppelt.

27. Verfahren gemäß Anspruch 18, dadurch gekennzeichnet, daß man eine diazotierte Diazokomponente der Formel (2), worin X, Y und Z die in Anspruch 18 angegebenen Bedeutungen haben, eine Kupplungskomponente der Formel (3), worin K der Rest einer Verbindung der Benzol- oder Naphthalinreihe ist, der eine acylierbare Amino- oder Hydroxygruppe enthält und ein Acylierungsmittel, das einen faserreaktiven Rest enthält, in beliebiger Reihenfolge miteinander umsetzt.

28. Verfahren gemäß Anspruch 27, dadurch gekennzeichnet, daß man eine diazotierte Diazokomponente der Formel (2), worin X ein Phenoxy- oder Naphthoxyrest, der durch Halogen, $C_{1-4}$-Alkoxy oder $C_{1-4}$-Alkyl substituiert sein kann, ein $C_{1-4}$-Alkylrest, der durch Hydroxy oder Phenyl substituiert sein kann, oder eine Gruppe der Formel

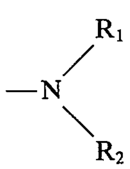

ist, worin $R_1$ Wasserstoff, $C_{1-4}$-Alkyl, Cyclohexyl oder Phenyl, das durch Halogen oder Carboxy substituiert sein kann und $R_2$ Wasserstoff oder $C_{1-4}$-Alkyl ist, oder worin $R_1$ und $R_2$ zusammen mit dem sie verbindenden Stickstoffatom ein Morpholinrest ist, Y Fluor, Chlor, Brom, Methyl oder Methoxy ist und Z

die in Anspruch 27 angegebene Bedeutung hat, eine Kupplungskomponente der Formel (3), worin K die in Anspruch 27 angegebene Bedeutung hat und ein Acylierungsmittel, das einen faserreaktiven Rest enthält, in beliebiger Reihenfolge miteinander umsetzt.

29. Verfahren gemäß Anspruch 28, dadurch gekennzeichnet, daß man eine diazotierte Diazokomponente der Formel (2), worin X, Y und Z die in Anspruch 28 angegebenen Bedeutungen haben, auf eine Kupplungskomponente der Formel (3), worin K der Rest eines N,N-Di-$C_{1-4}$-Alkylanilins ist, dessen Alkylgruppen durch Cyano substituiert sein können und der im Benzolrest durch Methyl substituiert sein kann und worin am aromatischen Kern oder an einem C-Atom der N,N-Di-$C_{1-4}$-alkylgruppe ein

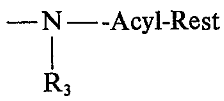

gebunden ist, worin $R_3$ Wasserstoff oder $C_{1-4}$-Alkyl und Acyl ein faserreaktiver Acylrest ist, oder worin an einen C-Atom der N,N-Di-$C_{1-4}$-alkylgruppe ein —O-Acylrest gebunden ist, worin Acyl ein faserreaktiver Rest ist, kuppelt.

30. Verfahren gemäß Anspruch 28, dadurch gekennzeichnet, daß man eine diazotierte Diazokomponente der Formel (2), worin X, Y und Z die in Anspruch 28 angegebenen Bedeutungen haben, auf eine Kupplungskomponente der Formel

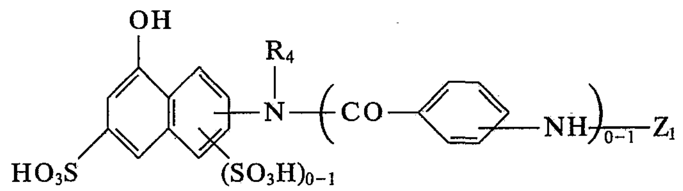

worin $R_4$ Wasserstoff oder $C_{1-4}$-Alkyl und $Z_1$ ein fasserreaktiver Rest ist, kuppelt.

31. Verfahren gemäß Anspruch 29 oder 30, dadurch gekennzeichnet, daß man eine diazotierte Diazokomponente der Formel (2), worin X, Y und Z die in Anspruch 29 oder 30 angegebenen Bedeutungen haben, auf eine Kupplungskomponente der Formel (3), worin K die in Anspruch 29 oder 30 angegebene Bedeutung hat, und die als faserreaktiven Rest einen $\alpha,\beta$-Dibrompropionyl-, 2,6-Difluor-5-chlor-pyrimidyl- oder einen 2-Chlor- oder Fluor-4-$C_{1-4}$-Alkoxy- oder $C_{1-2}$-Alkoxy-$C_{1-2}$-alkoxy-1,3,5-triazinyl-Rest oder einen 2-Chlor-4-phenylamino- oder N-$C_{1-4}$-Alkyl-phenylamino-1,3,5-triazinyl-Rest enthält, kuppelt.

32. Verfahren gemäß Anspruch 31, dadurch gekennzeichnet, daß man eine diazotierte Diazokomponente der Formel (2), worin X Phenoxy, $-NH_2$ oder Dimethylamino und Y Fluor, Chlor oder Methyl ist und Z die in Anspruch 31 angegebene Bedeutung hat, als Ausgangsverbindung verwendet.

33. Verfahren zur Herstellung von Verbindungen der Formel

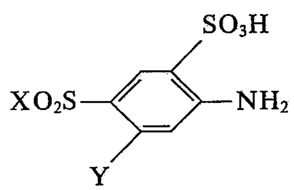

(4)

worin X ein Aryloxyrest oder ein gegebenenfalls substituierter $C_1-C_{12}$-Alkylrest, ein Cycloalkylrest oder ein Arylrest ist oder eine Gruppe der Formel

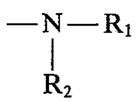

wobei $R_1$ Wasserstoff, gegebenenfalls substituiertes $C_{1-4}$-Alkyl, Cycloalkyl oder Aryl und $R_2$ Wasserstoff oder gegebenenfalls substituiertes $C_{1-4}$-Alkyl ist oder worin $R_1$ und $R_2$ zusammen mit dem sie verbindenden Stickstoffatom, gegebenenfalls unter Einschluß eines weiteren Heteroatoms einen nichtaromatischen 5- oder 6-Ring bilden und Y Halogen, $C_{1-4}$-Alkyl oder $C_{1-4}$-Alkoxy ist, dadurch gekennzeichnet, daß man eine Verbindung der Formel

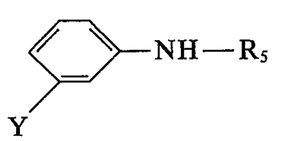

(5)

worin $R_5$ ein Acylrest, insbesondere ein Acetylrest ist, und Y die unter Formel (4) angegebene Bedeutung hat, mit Chlorsulfonsäure umsetzt, das erhaltene Sulfochlorid, zwecks Einführung des Restes X, gegebenenfalls nach Reduktion des Sulfochlorids zur Sulfinsäure, mit einer Hydroxyarylverbindung, einem $C_{1-12}$-Alkylierungsmittel, einem Cycloalkylierungs- oder Arylierungsmittel oder einer Verbindung der Formel

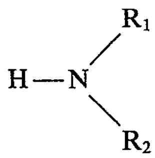

worin $R_1$ und $R_2$ die unter Formel (4) angegebenen Bedeutungen haben, umsetzt, und die erhaltene Verbindung der Formel

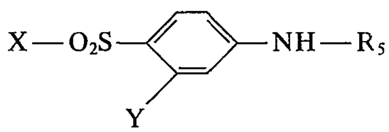

zwecks Abspaltung des Acylrestes $R_5$ verseift und anschließend mit Chlorsulfonsäure zu einer Verbindung der Formel (4) umsetzt.

34. Verfahren gemäß Anspruch 33, dadurch gekennzeichnet, daß man als Ausgangsverbindungen der Formel (5) solche verwendet, worin Y Fluor, Chlor, Brom, Methyl oder Methoxy ist.

35. Die gemäß den Ansprüchen 18 bis 32 erhältlichen Azofarbstoffe.

36. Verwendung der Azofarbstoffe gemäß den Ansprüchen 1 bis 17 bzw. der gemäß den Ansprüchen 18 bis 32 erhaltenen Azofarbstoffe zum Färben und Bedrucken.

37. Verfahren zum Färben und Bedrucken unter Verwendung der Azofarbstoffe gemäß Anspruch 1.

38. Verfahren gemäß Anspruch 37 zum Färben von Polyamidfasern.

39. Das gemäß den Ansprüchen 36 bis 38 erhaltene gefärbte und bedruckte Material, insbesondere Textilmaterial.

40. Färbe- und Druckpräparate, die Azofarbstoffe gemäß den Ansprüchen 1 bis 17 enthalten.

## Claims

1. An azo dye of the formula

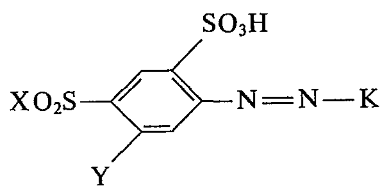

(1)

wherein X is an aryloxy radical or an unsubstituted or substituted $C_1$—$C_{12}$alkyl radical, a cycloalkyl radical or an aryl radical or a group of the formula

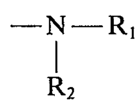

wherein $R_1$ is hydrogen, unsubstituted or substituted lower alkyl, cycloalkyl or aryl, and $R_2$ is hydrogen or unsubstituted or substituted lower alkyl, or wherein $R_1$ and $R_2$, together with the nitrogen atom to which they are attached, form a 5- or 6-membered heterocyclic ring which may contain a further heteroatom, Y is halogen, $C_1$—$C_4$alkyl or $C_1$—$C_4$alkoxy, and K is the radical of a coupling component of the benzene or naphthalene series or of the heterocyclics series.

2. An azo dye according to claim 1, wherein K is the radical of a mono- or diaminobenzene, mono- or dialkoxybenzene, aminophthalene, naphthol, aminonaphthol, pyrazolone, aminopyrazole, pyridone, indole or pyrimidine, and X and Y are as defined in claim 1.

3. An azo dye according to claim 2, wherein X is a phenoxy or naphthoxy radical which can be substituted by halogen, $C_1$—$C_4$alkoxy or $C_1$—$C_4$alkyl, a $C_1$—$C_4$alkyl radical which can be substituted by hydroxyl or phenyl, or a group of the formula

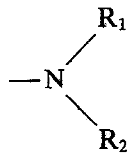

wherein $R_2$ ist hydrogen or $C_1$—$C_4$alkyl and $R_1$ is hydrogen, $C_1$—$C_4$alkyl, cyclohexyl, or phenyl which can be substituted by halogen or carboxyl, or wherein $R_1$ and $R_2$, together with the nitrogen atom to which they are attached, are a morpholino radical, and Y and K are as defined in claim 2.

4. An azo dye according to claim 3, wherein Y ist fluorine, chlorine, bromine, methyl or methoxy, and X and K are as defined in claim 3.

5. An azo dye according to claim 4, wherein K is the radical of a N-mono- or N,N-di($C_1$—$C_4$)alkylaniline, the $C_1$—$C_4$alkyl moieties of which can be substituted by chlorine, cyano, hydroxyl, phenyl, sulfophenyl, phenoxy, anilino, acetoxy or sulfo, which radical can be substituted in the benzene nucleus by methyl, benzoylamino, acetylamino and chlorine, or wherein K is the radical of an aminonaphthalene, 1-ethyl-6-hydroxy-4-methyl-pyrid-2-one, 2-methylindole, 1-phenyl-3-methyl-pyrazol-5-one, methoxybenzene, 1-phenyl-3-methylaminopyrazole, 2,4,6-triaminopyrimidine or of a 3-methyl- or 3-methoxyaniline, X is a phenoxy radical which can be substituted by chlorine, methyl or methoxy, a naphthoxy radical, a methyl or ethyl radical which can be substituted by hydroxy or phenyl, or a group of the formula

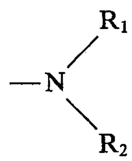

wherein $R_2$ is hydrogen or $C_1$—$C_4$alkyl, and $R_1$ is hydrogen, $C_1$—$C_4$alkyl, cyclohexyl, or phenyl which can be substituted by chlorine or carboxyl, or wherein $R_1$ and $R_2$, together with the nitrogen atom to which they are attached, are a morpholino radical, and Y ist as defined in claim 4.

6. An azo dye according to claim 5, wherein K is the radical of a N,N-diethylaniline which is substituted in the benzene nucleus by methyl or acetylamino, X is $-NH_2$, a dimethylamino or phenoxy radical, and Y is chlorine.

7. The azo dye according to claim 6 of the formula

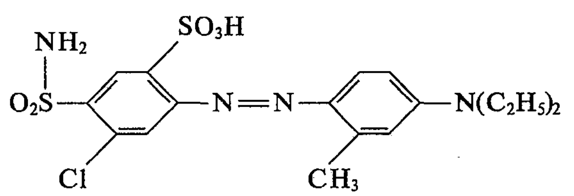

8. The azo dye according to claim 6 of the formula

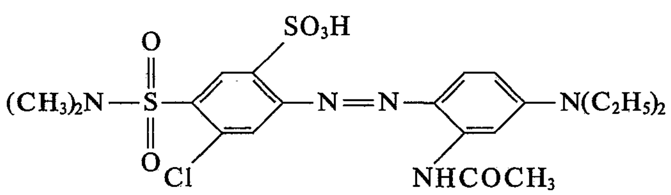

9. The azo dye according to claim 6 of the formula

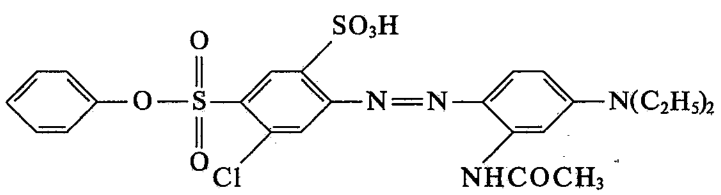

10. An azo dye according to claim 1, wherein K is the radical of a coupling component of the benzene or naphthalene series which contains a fibre-reactive radical, and X and Y are as defined in claim 1.

11. An azo dye according to claim 10, wherein X is a phenoxy or naphthoxy radical which can be sub-

stituted by halogen, $C_1$—$C_4$alkoxy or $C_1$—$C_4$alkyl, a $C_1$—$C_4$alkyl radical which can be substituted by hydroxyl or phenyl, or is a group of the formula

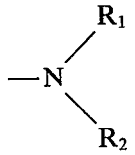

wherein $R_1$ is hydrogen, $C_1$—$C_4$alkyl, cyclohexyl, or phenyl which can be substituted by halogen or carboxyl, and $R_2$ is hydrogen or $C_1$—$C_4$alkyl, or wherein $R_1$ and $R_2$, together with the nitrogen atom to which they are attached, are a morpholino radical, Y is fluorine, chlorine, bromine, methyl or methoxy, and K is as defined in claim 10.

12. An azo dye according to claim 11, wherein K is the radical of a N,N-di-($C_1$—$C_4$)alkylanilin, the alkyl moieties of which can be substituted by cyano, which radical can be substituted in the benzene nucleus by methyl, and wherein the fibre-reactive radical ist attached via a

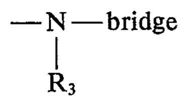

wherein $R_3$ is hydrogen or $C_1$—$C_4$alkyl, to the aromatic nucleus or to a carbon atom of the N,N-di($C_1$—$C_4$)alkyl group, or wherein the fibre-reactive radical is attached via an oxygen atom to a carbon atom of the N,N-di($C_1$—$C_4$)alkyl group, and X and Y are as defined in claim 11.

13. An azo dye according to claim 11, wherein K is the radical of a coupling component of the formula

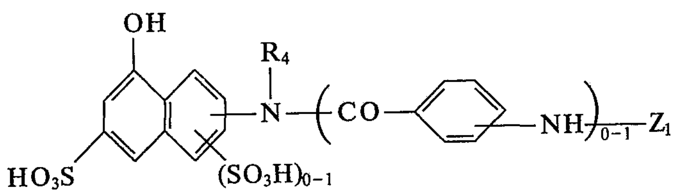

wherein $R_4$ is hydrogen or $C_1$—$C_4$alkyl and $Z_1$ is a fibre-reactive radical, and X and Y are as defined in claim 11.

14. An azo dye according to either of claims 12 or 13, wherein the coupling component K is as defined in claim 12 or 13 and, as fibre-reactive radical, an $\alpha,\beta$-dibromopropionyl, 2,6-difluoro-5-chloropyrimidyl, 2-chloro- or 2-fluoro-4-($C_1$—$C_4$)alkoxy- or -$C_1$—$C_2$alkoxy-$C_1$—$C_2$alkoxy-1,3,5-triazinyl radical or a 2-chloro-4-phenylamino- or N-$C_1$—$C_4$alkylphenylamino-1,3,5-triazinyl radical, and X and Y are as defined in claim 12 or 13.

15. An azo dye according to claim 14, wherein X is phenoxy, $-NH_2$ or dimethylamino, and Y is fluorine, chlorine or methyl.

16. A compound of the formula

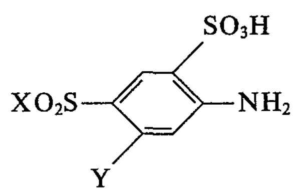

(4)

wherein X is an aryloxy radical or an unsubstituted or substituted $C_1$—$C_{12}$alkyl radical, a cycloalkyl radical or an aryl radical or a group of the formula

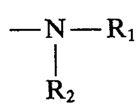

wherein $R_1$ is hydrogen, unsubstituted or substituted lower alkyl, cycloalkyl or aryl, and $R_2$ is hydrogen or unsubstituted or substituted $C_1$—$C_4$alkyl, or wherein $R_1$ and $R_2$, together with the nitrogen atom to which they are attached, form a 5- or 6-membered heterocyclic ring which may contain a further hetero atom, Y is halogen, $C_1$—$C_4$alkyl or $C_1$—$C_4$alkoxy.

17. A compound according to claim 16, wherein Y is fluorine, chlorine, bromine, methyl or methoxy.

18. A process for the production of an azo dye of the formula

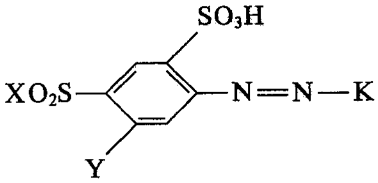

(1)

wherein X is an aryloxy radical or an unsubstituted or substituted $C_1$—$C_{12}$alkyl radical, a cycloalkyl radical or an aryl radical or a group of the formula

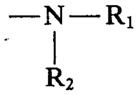

wherein $R_1$ is hydrogen, unsubstituted or substituted $C_1$—$C_4$alkyl, cycloalkyl or aryl, and $R_2$ is hydrogen or unsubstituted or substituted $C_1$—$C_4$alkyl, or wherein $R_1$ and $R_2$, together with the nitrogen atom to which they are attached, form a 5- or 6-membered heterocyclic ring which may contain a further hetero-atom, Y is halogen, $C_1$—$C_4$alkyl or $C_1$—$C_4$alkoxy, and K is the radical of a coupling component of the benzene or naphthalene series or of the heterocyclic series, which process comprises diazotising a diazo component of the formula

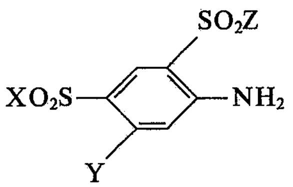

(2)

wherein Z is $-NH_2$ or $-OH$, and coupling the diazo compound to a coupling component of the formula

$$H—K \qquad (3)$$

and, if desired, introducing a fibre-reactive material.

19. A process according to claim 18, which comprises diazotising a diazo component of the formula (2), wherein X, Y and Z are as defined in claim 18, and coupling the diazo compound to a coupling component of the formula (3), wherein K is the radical of a mono- or diaminobenzene, mono- or dialkoxybenzene, aminonaphthalene, naphthol, aminonaphthol, pyrazolone, aminopyrazole, pyridone, indole or pyrimidine.

20. A process according to claim 19, which comprises diazotising a diazo component of the formula (2), wherein X is a phenoxy or naphthoxy radical which can be substituted by halogen, $C_1$—$C_4$alkoxy or $C_1$—$C_4$alkyl, a $C_1$—$C_4$alkyl radical which can be substituted by hydroxyl or phenyl, or a group of the formula

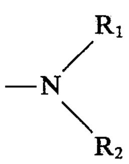

wherein $R_2$ is hydrogen or $C_1$—$C_4$alkyl and $R_1$ is hydrogen, $C_1$—$C_4$alkyl, cyclohexyl, or phenyl which can be substituted by halogen or carboxyl, or wherein $R_1$ and $R_2$, together with the nitrogen atom to which they are attached, are a morpholino radical, and Y and K are as defined in claim 19, and coupling the diazo compound to a coupling component of the formula (3), wherein K is as defined in claim 19.

21. A process according to claim 20, which comprises diazotising a diazo component of the formula (2), wherein Y is fluorine, chlorine, bromine, methyl or methoxy, and X and Z are as defined in claim 20, and coupling the diazo compound to a coupling component of the formula (3), wherein K is as defined in claim 20.

22. A process according to claim 21, which comprises diazotising a diazo component of the formula (2), wherein X is a phenoxy radical which can be substituted by chlorine, methyl or methoxy, or is a naphthoxy radical, a methyl or ethyl radical which can be substituted by hydroxyl or phenyl, or is a group of the formula

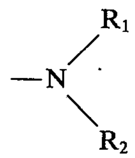

wherein $R_2$ ist hydrogen or $C_1$—$C_4$alkyl and $R_1$ is hydrogen, $C_1$—$C_4$alkyl, cyclohexyl, or phenyl which can be substituted by chlorine or carboxyl, or wherein $R_1$ and $R_2$, together with the nitrogen atom to which they are attached, are a morpholino radical, and Y and Z are as defined in claim 21, and coupling the diazo compound to a coupling component of the formula (3), wherein K is the radical of a N-mono- or N,N-di($C_1$—$C_4$)alkylaniline, the $C_1$—$C_4$alkyl moieties of which can be substituted by chlorine, cyano, hydroxyl, phenyl, sulfophenyl, phenoxy, anilino, acetoxy or sulfo, which radical can be substituted in the benzene nucleus by methyl, benzoylamino, acetylamino and chlorine, or wherein K is the radical of an aminophthalene, 1-ethyl-6-hydroxy-4-methyl-pyrid-2-one, 2-methylindole, 1-phenyl-3-methyl-pyrazol-5-one, methoxybenzene, 1-phenyl-3-methylaminopyrazole, 2,4,6-triaminopyrimidine or of a 3-methyl- or 3-methoxyaniline.

23. A process according to claim 22, which comprises diazotising a diazo component of the formula (2), wherein X is $-NH_2$, a dimethylamino or phenoxy radical and Y is chlorine and Z is as defined in claim 22, and coupling the diazo compound to a 3-methyl-or 3-acetylamino-N,N-diethylaniline.

24. A process according to claim 23, which comprises diazotising 5-chloraniline-2,4-disulfamide and coupling the diazo compound to N,N-diethyl-m-toluidine.

25. A process according to claim 23, which comprises diazotising 5-chloroaniline-2,4-disulfamide and coupling the diazo compound to 3-diethylaminoacetanilide.

26. A process according to claim 23, which comprises diazotising 5-chloro-4-phenoxysulfonylaniline-2-sulfonic acid and coupling the diazo compound to diethylaminoacetanilide.

27. A process according to claim 18, which comprises reacting a diazotised diazo component of the formula (2), wherein X, Y and Z are as defined in claim 18, a coupling component of the formula (3), wherein K is the radical of a compound of the benzene or naphthalene series, which radical contains an acylatable amino or hydroxy group, and an acylating agent which contains a fibre-reactive radical, in any order with one another.

28. A process according to claim 27, which comprises reacting a diazotised diazo component of the formula (2), wherein X is a phenoxy or naphthoxy radical which can be substituted by halogen, $C_1$—$C_4$alkoxy or $C_1$—$C_4$alkyl, a $C_1$—$C_4$alkyl radical which can be substituted by hydroxyl or phenyl, or a group of the formula

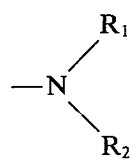

wherein $R_1$ is hydrogen, $C_1$—$C_4$alkyl, cyclohexyl, or phenyl which can be substituted by halogen or carboxyl, and $R_2$ is hydrogen or $C_1$—$C_4$alkyl, or wherein $R_1$ and $R_2$, together with the nitrogen atom to which they are attached, are a morpholino radical, Y is fluorine, chlorine, bromine, methyl or methoxy, and Z ist as defined in claim 27, a coupling component of the formula (3), wherein K is as defined in claim 27, and an acylating agent which contains a fibre-reactive radical, an any order with one another.

29. A process according to claim 28, which comprises coupling a diazotised diazo component of the formula (2), wherein X, Y and Z are as defined in claim 28, to a coupling component of the formula (3), wherein K is the radical of a N,N-di($C_1$—$C_4$)alkylaniline, the alkyl moieties of which can be substituted by cyano, and which can be substituted in the benzene ring by methyl, and wherein a

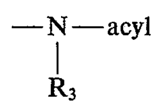

radical is attached to an aromatic nucleus or to a carbon atom of the N,N-di($C_1$—$C_4$)alkyl moiety, in which radical $R_3$ is hydrogen or $C_1$—$C_4$alkyl and acyl is a fibre-reactive radical, or wherein an O-acyl radical is attached to a carbon atom of the N,N-di($C_1$—$C_4$)alkyl moiety, in which radical acyl is a fibre-reactive radical.

30. A process according to claim 28, which comprises coupling a diazotised diazo component of the formula (2), wherein X, Y and Z are as defined in claim 28, to a coupling component of the formula

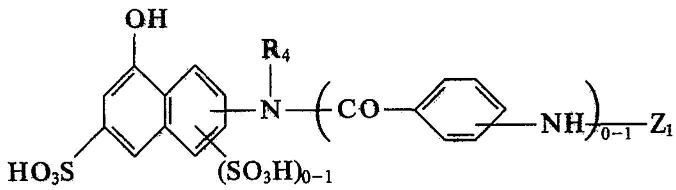

wherein $R_4$ is hydrogen or $C_1$—$C_4$alkyl and $Z_1$ is a fibre-reactive radical.

31. A process according to either of claims 29 or 30, which comprises coupling a diazotised diazo component of the formula (2), wherein X, Y and Z are as defined in either of claims 29 or 30, to a coupling component of the formula (3), wherein K is as defined in either of claims 29 or 30, and which contains, as fibre-reactive radical, an $\alpha,\beta$-dibromopropionyl, 2,6-difluoro-5-chloropyrimidyl, 2-chloro- or 2-fluoro-4-($C_1$—$C_4$)alkoxy- or -$C_1$—$C_2$alkoxy-$C_1$—$C_2$alkoxy-1,3,5-triazinyl radical or a 2-chloro-4-phenylamino- or N-$C_1$—$C_4$alkylphenylamino-1,3,5-triazinyl radical.

32. A process according to claim 31, wherein the starting compound is a diazotised diazo component of the formula (2), wherein X is phenoxy, —$NH_2$ or dimethylamino, and Y is fluorine, chlorine or methyl, and Z is as defined in claim 31.

33. A process for the production of a compound of the formula

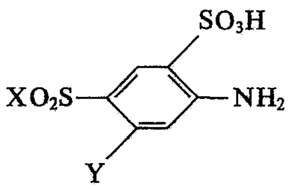

(4)

wherein X is an aryloxy radical or an unsubstituted or substituted $C_1$—$C_{12}$alkyl radical, a cycloalkyl radical or an aryl radical or a group of the formula

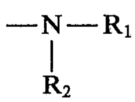

wherein $R_1$ is hydrogen, unsubstituted or substituted lower alkyl, cycloalkyl or aryl, and $R_2$ is hydrogen or unsubstituted or substituted lower alkyl, or wherein $R_1$ and $R_2$, together with the nitrogen atom to which they are attached, form a 5- or 6-membered heterocyclic ring which may contain a further hetero-atom, Y is halogen, low molecular alkyl or low molecular alkoxy, which process comprises reacting a compound of the formula

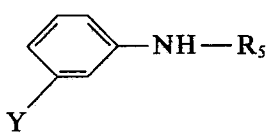

(5)

wherein $R_5$ is an acyl radical, especially an acetyl radical, and Y is as defined for formula (4), with chlorosulfonic acid, reacting the sulfochloride obtained, in order to introduce the radical X, if desired after reduction of the sulfochloride to sulfinic acid, with a hydroxyaryl compound, a $C_1$—$C_{12}$alkylating agent, a cycloalkylating agent or arylating agent or with a compound of the formula

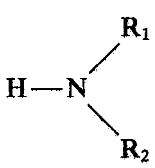

wherein $R_1$ and $R_2$ are as defined for formula (4), and saponifying the resultant compound of the formula

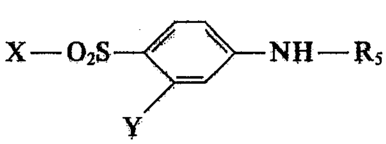

to remove the acyl radical $R_5$, and then reacting it with chlorosulfonic acid to give a compound of the formula (4).

34. A process according to claim 33, wherein the starting compound is a compound of the formula (5), wherein Y is fluorine, chlorine, bromine, methyl or methoxy.

35. An azo dye obtained according to any one of claims 18 to 32.

36. Use of an azo dye according to any one of claims 1 to 17 and of an azo dye obtained according to any one of claims 18 to 32 for dyeing and printing.

37. A method of dyeing and printing which comprises the use of an azo dye according to claim 1.

38. A process according to claim 37 for dyeing polyamide fibres.

39. The dyed or printed material, especially textile material, obtained according to any one of claims 36 to 38.

40. A dyeing or printing preparation which contains an azo dye according to any one of claims 1 to 17.

**Revendications**

1. Colorants azoïques de formule:

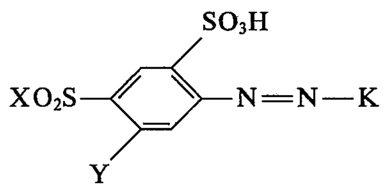

(1)

dans laquelle X est un reste aryloxy ou un reste $C_1$—$C_{12}$-alkyle éventuellement substitué, un reste cyclo-alkyle ou un reste aryle, ou bien un groupe de formule

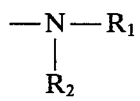

où $R_1$ désigne de l'hydrogène, un reste $C_{1-4}$-alkyle éventuellement substitué, cyclo-alkyle ou aryle, et $R_2$ est de l'hydrogène ou un reste $C_{1-4}$-alkyle éventuellement substitué, o bien où $R_1$ et $R_2$ forment ensemble avec l'atome d'azote qui les relie, éventuellement en incluant un autre hétéro-atome, un noyau non aromatique à 5 ou 6 chaînons; Y est de l'halogène, un groupe $C_{1-4}$-alkyle ou $C_{1-4}$-alcoxy, et dans laquelle K est le reste d'un copulant de la famille du benzène ou du naphtalène ou bien de la série hétérocyclique.

2. Colorant azoïque selon la revendication 1, dans lequel K est le reste d'un mono- ou diaminobenzène, d'un mono- ou dialcoxybenzène, d'un aminonaphtalène, d'un naphtol, d'un aminonaphtol, d'une pyrazolone, d'un aminopyrazole, d'une pyridone, d'un indole ou d'une pyrimidine, et X et Y ont les significations données dans la revendication 1.

3. Colorants azoïques selon la revendication 2, dans lesquels X est un reste phénoxy ou naphtoxy qui peut être substitué par de l'halogène, des radicaux $C_{1-4}$-alcoxy ou $C_{1-4}$-alkyle, un reste $C_{1-4}$-alkyle qui peut être substitué par des radicaux hydroxyle ou phényle ou bien un groupe de formule:

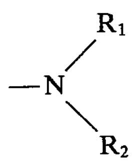

où $R_2$ est de l'hydrogène ou un groupe $C_{1-4}$-alkyle, et $R_1$ est de l'hydrogène, un groupe $C_{1-4}$-alkyle, cyclohexyle ou phényle qui peut être substitué par de l'halogène ou un radical carboxy, ou bien où $R_1$ et $R_2$ forment ensemble avec l'atome d'azote qui les relie un reste morpholino, et Y et K ont les significations données dans la revendication 2.

4. Colorants azoïques selon la revendication 3, dans lesquels Y est le fluor, le chlore, le brome, le radical méthyle ou méthoxy, et X et K ont les significations données dans la revendication 3.

5. Colorants azoïques selon la revendication 4, dans lesquels K est le reste d'une N-mono- ou N,N-di-$C_{1-4}$-alkylaniline dont les groupes $C_{1-4}$-alkyle peuvent être substitués par du chlore, des radicaux cyano, hydroxyle, phényle, sulfophényle, phénoxy, anilino, acétyloxy ou sulfo, et qui peut être substituée sur le noyau benzénique par des radicaux methyle, benzoylamino, acétylamino et chloro, ou bien dans lesquels K est le reste d'un aminonaphtalène, 1-éthyl-6-hydroxy-4-méthylpyridone-(2), 2-méthylindole, 1-phényl-3-méthylpyrazol-5-one, méthoxybenzène, 1-phényl-3-méthyl-aminopyrazole, 2,4,6-triaminopyrimidine ou d'une 3-méthyl- ou 3-méthoxyaniline; X est un reste phénoxy qui peut être substitué par du chlore, des radicaux méthyle ou méthoxy, un reste naphtoxy, un reste méthyle ou un reste éthyle qui peut être substitué par des radicaux hydroxyle ou phényle, ou bien un groupe

ayant la formule:

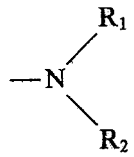

dans laquelle $R_2$ est de l'hydrogène ou un groupe $C_{1-4}$-alkyle, et $R_1$ est de l'hydrogène, un groupe $C_{1-4}$-alkyle, cyclohexyle ou phényle qui peut être substitué par du chlore ou un radical carboxy, ou bien dans laquelle $R_1$ et $R_2$ forment ensemble avec l'atome d'azote qui les relie un reste morpholino, et Y a la signification donnée dans la revendication 4.

6. Colorants azoïques selon la revendication 5, dans lesquels K est le reste d'une N,N-diéthylaniline qui est substituée sur le noyau benzénique par des radicaux méthyle ou acétylamino; X est $-NH_2$, un reste diméthylamino ou phénoxy, et Y est le chlore.

7. Le colorant azoïque selon la revendication 6, ayant la formule:

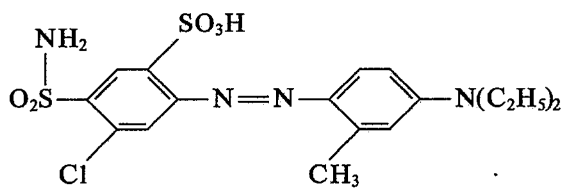

8. Le colorant azoïque selon la revendication 6, ayant la formule:

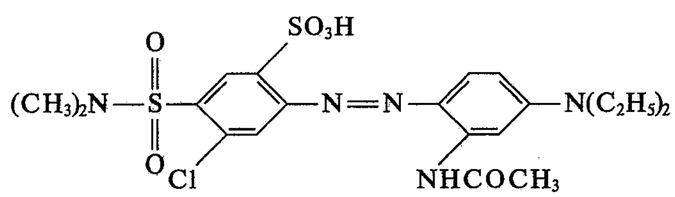

9. Le colorant azoïque selon la revendication 6, ayant la formule:

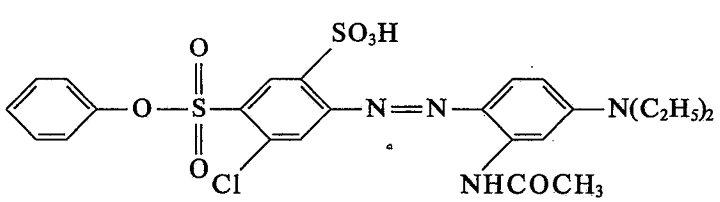

10. Colorants azoïques selon la revendication 1, dans lesquels K est le reste d'un copulant de la famille du benzène ou du naphtalène qui contient un reste réactif avec les fibres, et X et Y ont les significations données dans la revendication 1.

11. Colorants azoïques selon la revendication 10, dans lesquels X est un reste phénoxy ou naphtoxy qui peut être substitué par de l'halogène, des radicaux $C_{1-4}$-alcoxy ou $C_{1-4}$-alkyle, un reste $C_{1-4}$-alkyle qui peut être substitué par des radicaux hydroxyle ou phényle, ou bien un groupe de formule:

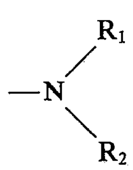

dans laquelle $R_1$ est de l'hydrogène, un groupe $C_{1-4}$-alkyle, cyclohexyle ou phényle qui peut être substitué par de l'halogène ou un radical carboxy, et $R_2$ est de l'hydrogène ou un groupe $C_{1-4}$-alkyle, ou bien dans laquelle $R_1$ et $R_2$ forment ensemble avec l'atome d'azote qui les relie un reste morpholino; Y est le fluor, le chlore, le brome, le radical méthyle ou méthoxy, et K a les significations données dans la revendication 10.

12. Colorants azoïques selon la revendication 11, dans lesquels K est le reste d'une N,N-di-$C_{1-4}$-alkylaniline, dont les groupes alkyle peuvent être substitués par le radical cyano et qui peut être

substituée sur le noyau benzénique par le radical méthyle, et dans lesquels le reste réactif avec les fibres est lié au noyau aromatique ou à un atome de carbone du groupe N,N-di-$C_{1-4}$-alkyle par un pont

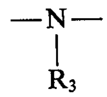

où $R_3$ est de l'hydrogène ou un groupe $C_{1-4}$-alkyle, ou bien dans lesquels le reste réactif avec les fibres est lié à un atome de carbone du groupe N,N-di-$C_{1-4}$-alkyle par l'intermédiaire d'un atome, d'oxygène, et X et Y ont les significations données dans la revendication 11.

13. Colorants azoïques selon la revendication 11, dans lesquels K est le reste d'un copulant ayant la formule:

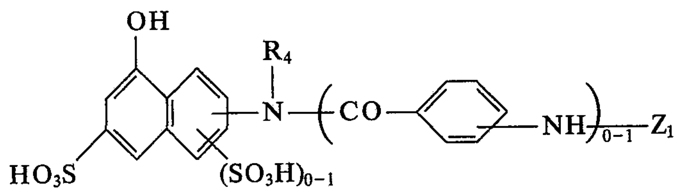

dans laquelle $R_4$ est de l'hydrogène ou un groupe $C_{1-4}$-alkyle, et $Z_1$ est un reste réactif avec les fibres, et X et Y ont les significations données dans la revendication 11.

14. Colorants azoïques selon les revendications 12 ou 13, dans lesquels le copulant K a la signification donnée dans les revendications 12 ou 13 et contient, comme reste réactif avec les fibres, un reste $\alpha,\beta$-dibromopropionyle, 2,6-difluoro-5-chloropyrimidyle, ou 2-chloro- ou 2-fluoro-4-$C_{1-4}$-alcoxy-ou -$C_{1-2}$-alcoxy-$C_{1-2}$-alcoxy-1,3,5-triazinyle ou un reste 2-chloro-4-phénylamino- ou N-$C_{1-4}$-alkylphénylamino-1,3,5-triazinyle, et X et Y ont les significations données dans les revendications 12 ou 13.

15. Colorant azoïque selon la revendication 14, dans lequel X est un reste phénoxy, $-NH_2$ ou diméthylamino, et Y est le fluor, le chlore ou le reste méthyle.

16. Composés de formule:

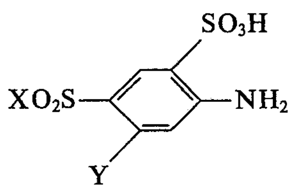

(4)

dans laquelle X est un reste aryloxy ou un reste $C_1$—$C_{12}$-alkyle éventuellement substitué, un reste cycloalkyle ou un reste aryle, ou bien un groupe de formule

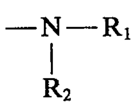

dans laquelle $R_1$ est de l'hydrogène, un reste $C_{1-4}$-alkyle éventuellement substitué, cyclo-alkyle ou aryle, et $R_2$ est de l'hydrogène ou un reste $C_{1-4}$-alkyle éventuellement substitué, ou bien dans laquelle $R_1$ et $R_2$ forment ensemble avec l'atome d'azote qui les relie, en incluant éventuellement un autre hétéro-atome un noyau non-aromatique à 5 ou 5 chaînons, et Y est de l'halogène, un reste $C_{1-4}$-alkyle ou $C_{1-4}$-alcoxy.

17. Composés selon la revendication 16, dans lesquels Y est le fluor, le chlore, le brome, le reste méthyle ou méthoxy.

18. Procédé pour la préparation de colorants azoïques de formule:

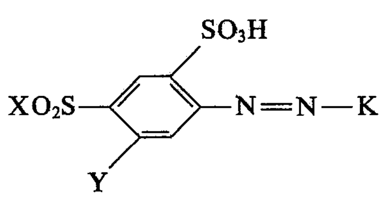

(1)

dans laquelle X est un reste aryloxy ou un reste $C_1$—$C_{12}$-alkyle éventuellement substitué, un reste cyclo-alkyle ou un reste aryle, ou bien un groupe de formule

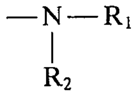

dans laquelle $R_1$ est de l'hydrogène, un reste $C_{1-4}$-alkyle éventuellement substitué, cyclo-alkyle ou aryle, et $R_2$ est de l'hydrogène ou un reste $C_{1-4}$-alkyle éventuellement substitué, ou bien dans laquelle $R_1$ et $R_2$ forment ensemble avec l'atome d'azote qui les relie, en incluant éventuellement un autre hétéro-atome, un noyau non-aromatique à 5 ou 6 chaînons; Y est de l'halogène, un reste $C_{1-4}$-alkyle ou $C_{1-4}$-alcoxy, et dans laquelle K est le reste d'un copulant de la famille du benzène ou du naphtalène ou bien de la série hétérocyclique, caractérisé par le fait qu'on diazote un composé diazotable de formule:

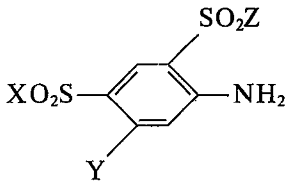

(2)

dans laquelle Z est $-NH_2$ ou $-OH$, et qu'on copule sur un copulant de formule:

H—K (3)

et qu'on introduit éventuellement un reste réactif avec les fibres.

19. Procédé selon la revendication 18, caractérisé par le fait qu'on diazote un composé diazotable de formule (2) dans lequel X, Y et Z ont les significations données dans la revendication 18, et qu'on copule sur un copulant de formule (3) dans lequel K est le reste d'un mono- ou d'un diaminobenzène, d'un mono- ou d'un dialcoxybenzène, d'un aminonaphtalène, d'un naphtol, d'un aminonaphtol, d'une pyrazolone, d'un aminopyrazole, d'une pyridone, d'un indole ou d'une pyrimidine.

20. Procédé selon la revendication 19, caractérisé par le fait qu'on diazote un composé diazotable de formule (2) dans lequel X est un reste phénoxy ou naphtoxy qui peut être substitué par de l'halogène, un radical $C_{1-4}$-alcoxy ou $C_{1-4}$-alkyle, un reste $C_{1-4}$-alkyle qui peut être substitué par un radical hydroxyle ou phényle, ou bien un groupe de formule:

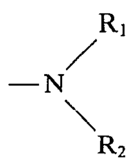

où $R_2$ est de l'hydrogène ou un groupe $C_{1-4}$-alkyle, et $R_1$ est de l'hydrogène, un reste $C_{1-4}$-alkyle, cyclohexyle ou phényle qui peut être substitué par de l'halogène ou un radical carboxy, ou bien où $R_1$ et $R_2$ forment ensemble avec l'atome d'azote qui les relie un reste morpholino, et Y et Z ont les significations données dans la revendication 19, puis qu'on copule sur un copulant de formule (3) dans lequel K a les significations données dans la revendication 19.

21. Procédé selon la revendication 20, caractérisé par le fait qu'on diazote un composé diazotable de formule (2) dans lequel Y est le fluor, le chlore, le brome, le reste méthyle ou méthoxy, et X et Z ont les significations données dans la revendication 20, puis qu'on copule sur un copulant de formule (3) dans lequel K a la signification donnée dans la revendication 20.

22. Procédé selon la revendication 21, caractérisé par le fait qu'on diazote un composé diazotable de formule (2) dans lequel X est un reste phénoxy, qui peut être substitué par du chlore, le radical méthyle ou méthoxy, un reste naphtoxy, un reste méthyle ou éthyle qui peut être substitué par le radical hydroxyle ou phényle, ou bien un groupe de formule:

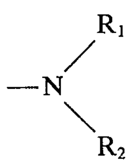

dans laquelle $R_2$ est de l'hydrogène ou un groupe $C_{1-4}$-alkyle, et $R_1$ est de l'hydrogène, un groupe $C_{1-4}$-alkyle, cyclohexyle ou phényle qui peut être substitué par du chlore ou un radical carboxy, ou bien dans laquelle $R_1$ et $R_2$ forment ensemble avec l'atome d'azote qui les relie un reste morpholino, et Y et Z ont les significations données dans la revendication 21, puis qu'on copule sur un copulant de formule (3) dans lequel K est le reste d'une N-mono ou N,N-di-$C_{1-4}$-alkylaniline dont les groupes

$C_{1-4}$-alkyle peuvent être substitués par du chlore, des radicaux cyano, hydroxyle, phényle, sulfophenyle, phénoxy, anilino, acétyloxy ou sulfo, et qui peut être substituée sur le noyau benzénique par des radicaux méthyle, benzoylamino, acétylamino et chloro, ou bien dans lequel K est le reste d'un aminonaphtalène, 1-éthyl-6-hydroxy-4-méthyl-pyridone-(2), 2-méthylindole, 1-phényl-3-méthyl-pyrazol-5-one, méthoxybenzène, 1-phényl-3-méthylaminopyrazole, 2,4,6-triaminopyrimidine ou d'une 3-méthyl- ou 3-méthoxyaniline.

23. Procédé selon la revendication 22, caractérisé par le fait qu'on diazote un composé diazotable de formule (2) dans lequel X est $-NH_2$, un reste diméthylamino ou phénoxy, et Y est le chlore, et Z a les significations données dans la revendication 22, puis qu'on copule sur une 3-méthyle ou 3-acétylamino-N,N-diéthylaniline.

24. Procédé selon la revendication 23, caractérisé par le fait qu'on diazote le 5-chloraniline-2,4-disulfamide et qu'on copule sur la N,N-diétyhl-m-toluidine.

25. Procédé selon la revendication 23, caractérisé par le fait qu'on diazote, l'acide 5-chloraniline-4-diméthylsulfamide-2-sulfonique puis qu'on copule sur le 3-diéthylamino-acétanilide.

26. Procédé selon la revendication 23, caractérisé par le fait qu'on diazote l'acide 5-chloro-4-phénoxysulfonylaniline-2-sulfonique puis qu'on copule sur le 3-diéthylaminoacétanilide.

27. Procéde selon la revendication 18, caractérisé par le fait qu'on fait réagir entre eux un composé diazotable diazoté de formule (2) dans lequel X, Y et Z ont les significations données dans la revendication 18, un copulant de formule (3) dans lequel K est le reste d'un composé de la famille du benzène ou du naphtalène, qui contient un groupe amino ou hydroxyle acylable et un agent d'acylation qui contient un reste réactif avec les fibres, dans un ordre quelconque.

28. Procédé selon la revendication 27, caractérisé par le fait qu'on fait réagir entre eux un composé diazotable diazoté de formule (2) dans lequel X est un reste phénoxy ou naphtoxy qui peut être substitué par de l'halogène, un radical $C_{1-4}$-alcoxy ou $C_{1-4}$-alkyle, un reste $C_{1-4}$-alkyle qui peut être substitué par un radical hydroxyle ou phényle, ou bien un groupe de formule

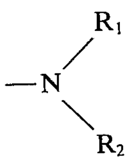

où $R_1$ est de l'hydrogène, un groupe $C_{1-4}$-alkyle, cyclohexyle ou phényle qui peut être substitué par de l'halogène ou un radical carboxy, et $R_2$ est de l'hydrogène ou un groupe $C_{1-4}$-alkyle, ou bien où $R_1$ et $R_2$ forment ensemble avec l'atome d'azote qui les relie un reste morpholino; Y est le fluor, le chlore, le brome, le radical méthyle ou méthoxy, et Z a la signification donnée dans la revendication 27, un copulant de formule (3) dans lequel K a les significations données dans la revendication 27 et un agent d'acylation qui contient un reste réactif avec les fibres, dans un ordre quelconque.

29. Procédé selon la revendication 28, caractérisé par le fait qu'on copule un composé diazotable diazoté de formule (2) dans lequel X, Y et Z ont les significations données dans la revendication 28 sur un copulant de formule (3) dans lequel K est le reste d'une N,N-di-$C_{1-4}$-alkylaniline dont les groupes alkyle peuvent être substitués par le radical cyano, et qui peut être substituée sur le noyau benzénique par le radical méthyle, et dans lequel, au noyau aromatique ou à un atome de carbone du groupe N,N-di-$C_{1-4}$-alkyle, est lié un reste

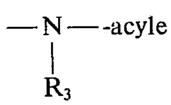

dans lequel $R_3$ est de l'hydrogène ou un groupe $C_{1-4}$-alkyle et le terme acyle désigne un reste acyle réactif avec les fibres, ou bien dans lequel, à un atome de carbone du groupe N,N-di-$C_{1-4}$-alkyle est lié un reste —O-acyle où le terme »acyle« désigne un reste réactif avec les fibres.

30. Procédé selon la revendication 28, caractérisé par le fait qu'on copule un composé diazotable diazoté de formule (2), dans lequel X, Y et Z ont les significations données dans la revendication 28, sur un copulant ayant la formule:

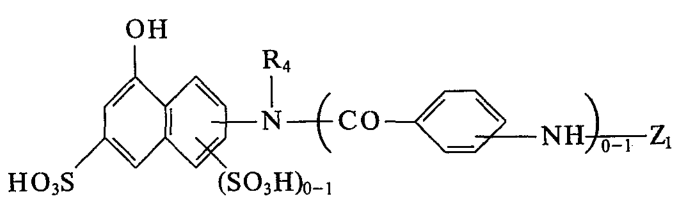

dans laquelle $R_4$ est de l'hydrogène ou un reste $C_{1-4}$-alkyle, et $Z_1$ est un reste réactif avec les fibres.

31. Procédé selon les revendications 29 ou 30, caractérisé par le fait qu'on copule un composé

diazotable diazoté de formule (2), dans lequel X, Y et Z ont les significations données dans les revendications 29 ou 30, sur un copulant de formule (3) dans lequel K a les significations données dans les revendications 29 ou 30, et qui contient comme reste réactif avec les fibres un reste $\alpha,\beta$-dibromopropionyle, 2,6-difluoro-5-chloropyrimidyle ou un reste 2-chloro- ou fluoro-4-$C_{1-4}$-alcoxy- ou $C_{1-2}$-alcoxy-$C_{1-2}$-alcoxy-1,3,5-triazinyle ou un reste 2-chloro-4-phénylamino- ou N-$C_{1-4}$-alkylphénylamino-1,3,5-triazinyle.

32. Procédé selon la revendication 31, caractérisé par le fait qu'on utilise comme composé de départ, un composé diazotable diazoté de formule (2) dans lequel X est un reste phénoxy, $-NH_2$ ou diméthylamino, et Y est le fluor, le chlore ou le radical méthyle, et Z a les significations données dans la revendication 31.

33. Procédé pour la préparation de composés de formule:

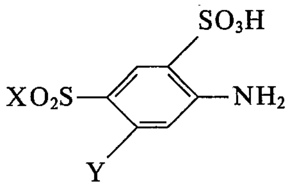

(4)

dans laquelle X est un reste aryloxy ou un reste $C_1-C_{12}$-alkyle éventuellement substitué, un reste cyclo-alkyle ou un reste aryle, ou bien un groupe de formule

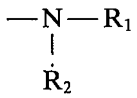

dans laquelle $R_1$ est de l'hydrogène, un reste $C_{1-4}$-alkyle éventuellement substitué, cyclo-alkyle ou aryle, et $R_2$ est de l'hydrogène ou un reste $C_{1-4}$-alkyle éventuellement substitué ou bien dans laquelle $R_1$ et $R_2$ forment ensemble avec l'atome d'azote qui les relie, éventuellement en incluant un autre hétéro-atome, un noyau non-aromatique à 5 ou 6 chaînons, et Y est de l'halogène, un reste $C_{1-4}$-alkyle ou $C_{1-4}$-alcoxy, caractérisé par le fait qu'on fait réagir un composé de formule:

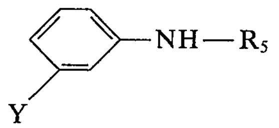

(5)

dans laquelle $R_5$ est un reste acyle, en particulier un reste acétyle, et Y a les significations données sous la formule (4), avec de la chlorhydrine sulfurique, qu'on fait réagir le sulfochlorure obtenu, en vue d'introduire le reste X, éventuellement après réduction du sulfochlorure en acide sulfinique, avec un composé hydroxyarylé, un agent d'alkylation en $C_{1-12}$, un agent de cyclo-alkylation ou un agent d'arylation ou bien un composé de formule:

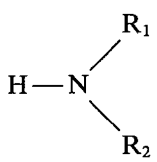

dans laquelle $R_1$ et $R_2$ ont les significations données sous la formule (4), puis qu'on hydrolyse le composé obtenu de formule:

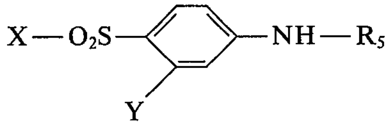

en vue de séparer le reste acyle $R_5$, puis qu'on fait réagir avec la chlorhydrine sulfurique pour avoir un composé de formule (4).

34. Procédé selon la revendication 33, caractérisé par le fait qu' on utilise comme composés de départ de formule (5) ceux dans lesquels Y est le fluor, le chlore, le brome, le radical méthyle ou méthoxy.

35. Les colorants azoïques obtenus selon les revendications 18 à 32.

36. Utilisation des colorants azoïques selon les revendications 1 à 17 ou les colorants azoïques selon les revendications 18 à 32 pour la teinture et l'impression.

37. Procédé de teinture et d'impression utilisant les colorants azoïques selon la revendication 1.
38. Procédé selon la revendication 37 pour teindre les fibres de polyamide.
39. La matière teinte et imprimée, en particulier la metière textile, obtenue selon les revendications 36 à 38.
40. Préparations tinctoriales et pâtes d'impression qui contiennent les colorants azoïques selon les revendications 1 à 17.